(19) Europäisches Patentamt
European Patent Office
Office européen des brevets

(11) EP 4 461 529 A1

(12) **EUROPEAN PATENT APPLICATION**
published in accordance with Art. 153(4) EPC

(43) Date of publication:
**13.11.2024 Bulletin 2024/46**

(21) Application number: **22918610.1**

(22) Date of filing: **06.01.2022**

(51) International Patent Classification (IPC):
***B32B 27/00*** *(2006.01)* ***B32B 27/18*** *(2006.01)*
***B65D 65/40*** *(2006.01)*

(52) Cooperative Patent Classification (CPC):
**B32B 27/00; B32B 27/18; B65D 65/40**

(86) International application number:
**PCT/JP2022/000156**

(87) International publication number:
**WO 2023/132021 (13.07.2023 Gazette 2023/28)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Dai Nippon Printing Co., Ltd.**
**Tokyo 162-8001 (JP)**

(72) Inventors:
- **SAITO, Fumihiko**
  **Tokyo 162-8001 (JP)**
- **KATSUMATA, Shiori**
  **Tokyo 162-8001 (JP)**
- **HAMANO, Mie**
  **Tokyo 162-8001 (JP)**

(74) Representative: **Müller-Boré & Partner Patentanwälte PartG mbB**
**Friedenheimer Brücke 21**
**80639 München (DE)**

(54) **OXYGEN-ABSORBING COATED MULTILAYER BODY**

(57) An object of the present invention is to provide: a multilayer body which generates less odor, while having excellent barrier properties with respect to an oxygen gas, and which suppresses deterioration of the content in a package due to oxygen by absorbing the oxygen in the space within the package, while achieving an excellent balance between oxygen absorption performance and low odor generation; the multilayer body, which is reduced in the load on the environment by containing a plant-derived resin; and a packaging material and a package, each of which is produced using the multilayer body. The present invention provides: an oxygen-absorbing multilayer body comprising a layered configuration which is obtained by sequentially stacking at least an oxygen barrier layer, an oxygen-absorbing adhesive layer and a sealant layer in this order, wherein the oxygen-absorbing adhesive layer is formed from an oxygen-absorbing adhesive composition that contains at least a specific oxygen-absorbing compound and an oxidation promoting catalyst; and an oxygen-absorbing coated multilayer body which comprises at least a base material layer, an oxygen barrier layer and an oxygen-absorbing coat layer, wherein the oxygen-absorbing coat layer is formed from a specific oxygen-absorbing coating agent composition.

[Fig. 1]

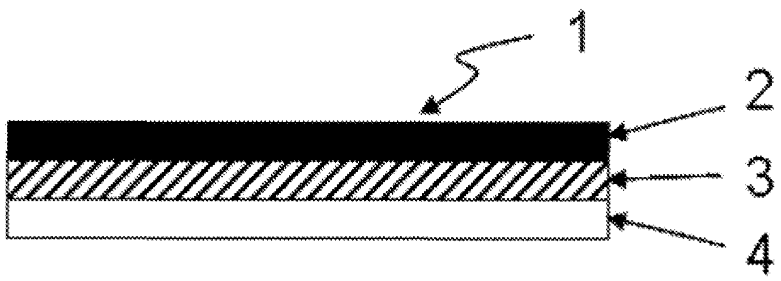


EP 4 461 529 A1

## Description

### Technical Field

The present invention relates to: an oxygen-absorbing multilayer body that generates less odor, suppresses the permeation of oxygen gas, absorbs oxygen in the enclosed space to suppress the deterioration of the content due to oxygen, and has excellent balance between adhesion strength, amount of odor generated, and oxygen absorption performance; and an oxygen-absorbing packaging material and an oxygen-absorbing pouch produced from the oxygen-absorbing multilayer body.

The oxygen-absorbing multilayer body can also contain plant-derived polyolefin to reduce the load on the environment.

In addition, the present invention relates to: an oxygen-absorbing multilayer body for a lid part used for a lid part of a packaging container such as a molded container and a squeezed container, the multilayer body generating less odor, having barrier properties against oxygen gas from the outside, absorbing oxygen in the contents-accommodating space to suppress deterioration of the content due to oxygen, having excellent balance between aroma retention properties, content resistance or the like, and heat sealability, and being suitable for filling packaging; an oxygen-absorbing packaging material for a lid part produced from the oxygen-absorbing multilayer body for a lid part; an oxygen-absorbing lid part; and an oxygen-absorbing packaging container produced with the lid part.

Further, the present invention relates to: an oxygen-absorbing coated multilayer body that generates less odor, has barrier properties against oxygen gas and water vapor from the outside, absorbs oxygen in the contents-accommodating space to suppress the deterioration of the content due to oxygen, has excellent balance between aroma retention properties and blocking resistance, and being suitable for filling packaging; and an oxygen-absorbing coated packaging material and an oxygen-absorbing coated package produced from the oxygen-absorbing coated multilayer body.

### Background Art

Conventional examples of the packaging method for suppressing quality deterioration due to oxygen in the contents of foods, medical products, chemical products, cosmetics, and the like has included using packaging materials with high oxygen barrier properties, replacing gas in the contents-accommodating portion with inert gas such as nitrogen gas, and including an oxygen absorber packed with reduced iron powder or the like.

However, these have problems such as insufficient performance, increased packaging costs, increased amount of waste, performance exhibited only in environments with moisture, and accidental ingestion.

In addition, Patent Literature 1 describes a packaging material with a resin that has oxygen absorption properties and generates less odor, but this resin is polycyclododecene that is insoluble in polar solvents and does not have active hydrogen groups, and is not suitable as an adhesive raw material for packaging materials consisting of multilayer bodies.

Further, Patent Literature 2 describes a resin composition consisting of a resin with methyltetrahydrophthalic acid as a raw material having oxygen absorbing properties, but the composition has the disadvantage of low oxygen absorbing properties and being unstable.

On the other hand, in recent years, in order to reduce the load on the environment, it has been considered to replace some of the resin raw materials from fossil fuel-derived resins with plant-derived resins (Patent Literature 2). The plant-derived resins are chemically structurally the same as conventional fossil fuel-derived resins, and are expected to have similar physical properties.

However, in actual, it is often difficult for resin films containing plant-derived resins to exhibit properties equivalent to those made only of fossil fuel-derived resins.

In particular, the resin films containing plant-derived polyethylene have a high blending ratio of plant-derived polyethylene, and as the degree of biomass increases, blocking resistance, hand cutting properties, and drop impact resistance often decrease when used as a sealant film.

Patent Literature 3 describes oxygen-absorbing thermoplastic resin having a repeating unit consisting of a saturated five-membered ring having a substituent containing a carbon-carbon double bond and a -CH=CH- group connecting the saturated five-membered rings, and the use is difficult because of poor solubility in solvents, and there are disadvantages such as generating strong odor.

As packaging materials with gas barrier properties containing paper base materials, those having a gas barrier layer consisting of a water-soluble polymer and an inorganic layered compound on a paper base material (hereinafter also referred to as "base paper") (Patent Literature 4, Patent Literature 5), those having a barrier layer consisting of a specific vinyl alcohol-based polymer on the coating layer (Patent Literatures 5 and 6), and the like are disclosed, and as packaging materials with water vapor barrier properties containing paper base materials, packaging paper having a moisture-proof layer consisting of synthetic resin latex, wax, and inorganic fine particles (Patent Literature 7) is disclosed.

However, a packaging material that is made by laminating or bonding a resin with gas barrier properties and a resin with water vapor barrier properties to a paper base material (base paper) has limitations on the types of resins that can be laminated, and thus has a problem of being unable to meet various quality requirements.

On the other hand, for a packaging material provided with gas barrier properties and water vapor barrier properties by coating a paper base material (base paper) with a resin that has gas barrier properties and a resin that has water vapor barrier properties, there are few limitations on the types of resins that can be used, thus allowing to meet various quality requirements. However, in a case of a packaging material that has both gas barrier properties and water vapor barrier properties, for example, providing the moisture-proof layer of Patent Literature 7 on the packaging material having gas barrier properties of Patent Literature 4 or Patent Literature 5, favorable water vapor barrier properties could be obtained, but there was such a problem that gas barrier properties could not be obtained. In addition, even when the gas barrier layer of Patent Literature 4 or Patent Literature 5 is provided on the moisture-proof paper having the water vapor barrier layer of Patent Literature 7, it was not possible to achieve both sufficient gas barrier properties and water vapor barrier properties.

## Citation List

### Patent Literature

Patent Literature 1: Japanese Patent No. 5873770
Patent Literature 2: Japanese Patent No. 5671816
Patent Literature 3: Japanese Patent No. 6505699
Patent Literature 4: Japanese Patent Laid-Open No. 2009-184138
Patent Literature 5: Japanese Patent Laid-Open No. 2003-094574
Patent Literature 6: Japanese Patent No. 5331265
Patent Literature 7: Japanese Patent Laid-Open No. 2005-162213


## Summary of Invention

### Technical Problem

An object of the present invention is to provide: a multilayer body that generates less odor, has excellent barrier properties against oxygen gas, absorbs oxygen from the space inside a package to suppress the deterioration of the content due to oxygen, has excellent balance among adhesion strength, low odor, and oxygen absorption performance; and a packaging material and a pouch (package, packaging bag) produced with the multilayer body.

In addition, an object of the present invention is to provide: a multilayer body that contains plant-derived polyolefin to reduce the load on the environment, generates less odor, has excellent barrier properties against oxygen gas, absorbs oxygen from the space inside the package to suppress the deterioration of the content due to oxygen, and has excellent balance among low environmental impact, hand cutting openability, adhesion strength, low odor, and oxygen absorption performance; and a packaging material and a pouch (package, packaging bag) produced with the multilayer body.

Further, an object of the present invention is to provide: a multilayer body for a lid part used for lid parts of a molded container and a packaging container, the multilayer body generating less odor, having excellent barrier properties against oxygen gas, absorbing oxygen in the contents-accommodating space to lower the oxygen concentration and suppress the deterioration of the content due to oxygen, and having excellent balance among heat sealability, low odor, low oxygen concentration, aroma retention properties, content resistance, and filling and packaging properties; a packaging material for a lid part and a lid part produced with the multilayer body for a lid part; and a packaging container produced with the lid part.

Further, an object of the present invention to provide: a multilayer body that generates less odor, has excellent barrier properties against oxygen gas and water vapor, absorbs oxygen in the contents-accommodating portion of the package to lower the oxygen concentration and suppress deterioration of the content due to oxygen and moisture, and has excellent balance among low odor, low oxygen concentration, low humidity, aroma retention properties, filling and packaging properties, and blocking resistance; and a packaging material and a package produced with the multilayer body.

### Solution to Problem

In order to solve the above problem, the present inventors have found that the above problem can be solved by:

an oxygen-absorbing multilayer body including at least an oxygen barrier layer, an oxygen-absorbing adhesive layer formed from a specific oxygen-absorbing adhesive resin composition, and a sealant layer, in this order; a multilayer body including at least a layered configuration in which a base material layer, an oxygen barrier layer, an oxygen-absorbing adhesive layer formed from a specific oxygen-absorbing adhesive composition, and a sealant layer are stacked in this order, in which the base material layer includes a fossil fuel-derived or plant-derived polyester-based resin and the sealant layer is used for a lid part of a packaging container containing fossil fuel-derived or plant-derived polyolefin-based resins; or a multilayer body at least including a base material layer, an oxygen barrier layer, and an oxygen-absorbing coat layer.

That is, the present invention is characterized by the following features.

1. An oxygen-absorbing multilayer body comprising a layered configuration in which at least an oxygen barrier layer, an oxygen-absorbing adhesive layer, and a sealant layer are stacked in this order, wherein

the oxygen-absorbing adhesive layer is a layer formed from an oxygen-absorbing adhesive composition,
the oxygen-absorbing adhesive composition contains at least an oxygen-absorbing compound and an oxidation promoting catalyst,
the oxygen-absorbing compound has one or two or more unsaturated five-membered rings,
any bond between the five carbon atoms constituting the unsaturated five-membered ring is a carbon-carbon double bond,
a monovalent and/or divalent or higher electron donating organic group 1 is bonded to the unsaturated five-membered ring,
when there is one unsaturated five-membered ring, the five-membered ring or the organic group 1 has a functional group having active hydrogen or a group in which active hydrogen of the functional group having active hydrogen is replaced with a monovalent organic group 2, and
when there are two or more unsaturated five-membered rings, the unsaturated five-membered rings are bonded to each other via a divalent or higher organic group 2 that replaces active hydrogen of an active hydrogen group on each of the five-membered rings or the organic group 1.

2. The oxygen-absorbing multilayer body according to 1, wherein a structure of the unsaturated five-membered ring or a structure composed of the unsaturated five-membered ring and the organic group 1 is derived from one or two or more selected from the group consisting of cyclopentadiene, dicyclopentadiene, norbornene, and derivatives thereof.
3. The oxygen-absorbing multilayer body according to 1 or 2, wherein the organic group 2 includes a structural part derived from an isocyanate-based compound or an isocyanate-based compound and a hydroxyl group-containing compound.
4. The oxygen-absorbing multilayer body according to 3, wherein the isocyanate-based compound is one or two or more selected from the group consisting of Xylylene diisocyanate, hexamethylene diisocyanate, isophorone diisocyanate, Toluylene diisocyanate, diphenylmethane diisocyanate, and derivatives thereof.
5. The oxygen-absorbing multilayer body according to 3 or 4, wherein the hydroxyl group-containing compound is one or two or more selected from the group consisting of polyhydric alcohols, polyolefin polyols, polyether polyols, polyester polyols, polycarbonate polyols, poly(meth)acrylic acid ester polyols, phenoxy resins, and urethane chain-extended polyols thereof.
6. The oxygen-absorbing multilayer body according to any of 1 to 5, wherein the organic group 2 has no crosslinkable functional group.
7. The oxygen-absorbing multilayer body according to any of 1 to 5, wherein

the organic group 2 has one or two or more crosslinkable functional groups, and
the crosslinkable functional group is a hydroxyl group and/or an isocyanate group.

8. The oxygen-absorbing multilayer body according to any of 1 to 5, wherein the oxygen-absorbing compound contains one or two or more selected from the group consisting of compounds represented by the following formulas (1) to (4);

[Chemical Formula 1]

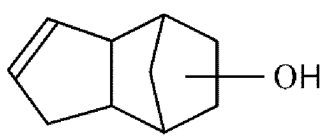

(1)

[Chemical Formula 2]

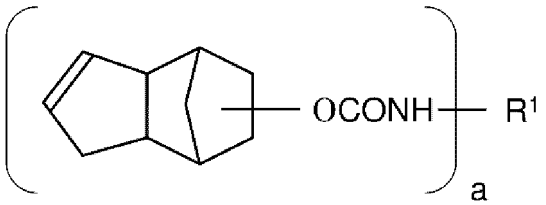

(2)

[Chemical Formula 3]

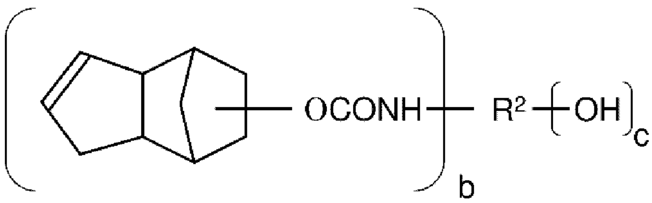

(3)

[Chemical Formula 4]

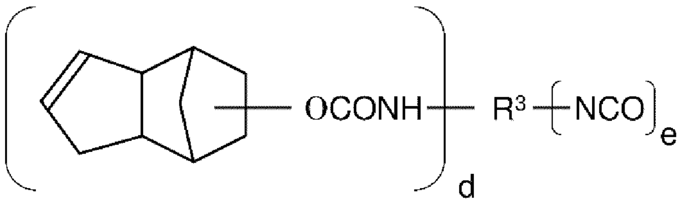

(4)

wherein a to e each represent a number of 1 or more, and each of $R^1$, $R^2$, and $R^3$ represents an organic group having 1 or more carbon atoms, includes at least an alkylene and/or phenylene structure, and optionally further includes a structure derived from one or two or more selected from the group consisting of polyhydric alcohols, polyolefin polyols, polyether polyols, polyester polyols, polycarbonate polyols, poly(meth)acrylic acid ester polyols, phenoxy resins, and urethane chain-extended polyols thereof.

9. The oxygen-absorbing multilayer body according to any of 1 to 5, wherein the oxygen-absorbing compound contains a compound represented by the following formula (5):

[Chemical Formula 5]

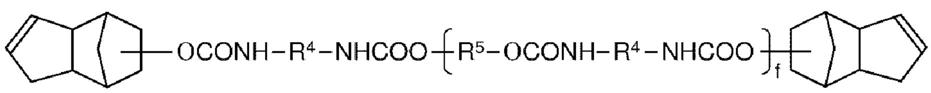

(5)

wherein f represents a number of 0 or more, and each of $R^4$ and $R^5$ represents an organic group having 1 or more carbon atoms, represents an organic group including at least an alkylene and/or phenylene structure, and optionally further includes a structure derived from one or two or more selected from the group consisting of polyhydric alcohols, polyolefin polyols, polyether polyols, polyester polyols, polycarbonate polyols, poly(meth)acrylic acid ester polyols, phenoxy resins, and urethane chain-extended polyols thereof.

10. The oxygen-absorbing multilayer body according to any of 1 to 9, wherein the oxidation promoting catalyst is a peroxide or a compound including a cation composed of a transition metal.

11. The oxygen-absorbing multilayer body according to any of 1 to 10, wherein the compound including a cation composed of a transition metal is a metal soap composed of: a transition metal compound capable of releasing a cation or complex composed of a transition metal; and an anion or ligand composed of a fatty acid.

12. The oxygen-absorbing multilayer body according to any of 1 to 11, wherein

the oxygen-absorbing adhesive composition further contains a modifier, and
the modifier contains an isocyanate-based compound and/or a hydroxyl group-containing compound.

13. The oxygen-absorbing multilayer body according to 12, wherein the isocyanate-based compound is one or two or more selected from the group consisting of Xylylene diisocyanate, hexamethylene diisocyanate, isophorone diisocyanate, Toluylene diisocyanate, diphenylmethane diisocyanate, and derivatives thereof.
14. The oxygen-absorbing multilayer body according to 12 or 13, wherein the hydroxyl group-containing compound includes one or two or more selected from the group consisting of polyester polyols, poly(meth)acrylic acid ester polyols, polyalkylene ether diols, and urethane chain-extended polyols thereof.
15. The oxygen-absorbing multilayer body according to any of 1 to 14, further comprising a base material layer, and comprising a layered configuration in which the base material layer, the oxygen barrier layer, the oxygen-absorbing adhesive layer, and the sealant layer are stacked in this order.
16. The oxygen-absorbing multilayer body according to any of 1 to 15, wherein the sealant layer contains a plant-derived polyolefin-based resin.
17. The oxygen-absorbing multilayer body according to 15 or 16, wherein the base material layer contains a plant-derived polyester-based resin.
18. The oxygen-absorbing multilayer body according to 16 or 17, comprising a biomass ratio of 10% or more and 50% or less.
19. An oxygen-absorbing packaging material produced with the oxygen-absorbing multilayer body according to any of 1 to 18.
20. An oxygen-absorbing pouch produced with the oxygen-absorbing packaging material according to 19.
21. An oxygen-absorbing multilayer body for a lid part, comprising the oxygen-absorbing multilayer body according to 15, the oxygen-absorbing multilayer body being used as a lid part for a packaging container.
22. An oxygen-absorbing packaging material for a lid part of a packaging container, which is produced with the oxygen-absorbing multilayer body for a lid part according to 21.
23. An oxygen-absorbing lid part of a packaging container, which is produced with the oxygen-absorbing packaging material for a lid part of a packaging container according to 22.
24. An oxygen-absorbing packaging container produced with the oxygen-absorbing lid part of a packaging container according to 23,
wherein the oxygen barrier layer is a layer positioned outside the oxygen-absorbing adhesive layer.
25. An oxygen-absorbing coated multilayer body comprising at least a base material layer, an oxygen barrier layer, and an oxygen-absorbing coat layer, wherein

the oxygen barrier layer includes one or two or more selected from the group consisting of a metal foil, a resin film with an inorganic vapor deposited layer, a resin coating film or resin film composed of an oxygen barrier resin, and a barrier paper,
the barrier paper has a layered configuration including at least a base paper and an oxygen barrier resin layer, and is stacked such that the oxygen barrier resin layer is positioned on a side of the oxygen-absorbing coat layer,
the oxygen-absorbing coat layer is a layer formed from an oxygen-absorbing coating agent composition,
the oxygen-absorbing coating agent composition contains at least an oxygen-absorbing compound and an oxidation promoting catalyst,
the oxygen-absorbing compound is the oxygen-absorbing compound according to any of 1 to 9, and
the oxidation promoting catalyst is the oxidation promoting catalyst according to 10 or 11.

26. The oxygen-absorbing coated multilayer body according to 25, wherein

the oxygen-absorbing coating agent composition further contains a modifier, and
the modifier contains an isocyanate-based compound and/or a hydroxyl group-containing compound.

27. The oxygen-absorbing coated multilayer body according to 26, wherein the isocyanate-based compound is one or two or more selected from the group consisting of Xylylene diisocyanate, hexamethylene diisocyanate, isophorone diisocyanate, Toluylene diisocyanate, diphenylmethane diisocyanate, and derivatives thereof.
28. The oxygen-absorbing coated multilayer body according to 26 or 27, wherein the hydroxyl group-containing compound includes one or two or more selected from the group consisting of polyester polyols, poly(meth)acrylic acid ester polyols, polyalkylene ether diols, and urethane chain-extended polyols thereof, vinyl chloride-vinyl acetate copolymers, cellulose acetate-based resins, styrene-maleic acid ester-based copolymers, polyamide-based resins,

and polyimide-based resins.

29. An oxygen-absorbing coated packaging material produced with the oxygen-absorbing coated multilayer body according to any of 25 to 28.

30. An oxygen-absorbing coated package produced with the oxygen-absorbing coated packaging material according to 29,

wherein the oxygen barrier layer is a layer positioned outside the oxygen-absorbing coat layer.

Advantageous Effects of Invention

The present invention can provide: a multilayer body that generates less odor, has excellent barrier properties against oxygen gas, absorbs oxygen in the enclosed space to lower the oxygen concentration and suppress the deterioration of the content due to oxygen, and has excellent balance among adhesion strength, low odor, and oxygen absorption; and a packaging material and a pouch (package, packaging bag) produced with the multilayer body.

In addition, the present invention can provide: an oxygen-absorbing multilayer body that contains plant-derived polyolefin to reduce the load on the environment, generates less odor, has excellent barrier properties against oxygen gas, absorbs oxygen in the enclosed space to lower the oxygen concentration and suppress the deterioration of the content due to oxygen, and has excellent balance among low environmental impact, hand cutting openability, adhesion strength, low odor, and oxygen absorption; and a packaging material and a pouch (package, packaging bag) produced with the multilayer body.

The multilayer body of the present invention can be suitably used particularly as a multilayer body for refill pouch bags for sealing refill shampoos, conditioners, foods, and the like, because of having excellent hand cutting properties and drop impact resistance although a base material layer contains a plant-derived polyester-based resin and/or a sealant layer contains a plant-derived polyolefin-based resin.

Further, from the viewpoint of carbon neutrality, it is possible to suppress an increase in the amount of $CO_2$ in the atmosphere and also contribute to saving on the use of fossil fuel resources.

Carbon neutral means that even if plants are burned, the amount of $CO_2$ emitted is equal to the amount of $CO_2$ absorbed by plants during growth, thus not affecting increase or decrease of the amount of $CO_2$ in the atmosphere. Therefore, as the plant-derived raw materials are more included, the increase of the amount of $CO_2$ can be more suppressed.

Further, the present invention can provide: a multilayer body used for a lid part of a molded container and a packaging container such as a squeezed container for ham or the like, the multilayer body generating less odor, having excellent barrier properties against oxygen gas, absorbing oxygen in the contents-accommodating space to lower the oxygen concentration and suppress the deterioration of the content due to oxygen, and having excellent balance among heat sealability, low odor, low oxygen concentration, aroma retention properties, content resistance, and filling and packaging properties; a packaging material for a lid part and a lid part produced with the multilayer body; and a packaging container produced with the lid part.

Further, the present invention can provide: a multilayer body that generates less odor, has excellent barrier properties against oxygen gas and water vapor, absorbs oxygen in the enclosed space to lower the oxygen concentration and suppress the deterioration of the content due to oxygen and moisture, and has excellent balance among low odor, low oxygen concentration, low humidity, aroma retention properties, filling and packaging properties, and blocking resistance; and a packaging material and a package produced with the multilayer body.

The packaging material produced from the multilayer body of the present invention is particularly suitable for flexible packaging, shortens the packaging step, reduces costs, and reduces the weight of the package and the package does not require the inclusion of an oxygen absorber, which has been conventionally included, and thus accidental ingestion of the oxygen absorber can be eliminated, and trash made from the oxygen absorber can be reduced.

Brief Description of Drawings

[Figure 1] Figure 1 shows a cross-sectional view showing one example of a layer structure of an oxygen-absorbing multilayer body of the present invention.

[Figure 2] Figure 2 shows a cross-sectional view showing one example of another embodiment of the layer structure of the oxygen-absorbing multilayer body of the present invention.

[Figure 3] Figure 3 shows a cross-sectional view showing one example of further another embodiment of the layer structure of the oxygen-absorbing multilayer body of the present invention.

[Figure 4] Figure 4 shows an external view showing a refilling pouch which is one embodiment of an oxygen-absorbing pouch of the present invention.

[Figure 5] Figure 5 shows an external view showing a pouch for retort which is one embodiment of the oxygen-absorbing pouch of the present invention.
[Figure 6] Figure 6 shows an external view showing a pouch for microwave oven, which is one embodiment of the oxygen-absorbing pouch of the present invention.
[Figure 7] Figure 7 shows an external view showing a pouch for liquid packet, which is one embodiment of the oxygen-absorbing pouch of the present invention.
[Figure 8] Figure 8 shows an external view showing a pouch for bag-in-box, which is one embodiment of the oxygen-absorbing pouch of the present invention.
[Figure 9] Figure 9 shows an external view showing a pouch for infusion solution bag, which is one embodiment of the oxygen-absorbing pouch of the present invention.
[Figure 10] Figure 10 shows an external view showing a pouch for stick packaging which is one embodiment of the oxygen-absorbing pouch of the present invention.
[Figure 11] Figure 11 shows an external view showing a pouch with spout, which is one embodiment of the oxygen-absorbing pouch of the present invention.
[Figure 12] Figure 12 shows an external view showing an exterior pouch for electronic parts, which is one embodiment of the oxygen-absorbing pouch of the present invention.
[Figure 13] Figure 13 shows a cross-sectional view showing one example of the layer structure of the oxygen-absorbing multilayer body for a lid part of the present invention.
[Figure 14] Figure 14 shows a cross-sectional view showing one example of another embodiment of the layer structure of the oxygen-absorbing multilayer body for a lid part of the present invention.
[Figure 15] Figure 15 shows a cross-sectional view showing one example of a packaging container which uses an oxygen-absorbing packaging material for a lid part of the present invention.
[Figure 16] Figure 16 shows a cross-sectional view showing one example of the oxygen-absorbing coated multilayer body of the present invention.
[Figure 17] Figure 17 shows a cross-sectional view showing one example of another embodiment of the oxygen-absorbing coated multilayer body of the present invention.
[Figure 18] Figure 18 shows a cross-sectional view showing one example of further another embodiment of the oxygen-absorbing coated multilayer body of the present invention.
[Figure 19] Figure 19 shows a perspective view showing one example of the oxygen-absorbing coated packaging material of the present invention.

**Description of Embodiments**

The present invention will be explained in more detail below. The explanation of the constituent elements described below is an example of the embodiment of the present invention, and the present invention is not limited to these contents unless it goes beyond the gist thereof.
In the present invention, the terms "film" and "sheet" have the same meaning.

<<Oxygen-absorbing multilayer body>>

The oxygen-absorbing multilayer body of the present invention includes a layered configuration in which at least an oxygen barrier layer, a specific oxygen-absorbing adhesive layer, and a sealant layer are stacked in this order.
In a package with the oxygen-absorbing multilayer body, the sealant layer is heat-sealed, and the oxygen barrier layer is positioned outside the oxygen-absorbing adhesive layer.
The oxygen barrier layer being positioned outside the oxygen-absorbing adhesive layer reduces oxygen passing through the packaging material from the outside, and causes the oxygen-absorbing adhesive layer to absorb oxygen in the contents-accommodating space, thereby allowing to increase the efficiency of reducing oxygen concentration.
The oxygen-absorbing multilayer body can further include layers having various functions, if necessary.
For example, a base material layer or a printed layer can be added, and there can be included a reinforcing layer to satisfy various conditions such as deformation resistance, drop impact resistance, pinhole resistance, heat resistance, sealability, quality maintenance, workability, hygiene, and the like.
In addition, there can be added a functional layer to improve oxygen gas barrier properties and provide barrier properties against water vapor or the like and aroma retention properties for the content to be filled and packaged, and not to cause any strange taste or odor to the content.
Further, a general-purpose adhesive layer can be included between each layer or within each layer described above to improve layer-to-layer adhesion.

[Content]

Examples of the above contents include; but are not limited to, foods such as coffee beans, tea leaves, cheese, snacks, rice crackers, fresh and semi-fresh sweets, fruits, nuts, vegetables, fruits, fish and meat products, paste products, dried fish, smoked fish, tsukudani, raw rice, rice, rice cakes, infant foods, jam, mayonnaise, ketchup, edible oil, dressings, sauces, spices, dairy products, and pet foods; beverages such as beer, wine, fruit juice, green tea, and coffee; pharmaceuticals, cosmetics, shampoos and conditioners, detergents, metal parts, and electronic parts.

<<Oxygen-absorbing multilayer body for lid part>>

The oxygen-absorbing multilayer body for a lid part of the present invention (hereinafter also abbreviated as the oxygen-absorbing multilayer body) includes a layered configuration in which at least a base material layer, an oxygen barrier layer, an oxygen-absorbing adhesive layer, and a sealant layer are stacked in this order, and is a multilayer body used for producing a lid part for a molded container and a packaging container such as a squeezed container for ham or the like.

When an oxygen-absorbing packaging material for a lid part (hereinafter also abbreviated as oxygen-absorbing packaging material) produced from the oxygen-absorbing multilayer body for a lid part to produce an oxygen-absorbing lid part (hereinafter also abbreviated as lid part) and to form an oxygen-absorbing packaging container by heat sealing with the bottom part (hereinafter also abbreviated as packaging container), the sealant layer is heat sealed and the oxygen barrier layer is positioned on the outer side of the oxygen absorbing packaging container than the oxygen absorbing adhesive layer.

The oxygen barrier layer being positioned outside the oxygen-absorbing adhesive layer reduces oxygen passing through the lid part from the outside and causes the oxygen-absorbing adhesive layer to absorb oxygen in the contents-accommodating space, thereby allowing to increase the efficiency of reducing oxygen concentration.

The oxygen-absorbing multilayer body for a lid part can further include layers having various functions if necessary.

For example, a base material layer or a printed layer can be added, and there can be included reinforcing layers to satisfy various conditions such as deformation resistance, drop impact resistance, pinhole resistance, heat resistance, sealability, quality maintenance, workability, hygiene, and the like.

In addition, there can be added a functional layer to improve oxygen gas barrier properties and provide barrier properties against water vapor or the like and aroma retention properties for the content to be filled and packaged, and not to cause any strange taste or odor to the content.

In addition, a general-purpose adhesive layer can be included between each layer or within each layer described above to improve layer-to-layer adhesion.

[Contents]

Examples of the above contents include ham, sausage, bacon, cheese, jelly, yogurt, pudding, cupcakes, snack foods, pet foods, beverages, pharmaceuticals, cosmetics, and electronic parts.

<<Oxygen-absorbing coated multilayer body>>

The oxygen-absorbing coated multilayer body of the present invention is a multilayer body used for a packaging material, and includes a layered configuration in which at least a base material layer, an oxygen barrier layer, and an oxygen-absorbing coat layer are stacked in this order.

When an oxygen-absorbing coated packaging material (hereinafter, may be abbreviated as oxygen-absorbing coated packaging material or packaging material) produced from an oxygen-absorbing coated multilayer body (hereinafter, may be abbreviated as coated multilayer body or multilayer body) forms an oxygen-absorbing coated package (hereinafter may be abbreviated as package), the oxygen barrier layer is positioned on the outer side of the package than the oxygen-absorbing coat layer.

The oxygen barrier layer being positioned outside the oxygen-absorbing coat layer reduces oxygen passing through the oxygen-absorbing coated package from the outside and causes the oxygen-absorbing coat layer to absorb oxygen in the contents-accommodating space, thereby allowing to increase the efficiency of reducing oxygen concentration.

The oxygen-absorbing coated multilayer body can include layers having various other functions if necessary.

For example, a sealant layer or a printed layer can be added, and there can be included a reinforcing layer to satisfy various conditions such as deformation resistance, drop impact resistance, pinhole resistance, heat resistance, sealability, quality maintenance, workability, hygiene and the like.

In addition, there can be added a functional layer to improve oxygen gas barrier properties and provide barrier properties against water vapor or the like and aroma retention properties for the content to be filled and packaged, and not to cause any strange taste or odor to the content.
In addition, an adhesive resin layer can be included between each layer or within each layer described above to improve layer-to-layer adhesion.

[Content]

Examples of the above contents can include meat, fresh fish, prepared foods, Japanese sweets, Western sweets, cheese, and electronic parts.

<Each layer constituting oxygen-absorbing multilayer body, oxygen-absorbing multilayer body for lid part, and oxygen-absorbing coated multilayer body>

<<Oxygen barrier layer>>

In the case of the oxygen-absorbing multilayer body, the oxygen barrier layer is a layer that suppresses the permeation of oxygen from the outside of the package to the contents-accommodating portion inside the package in the package produced with the oxygen-absorbing multilayer body.
In the case of the oxygen-absorbing multilayer body for a lid part, the oxygen barrier layer is a layer that suppresses the permeation of oxygen from the outside of the oxygen-absorbing packaging container to the contents-accommodating portion inside the oxygen-absorbing packaging container in the oxygen-absorbing packaging container produced from the oxygen-absorbing lid part and a bottom part.
In the case of the oxygen-absorbing coated multilayer body, the oxygen barrier layer is a layer that suppresses the permeation of oxygen from the outside of the package to the contents-accommodating portion inside the package, when the package is produced with a packaging material consisting of the oxygen-absorbing coated multilayer body.
In the case of the oxygen-absorbing multilayer body, for an oxygen-absorbing pouch produced with an oxygen-absorbing multilayer body, the oxygen barrier layer being positioned outside the oxygen-absorbing adhesive layer causes the oxygen-absorbing adhesive layer to absorb oxygen from the contents-accommodating portion inside the package, suppressing the intrusion of oxygen from outside the package, thereby allowing to enhance the effect of lowering oxygen concentration.
In the case of the oxygen-absorbing multilayer body for a lid part, for an oxygen-absorbing packaging container, positioning an oxygen barrier layer outside an oxygen-absorbing adhesive layer suppresses the permeation of oxygen from the outside of the oxygen-absorbing packaging container and causes the oxygen-absorbing adhesive layer to absorb oxygen in the contents-accommodating portion of the oxygen-absorbing packaging container, thereby allowing to enhance the effect of lowering oxygen concentration.
In the case of the oxygen-absorbing coated multilayer body, the oxygen barrier layer being positioned outside the oxygen-absorbing coat layer in producing the package suppresses the penetration of oxygen from outside the package and causes the oxygen-absorbing coat layer to absorb oxygen in the contents-accommodating space of the package, thereby allowing to enhance the effect of lowering oxygen concentration.
Various oxygen barrier materials can be used for the oxygen barrier layer. In addition, the oxygen barrier material may have gas barrier properties not only against oxygen, but also against water vapor, light shielding properties against sunlight or the like, and aroma retention properties against contents or the like. In addition, barrier materials having gas barrier properties against water vapor or the like, light shielding properties against sunlight or the like, and aroma retention properties against contents or the like may be used in combination.
For the oxygen-absorbing multilayer body or the oxygen-absorbing multilayer body for a lid part, specific examples of the above oxygen barrier materials that can be used include one or two or more types selected from the group consisting of metal foil, a resin film with an inorganic vapor deposited layer, and a resin coating film or resin film consisting of an oxygen barrier resin. Examples of the inorganic compounds of the inorganic vapor deposited layer include metals, metal oxides, metal nitrides, and metal carbides.
For the oxygen-absorbing coated multilayer body, specific examples of the above oxygen barrier material that can be used include one or two or more types selected from the group consisting of metal foil, resin film with inorganic vapor deposited layer, resin coat film or resin film consisting of oxygen barrier resin, and barrier paper. Examples of the inorganic compound of the inorganic vapor deposited layer include metals, metal oxides, metal nitrides, and metal carbides.
Among them, particularly, any of a resin film with a metal vapor deposited layer, a resin film with a metal oxide vapor deposited layer, or a resin coating film or a resin film consisting of barrier resin is preferable, because of excellent barrier properties against oxygen gas and water vapor, light shielding properties, and aroma retention properties, and the advantage of being environmentally friendly when disposing the containers.

[Metal foil]

A specific example of metal foil includes aluminum foil.
For the oxygen-absorbing multilayer bodies, the thickness of the aluminum foil is preferably 5 μm to 30 μm.
For the oxygen-absorbing multilayer body for a lid part, the thickness of the aluminum foil is preferably 5 μm to 25 μm.
For the oxygen-absorbing coated multilayer body, the thickness of the aluminum foil is preferably 4 μm to 40 μm, more preferably 4 μm or more and 12 μm or less, and still more preferably 5 μm or more and 9 μm or less.

[Resin film with inorganic vapor deposited layer]

Preferred examples of the inorganic compounds constituting the inorganic vapor deposited layer include metals, metal oxides, metal nitrides, and metal carbides.
Specific examples of the metal elements constituting the above inorganic compounds include aluminum (Al), silicon (Si), magnesium (Mg), calcium (Ca), potassium (K), tin (Sn), sodium (Na), boron (B), titanium (Ti), lead (Pb), zirconium (Zr), yttrium (Y), zinc (Zn), vanadium (V), barium (Ba), and chromium (Cr).
As specific examples of inorganic compounds, metals consisting of the above metal elements, metal oxides, metal nitrides, metal carbides, and the like are preferable, and in addition to these, composite inorganic compounds such as indium tin oxide (ITO) and SiOxCy films produced by chemical vapor deposition method or the like are exemplified.
More specific examples of inorganic compounds include silicon oxide (silica), aluminum oxide (alumina), silicon nitride, and silicon carbide. Among these, silicon oxide and aluminum oxide are preferable.
The average composition of inorganic compounds is represented as MOx, MOxCy, such as SiOx, AlOx, and SiOxCy (in the formula, M represents a metal element, and the values of x and y have different ranges depending on the metal element). For metal oxides, the value range of X can be set to 0 to 2 for silicon, 0 to 1.5 for aluminum, 0 to 1 for magnesium, 0 to 1 for calcium, 0 to 0.5 for potassium, 0 to 2 for tin, 0 to 0.5 for sodium, 0 to 1, 5 for boron, 0 to 2 for titanium, 0 to 1 for lead, 0 to 2 for zirconium, and 0 to 1.5 for yttrium.
In the above MOx, when $x = 0$, it is metal and not transparent, and the upper limit of the range of x is the value when completely oxidized.
In the present invention, silicon oxide and aluminum oxide are preferably used, and silicon oxide can be used with x in the value range of 1.0 to 2.0, and aluminum oxide can be used with x in the value range of 0.5 to 1.5.
The oxygen barrier layer may be formed of one type of these barrier materials, may be used in combination of two or more types, or may be used as a mixture of two or more types. In addition, the oxygen barrier layer may be composed of one layer, or may be composed of multiple layers having the same or different compositions, and the multiple layers may not be stacked adjacently.
As the resin film supporting the inorganic vapor deposited layer, an inorganic vapor deposited layer is provided thereon, and thus there can be used a resin film having excellent mechanical, physical, chemical, and other properties, particularly strength and toughness, and heat resistance.
In addition, the resin film used in the vapor-deposited resin film may be a resin film constituting a base material layer.
In the present invention, specific examples of the resin films supporting the inorganic vapor deposited layer that can be used include: polyester-based resin films such as polyethylene terephthalate (PET) and polybutylene terephthalate (PBT); polyamide-based resin films such as various nylons; polyolefin films such as polyethylene-based resins, polypropylene-based resins, cyclic polyolefin resins, polystyrene-based resins, acrylonitrile-styrene copolymers (AS resins), acrylonitrile-butadiene-styrene copolymers (ABS resins), and polybutene resin films; polyvinyl chloride-based resins, polycarbonate-based resins, polyimide-based resins, polyamide-imide-based resins, polyarylphthalate resins, silicone-based resins, polysulfone-based resins, polyphenylene sulfide-based resins, polyethersulfone-based resins, polyurethane-based resins, cellulose-based resins, poly(meth)acrylic-based resins, polyvinylidene chloride films, acetal-based resin films, and fluorine-based resins.
In the case of an oxygen-absorbing multilayer body, it is particularly preferable to use a film of polypropylene-based resin, polyester-based resin, or polyamide-based resin.
In the case of an oxygen-absorbing multilayer body or an oxygen-absorbing coated multilayer body for a lid part, it is preferable that the resin film is consisting of biaxially oriented polyethylene terephthalate, polyacrylonitrile, ethylene-vinyl alcohol copolymer, non-oriented polypropylene (CPP), low-density polyethylene, linear low-density polyethylene, or the like, in which adhesion is possible by heat sealing or an adhesive.
Examples of the method for forming an inorganic vapor deposited layer with the above described inorganic compounds as raw materials include physical vapor deposition methods (PVD methods) such as vacuum deposition, sputtering, ion plating, and cluster ion beam, or chemical vapor deposition methods (CVD methods) such as plasma chemical vapor deposition, thermal chemical vapor deposition, and photochemical vapor deposition, whereby the

inorganic vapor deposited layer can be formed on a resin film.

More specifically, in the above PVD method, for example, a winding-type deposition machine is used, the resin film coming off the unwinding roll is placed in the deposition chamber in a vacuum chamber, the deposition source heated in a crucible is evaporated therein, further if necessary, an inorganic vapor deposited layer is formed on the resin film on a cooled coating drum through a mask while oxygen or the like is blown out from the oxygen outlet, and then the resin film with the inorganic vapor deposited layer formed is wound up on the winding roll, thereby allowing to produce the resin film with the inorganic vapor deposited layer according to the present invention.

In contrast, in the above described CVD method, a mixed gas consisting of, for example, an organic silicon compound as a monomer gas, oxygen gas, an inert gas, and the like supplied from a device for volatilizing and supplying a vapor deposition raw material in the vapor deposition chamber is introduced onto the peripheral surface of the cooling electrode drum, and a vapor deposited layer of silicon oxide is formed by plasma on the surface of a resin film unwound from a winding roll disposed in the vapor deposition chamber, thereby allowing to produce a resin film with the vapor deposited layer formed.

In the above, in order to obtain sufficient oxygen barrier properties, the thickness of the inorganic vapor deposited layer is preferably 30 Å to 3000 Å, more preferably 40 Å to 2500 Å, and still more preferably 50 Å to 2000 Å.

More specifically, in the above PVD method, the thickness of the inorganic vapor deposited layer consisting of aluminum oxide is preferably 30 Å to 1000 Å, and more preferably about 50 Å to 500 Å.

In addition, in the above CVD method, the thickness of the inorganic vapor deposited layer consisting of silicon oxide is preferably 30 Å to 3000 Å, and more preferably 100 Å to 300 Å.

In general, in the case of inorganic vapor deposited layers consisting of metal oxides or inorganic materials, if the thickness of the inorganic vapor deposited layer exceeds the above range, cracks or the like are likely to occur in the inorganic vapor deposited layer, which causes not only the risk of reducing the barrier properties but also the problem of increasing the material costs, which is not preferable. In addition, for less than the above range, it is not preferable because it is likely to become difficult to exhibit oxygen barrier properties.

An oxygen barrier resin coating film or an oxygen barrier resin film consisting of an oxygen barrier resin can also be used as an oxygen barrier material, and can also exhibit gas barrier properties against water vapor or the like, and aroma retention properties or the like.

Examples of the oxygen barrier resins that can be used include polyvinylidene chloride-based resins (PVDC), polyester-based resins, polyamide-based resins (particularly aromatic polyamides such as nylon MXD6), ethylene-vinyl alcohol copolymers (EVOH) with an ethylene content of 25 mol% to 50 mol% obtained by completely saponifying ethylene-vinyl acetate copolymers (vinyl acetate has approximately 79 wt% to 92 wt%), polyvinyl alcohol, polyacrylonitrile, and other resin films or coating films with excellent gas barrier properties.

The thickness of the oxygen barrier resin coating film or the oxygen barrier resin film is optional, but is preferably 0.5 μm to 300 μm, and more preferably 1 μm to 100 μm.

In addition, the resin film with an inorganic vapor deposited layer has a water vapor permeability measured in accordance with JIS K7129 under an environment of a temperature of 40°C and a humidity of 100% RH of preferably 3.0 $g/m^2 \cdot day$ or less, more preferably 2.0 $g/m^2 \cdot day$ or less, and still more preferably 1.5 $g/m^2 \cdot day$ or less. If the water vapor permeability satisfies the above numerical range, the intrusion of water vapor from the outside of the package into the contents-accommodating portion inside the package can be sufficiently suppressed.

In addition, the resin film with an inorganic vapor deposited layer has an oxygen permeability measured in accordance with JIS K7126 under an environment of a temperature of 23°C and a humidity of 90% RH of preferably 3.0 $cc/m^2$ atm day or less, more preferably 1.0 $cc/m^2$ atm day or less, and still more preferably 0.5 $cc/m^2$ atm day or less. If the oxygen permeability satisfies the above numerical range, the intrusion of oxygen from the outside of the package into the contents-accommodating portion inside the package can be sufficiently suppressed.

When forming the inorganic vapor deposited layer, the surface of the resin film to be vapor deposited is cleaned by pretreatment such as SiOx plasma, and polar groups, free radicals, and the like are generated on the surface, thereby allowing to increase the adhesion between the inorganic vapor deposited layer and the resin film.

Further, when two or more inorganic vapor deposited layers are continuously stacked with a plasma chemical vapor deposition apparatus consisting of at least two or more film-forming chambers, each layer can be deposited so as to have high gas barrier properties, resulting in a gas barrier property that is even higher than that of a single layer, and further, continuously depositing without exposing to the atmosphere can prevent foreign matter, dust, or the like, which causes cracks, from being mixed between the inorganic vapor deposited layers, and the gas barrier property is improved.

Further, if the compositions of the respective vapor deposited layers are different, the inorganic vapor deposited layers are different discontinuous layers, and thus the permeation of oxygen gas, water vapor, or the like can be more efficiently suppressed.

When the oxygen barrier layer is formed from a resin film with an inorganic vapor deposited layer, stacking is possible via a general-purpose adhesive layer. For example, the surface of the inorganic vapor deposited layer is placed opposite the base material layer and adhered thereto, thereby allowing stacking.

When stacking a resin film with an inorganic vapor deposited layer, if necessary, in order to strengthen the adhesion strength with other layers, the surface of the resin film with an inorganic vapor deposited layer is subjected previously to a physical surface treatment such as corona discharge treatment, ozone treatment, plasma treatment, glow discharge treatment, and sandblasting treatment, or a chemical surface treatment such as oxidation treatment using chemicals to allow a surface treatment layer to be formed.

<<Oxygen-absorbing adhesive layer>>

The oxygen-absorbing adhesive layer is a layer formed with an oxygen-absorbing adhesive composition.

<<Oxygen-absorbing adhesive compositions

The oxygen-absorbing adhesive composition of the present invention is an oxygen-absorbing adhesive composition that contains at least an oxygen-absorbing compound and an oxidation promoting catalyst.

The oxygen-absorbing adhesive composition can further contain a modifier, a diluting solvent, various additives, and the like, if necessary.

The oxygen-absorbing adhesive composition may be prepared by adding an oxygen-absorbing compound to an existing adhesive composition, or the oxygen-absorbing adhesive composition may be prepared with the oxygen-absorbing compound as a resin component.

Herein, the existing oxygen-absorbing adhesive composition may be a one-component oxygen-absorbing adhesive composition or a two-component oxygen-absorbing adhesive composition.

The oxygen-absorbing adhesive composition can contain one or two or more oxygen-absorbing compounds.

The oxygen-absorbing adhesive composition and/or the above existing adhesive composition may be curable or non-curable. If curable, any of heat-curable, photocurable, or electron beam-curable may be possible.

The oxygen-absorbing compound may or may not react with components contained in existing adhesive compositions. In addition, the oxygen-absorbing compounds may react with each other.

Depending on the presence or absence of the above reaction and the type of reaction, one or two or more of oxygen-absorbing compounds can be selected and used from among those having no functional group, those having a (co)polymerizable functional group, and those having a functional group capable of reacting as a main agent or a curing agent.

Specifically, for example, an oxygen-absorbing compound without a functional group and/or an oxygen-absorbing compound with a functional group can be added to a two-component urethane-based adhesive composition containing an isocyanate-based compound and a hydroxyl group-containing compound. In this case, the functional group is preferably an isocyanate group and/or a hydroxyl group.

For example, an oxygen-absorbing adhesive composition can be prepared, as the combination of the main agent and curing agent of the oxygen-absorbing adhesive composition, with a combination of an isocyanate-based compound and an oxygen-absorbing compound having a hydroxyl group, a combination of a hydroxyl group-containing compound and an oxygen-absorbing compound having an isocyanate group, or a combination of an oxygen-absorbing compound having a hydroxyl group and an oxygen-absorbing compound having an isocyanate group.

The oxygen-absorbing adhesive composition is preferably a urethane-based oxygen-absorbing adhesive composition.

There are no particular limitations on the solid content of the oxygen-absorbing adhesive composition, but 20% by mass or more and 100% by mass or less are preferable.

The content of the oxygen-absorbing compound in the solids, excluding the oxidation promoting catalyst, in the oxygen-absorbing adhesive composition is preferably 40% by mass or more and 100% by mass or less. If less than the above range, there is a risk of insufficient oxygen absorption. The case of 100% by mass means that the oxygen-absorbing compound can be used as a resin component of the adhesive composition, and is a case where there is sufficient adhesion singly, there is a curable functional group singly, or an oxygen-absorbing compound having a functional group as a main agent and an oxygen-absorbing compound having a functional group as a curing agent are mixed and used.

The content of the oxidation promoting catalyst in the oxygen-absorbing adhesive composition is preferably 10 ppm or more and 6000 ppm or less based on the oxygen-absorbing compound.

If the content is less than the above range, oxygen absorption may become insufficient, and if the content is more than the above range, the oxygen absorption tends to become unstable, and the oxygen absorption is lost before the package is produced, which causes a risk of impairing the effect of suppressing deterioration due to oxygen after the package content package is produced.

[Resin coating film or resin film consisting of oxygen barrier resin]

An oxygen barrier resin coating film or an oxygen barrier resin film consisting of an oxygen barrier resin can also be used as an oxygen barrier material, and at the same time can exhibit gas barrier properties against water vapor or the like, aroma retention properties, and the like.

Examples of the oxygen barrier resin that can be used include resin with excellent gas barrier properties such as polyvinyl chloride-based resin, polyvinylidene chloride-based resin (PVDC), polyester-based resin (especially modified PET), polyamide-based resin (particularly aromatic polyamide such as nylon MXD6), ethylene-vinyl alcohol copolymer (EVOH) with an ethylene content of 25 mol% to 50 mol%, which is obtained by completely saponifying an ethylene-vinyl acetate copolymer (vinyl acetate accounts for approximately 79 wt% to 92 wt%), polyvinyl alcohol-based resin, poly(meth) acrylic-based resin, poly(meth)acrylonitrile-based resin, polystyrene-based resin, and polycarbonate-based resin.

For the resin film used for the resin film consisting of oxygen barrier resin, a resin film constituting the base material layer can be used.

The thickness of the resin coating film consisting of oxygen barrier resin is optional, but preferably 0.5 μm to 300 μm, more preferably 1 μm to 100 μm.

The thickness of the resin film consisting of oxygen barrier resin is optional, but is preferably 0.5 μm to 300 μm, more preferably 1 μm to 100 μm.

There is no particular limitation on the method for forming the resin coating film consisting of oxygen barrier resin, and for example, the resin coating film can be formed by coating once or multiple times by conventionally known means such as a roll coating method, a spray coating method, a spin coating method, a dipping method, a brush method, a bar coating method, and an applicator method.

There is no particular limitation on the method of forming a resin film consisting of an oxygen barrier resin, and for example, a resin film formed by a T-die (co)extrusion method or the like may be used.

A resin coating film or a resin film consisting of oxygen barrier resin can be stacked via an adhesive resin layer, and if necessary, in order to strengthen the adhesion strength with other layers, the surface of the resin coating film or resin film consisting of oxygen barrier resin can also be subjected previously to physical surface treatments such as corona discharge treatment, ozone treatment, plasma treatment, glow discharge treatment, and sandblasting treatment, and chemical surface treatment such as oxidation treatment with chemicals to form a surface treatment layer.

[Barrier paper]

Barrier paper is a paper material having gas barrier properties, and has a layered configuration including at least base paper and an oxygen barrier resin layer, in which the oxygen barrier resin layer is stacked so as to be positioned on the side of the oxygen-absorbing coat layer.

The barrier paper preferably further has a protective resin layer on at least one surface, and more preferably has a protective resin layer on the surface of the side of the oxygen barrier resin layer.

In the barrier paper, the oxygen barrier resin layer may further serve as a water vapor barrier layer, or the water vapor barrier layer may be further included separately between the base paper and the oxygen barrier resin layer.

Each layer is included in the barrier paper in the above order, whereby the water vapor barrier resin layer suppresses moisture contained in the base paper from penetrating into the oxygen barrier resin layer, deterioration of the oxygen barrier resin layer due to the moisture is suppressed, and deterioration of the oxygen barrier properties of the barrier paper is suppressed.

The protective resin layer is a layer that prevents the water vapor barrier resin layer and gas barrier layer from deteriorating due to moisture in the air, and further, the addition of the protective resin layer can further improve the oxygen barrier properties and water vapor barrier properties of the barrier paper, or can impart oil resistance, solvent resistance, heat resistance, abrasion resistance, impact resistance, light resistance, and the like.

The paper base material constituting the base material layer can be used as the base paper.

The water vapor permeability of the barrier paper is preferably 10 g/$m^2$·day or less at 40°C and 90 ± 2% relative humidity, and the oxygen permeability is preferably 3 cc/ $m^2$·day·atm or less at 23°C and 0% relative humidity, and preferably 3 cc/ $m^2$·day·atm or less at 23°C and 85% relative humidity.

(Oxygen barrier resin layer)

The oxygen barrier resin layer is a layer that suppresses oxygen permeation, is formed from an oxygen barrier resin composition, and is preferably a coating layer.

The oxygen barrier resin composition contains at least a water-soluble polymer, and can further contain a pigment, a crosslinking agent, and a surfactant, if necessary, in order to improve oxygen barrier properties.

For the content of the pigment in the oxygen barrier resin layer, the dry mass ratio between the pigment and the

water-soluble polymer is preferably 1/100 to 1000/100. If the dry mass ratio is outside the above range, the effect of improving oxygen barrier properties may be reduced.

The crosslinking agent causes the water-soluble polymer to be crosslinked, thereby allowing the oxygen barrier resin layer to be denser to improve the oxygen barrier properties.

In addition, the oxygen barrier resin composition can further contain, if necessary, various commonly used auxiliary agents such as dispersants, thickeners, water retention agents, antifoaming agents, waterproofing agents, dyes, and fluorescent dyes.

The coating method for forming an oxygen barrier resin layer with an oxygen barrier resin composition is not particularly limited, and coating can be performed with known coating devices and coating systems. Examples of the coating device include a blade coater, a bar coater, a roll coater, an air knife coater, a reverse roll coater, a curtain coater, a spray coater, a size press coater, and a gate roll coater. In addition, examples of coating systems include water-based coating using a solvent such as water, and solvent-based coating using a solvent such as an organic solvent.

As a method for drying the oxygen barrier resin layer, a known method can be used, and examples thereof include methods with a steam heater, a gas heater, an infrared heater, an electric heater, a hot air heater, a microwave, a cylinder dryer, and the like.

The coating amount of the oxygen barrier resin layer is preferably 0.2 g/m$^2$ or more and 20 g/m$^2$ or less in terms of dry mass. If the coating amount is smaller than the above range, the thickness of the oxygen barrier resin layer tends to be uneven, causing a risk of providing insufficient oxygen barrier properties, and if larger than the above range, the drying load during coating becomes large.

The oxygen barrier resin layer may be composed of a single layer, or may be composed of multilayers of two or more layers having the same or different compositions. When the oxygen barrier resin layer is composed of multilayers of two or more layers, the total coating amount of all layers is preferably set to the above range.

The surface tension of the oxygen barrier resin layer is preferably 10 mN/m or more and 60 mN/m or less, more preferably 15 mN/m or more and 50 mN/m or less. The surface tension of the oxygen barrier resin layer is within the above range, thereby improving the adhesion with the water vapor barrier resin layer.

In addition, it is preferable that the difference between the wetting tension of the surface of the water vapor barrier resin layer and the surface tension of the oxygen barrier resin layer is $\pm$ 20 mN/m. The difference is within the above range, thereby improving the adhesion between the oxygen barrier resin layer and the water vapor barrier resin layer.

When the oxygen barrier resin layer also serves as a water vapor barrier layer, the oxygen barrier resin composition further contains the same components as the water vapor barrier composition described below, thereby allowing to exhibit water vapor barrier properties.

(Water vapor barrier layer)

The water vapor barrier layer is a layer that suppresses the permeation of water vapor, is formed from a water vapor barrier composition, and is preferably a coating layer.

The water vapor barrier composition contains at least a water vapor barrier resin and/or a water vapor barrier inorganic material (hereinafter also referred to as water vapor barrier component as a general term for both types), and, if necessary, can further contain a pigment and a crosslinking agent in order to improve water vapor barrier properties. In addition, a water-soluble polymer may be contained as long as there is no problem of water vapor barrier properties.

The pigment content in the water vapor barrier layer is preferably 30% by mass or more and 95% by mass or less, more preferably 40% by mass or more and 90% by mass or less, based on the dry mass of the pigment.

The pigment can improve the water vapor barrier properties and the adhesion between the water vapor barrier layer and the oxygen barrier resin layer, and the crosslinking agent crosslinks the water vapor barrier resin or water-soluble polymer to dense the water vapor barrier layer, thereby allowing to improve the water vapor barrier properties.

In addition, in the water vapor barrier composition, if necessary, various commonly used auxiliary agents such as water repellent agents, dispersants, thickeners, water retention agents, antifoaming agents, waterproofing agents, dyes, and fluorescent dyes can be used.

The coating method for forming a water vapor barrier layer with a water vapor barrier composition is not particularly limited, and coating can be performed with known coating devices and coating systems. Examples of the coating devices include a blade coater, a bar coater, a roll coater, an air knife coater, a reverse roll coater, a curtain coater, a spray coater, a size press coater, and a gate roll coater. In addition, examples of the coating system include water-based coating using a solvent such as water, and solvent-based coating using a solvent such as an organic solvent.

A known method can be used to dry the water vapor barrier layer, and examples thereof include methods with a steam heater, a gas heater, an infrared heater, an electric heater, a hot air heater, a microwave, a cylinder dryer, and the like.

The coating amount of the water vapor barrier composition is preferably 3 g/m$^2$ or more and 50 g/m$^2$ or less, more preferably 5 g/m$^2$ or more and 40 g/m$^2$ or less, and still more preferably 7 g/m$^2$ or more and 30 g/m$^2$ or less, based on dry

mass. If the coating amount is smaller than the above range, the thickness of the water vapor barrier layer tends to become uneven, causing a risk that sufficient water vapor barrier properties cannot be obtained, and if the coating amount is larger than the above range, the drying load during coating becomes large.

In the present invention, the water vapor barrier layer may be composed of a single layer, or may be composed of multilayers of two or more layers having the same or different compositions. When the water vapor barrier layer is composed of multilayers of two or more layers, the total coating amount of all layers is preferably set to the above range.

The wetting tension on the surface of the water vapor barrier layer is preferably 10 mN/m or more and 60 mN/m or less, more preferably 15 mN/m or more and 50 mN/m or less. When the wetting tension of the surface of the water vapor barrier layer is within the above range, the water vapor barrier properties are improved and the adhesion with the oxygen barrier resin layer is improved.

(Protective resin layer)

The protective resin layer is a layer containing resin, and may be composed of one layer or two or more layers having the same or different compositions. In addition, a layer consisting of metal foil or a layer consisting of inorganic vapor deposited film may be further included.

Examples of the resin contained in the protective resin layer include polyester, polyvinyl alcohol, polypropylene, polyethylene, polystyrene, polyethylene terephthalate, polybutylene terephthalate, polymethylpentene, polyvinyl chloride, acrylonitrile-butadiene-styrene, acrylonitrile-styrene, poly(meth)acrylic, polyvinylidene chloride, polyamide (nylon), polyacetal, polycarbonate, polylactic acid (PLA), esterified starch, cellulose acetate, polybutylene succinate (PBS), and polybutylene succinate adipate (PBSA).

The protective resin layer may be an extrusion layer formed by melt (co)extrusion, or may be a bonding layer formed by adhering resin films by a dry lamination method, a sand lamination method, and the like.

As a resin film, among the above resins, preferable are those containing a resin such as polyvinyl alcohol, ethylene-vinyl alcohol copolymer, polyvinylidene chloride, or polyacrylonitrile as a main component, or a resin film obtained by coating these resins on the resin film consisting of the above described resin.

Alternatively, there can be used a resin film with metal foil, obtained by bonding metal foil consisting of various metals such as aluminum to a resin film consisting of the above resin, or a resin film with an inorganic vapor deposited layer, obtained by vapor-depositing various metals such as aluminum and/or inorganic oxides such as silicon oxide and aluminum oxide on a resin film consisting of the above resin.

(Water vapor barrier resin)

The water vapor barrier resin is preferably a (co)polymer synthesized from one or two or more selected from the group consisting of styrene, alkenes, (meth)acrylic-based monomers, vinyl acetate-based monomers, and maleic acid-based monomers.

Specific examples of the water vapor barrier resin include styrene-butadiene-copolymer-based resin, styrene-acrylic-copolymer-based resin system, ethylene-vinyl acetate-copolymer-based resin, various paraffin (WAX)-based compounds, butadiene-methyl methacrylate-copolymer-based resin, vinyl acetate-butyl acrylate-copolymer-based resin, acrylic acid-methyl methacrylate-copolymer-based resin, a copolymer-based resin obtained by adding maleic anhydride to the above resin raw material. Among these, the styrene-butadiene-copolymer-based resin is preferable because of high water vapor barrier properties.

The above water vapor barrier resin may be one obtained by emulsion polymerization of a combination of various comonomers for the purpose of modification. Examples of the comonomer include methyl methacrylate, acrylonitrile, acrylamide, hydroxyethyl acrylate, and unsaturated carboxylic acids such as itaconic acid, maleic acid, and acrylic acid. In addition, as the emulsifier, an anionic surfactant such as sodium oleate, rosin acid soap, sodium alkylarylsulfonate, and sodium dialkylsulfosuccinate can be used singly or in combination with a nonionic surfactant. Depending on the purpose, an amphoteric or cationic surfactant may be used.

(Water vapor barrier inorganic material)

As the water vapor barrier inorganic material, it is preferable to use one or two or more selected from the group consisting of kaolin, clay, engineered kaolin, delaminated clay, heavy calcium carbonate, light calcium carbonate, mica, talc, titanium dioxide, barium sulfate, calcium sulfate, zinc oxide, silicic acid, silicate, colloidal silica, and satin white.

(Water-soluble polymer)

As a water-soluble polymer contained in the oxygen barrier resin composition and/or water vapor barrier resin

composition, polyvinyl alcohol-based resin, polyvinylpyrrolidone, polysaccharides, proteins, and the like are preferable.

Specific examples of polyvinyl alcohol-based resin include completely saponified polyvinyl alcohol, partially saponified polyvinyl alcohol, and ethylene copolymerized polyvinyl alcohol.

Examples of polysaccharides include cellulose-based resins and starches, and specific examples of cellulose-based resins include carboxymethyl cellulose, hydroxymethyl cellulose, and hydroxyethyl cellulose, and specific examples of starches include oxidized starch, cationized starch, urea phosphate esterified starch, and hydroxyethyl etherified starch.

Among them, polyvinyl alcohol-based resin and cellulose-based resin are preferable, and polyvinyl alcohol-based resin is more preferable.

(Pigment)

The shape of the pigment particles contained in the water vapor barrier resin composition and/or the oxygen barrier resin composition is preferably flat, and the average aspect ratio is preferably 10 or more. In addition, the pigment particles preferably have a volume-based 50% particle diameter (D50, hereinafter referred to as average particle diameter) of 5 μm or more.

In the pigment-containing layer, water vapor and oxygen penetrate therethrough by bypassing the pigment, but if the pigment particles are flat, have a high aspect ratio, or have a high content, the number of bypassing and transfer distance becomes longer, thereby improving water vapor barrier properties and/or oxygen barrier properties.

Further, it is more preferable to use together a pigment with an average particle diameter of 5 μm or less.

Using together a pigment with an average particle diameter of 5 μm or more and a pigment with an average particle diameter of 5 μm or less allows the pigment distribution in the water vapor barrier resin layer and/or the oxygen barrier resin layer to be brought close to close packing to increase the percentage by volume of the pigment, and thus allowing to improve the water vapor barrier properties and/or the oxygen barrier properties.

In this case, the dry weight ratio of the pigment with an average particle size of 5 μm or more and the pigment with an average particle diameter of 5 μm or less is preferably 50/50 to 99/1.

If the pigment with an average particle diameter of 5 μm or less has less than the above range, the combined effect is difficult to exhibit, and if more than the above range, the number of bypassing and transfer distance of oxygen and water vapor decrease, and thus the combined effect is likely to deteriorate.

When blending the pigment into a water-soluble polymer, it is preferable to slurry the pigment and mix them.

As a pigment, an inorganic pigment such as kaolin, clay, engineered kaolin, delaminated clay, heavy calcium carbonate, light calcium carbonate, mica, talc, titanium dioxide, barium sulfate, calcium sulfate, zinc oxide, silicic acid, silicate, colloidal silica, and satin white, and an organic pigment such as solid type, hollow type, and core-shell type can be used singly or in combination of two or more. Among them, the inorganic pigment is preferable.

As the pigment having a flat shape, an inorganic pigment such as kaolin, mica, and talc is preferable, and kaolin is more preferable.

Examples of the pigment having an average particle diameter of 5 μm or less in combination with the pigment having an average particle diameter of 5 μm or more and an aspect ratio of 10 or more include: an inorganic pigment such as kaolin, clay, engineered kaolin, delaminated clay, heavy calcium carbonate, light calcium carbonate, talc, titanium dioxide, barium sulfate, calcium sulfate, zinc oxide, silicic acid, silicates, colloidal silica, and satin white; and an organic pigment such as solid, hollow, or core-shell types. Among these pigments, heavy calcium carbonate is preferable.

(Crosslinking agent)

The type of the crosslinking agent contained in the water vapor barrier resin composition and/or oxygen barrier resin composition is not particularly limited, and depending on the type of water vapor barrier resin and water-soluble polymer, polyvalent metal salts, amine compounds, amide compounds, aldehyde compounds, hydroxy acids, and the like can be selected and used as appropriate.

Herein, polyvalent metal salts are formed from polyvalent metal ions and various ionic materials. Examples of the polyvalent metal include copper, zinc, silver, iron, potassium, sodium, zirconium, aluminum, calcium, barium, magnesium, and titanium, and examples of the various ionic materials include carbonate ions, sulfate ions, nitrate ions, phosphate ions, silicate ions, nitrogen oxides, and boron oxides.

Among them, the polyvalent metal salts are preferable, and potassium aluminum sulfate (potassium alum) is more preferable. In particular, when the resin composition contains a copolymer containing styrene, polyvalent metal salts are preferable, and potassium aluminum sulfate (potassium alum) is more preferable.

The content of the crosslinking agent is not particularly limited as long as it is within the range of paint concentration and paint viscosity that can be applied, and the crosslinking agent has preferably 1 part by mass or more and 10 parts by mass or less, more preferably 3 parts by mass or more and 5 parts by mass or less, with respect to 100 parts

by mass of the total amount of the water vapor barrier resin and water-soluble polymer. The content of crosslinking agent is less than the above range, causing a risk that the effect of adding the crosslinking agent is not sufficiently obtained, and the content is more than the above range, causing the viscosity to increase significantly, and easily resulting in difficult application.

Adding a crosslinking agent is preferably performed in a manner of dissolving the crosslinking agent in a polar solvent for addition. Dissolving a crosslinking agent in a polar solvent provides a bond between the crosslinking agent and the polar solvent, and thus even if adding is performed, the crosslinking reaction with the water vapor barrier resin and water-soluble polymer does not occur immediately until the polar solvent evaporates, thus allowing to suppress paint thickening.

(Water repellent agent)

A water repellent agent can improve water vapor barrier properties through their water repellent action.

Specific examples of the water repellent agents include paraffin-based water repellent agents based on alkane compounds, natural oil-based water repellent agents derived from animals and plants such as carnauba and lanolin, silicone-containing-based water repellent agents containing silicone or silicone compounds, and fluorine-containing-based water repellent agents containing fluorine compounds. These water repellent agents can be used singly or in combination of two or more. Among them, the paraffin-based water repellent agents are preferable.

The content of the water repellent agent is not particularly limited, and the water repellent agent preferably has 1 part by mass or more and 100 parts by mass or less with respect to a total of 100 parts by mass of the water vapor barrier resin and the water-soluble polymer. The content of the water repellent agent is less than the above range, causing a risk that the effect of improving water vapor barrier properties is not sufficiently obtained, and the content is more than the above range, causing a risk that another layer is difficult to uniformly be formed on the water vapor barrier resin layer containing the water repellent agent.

(Surfactant)

Surfactants improve the leveling properties of the oxygen barrier resin composition and/or the water vapor barrier resin composition, improve the uniformity of the formed layer, and improve layer-to-layer adhesion, thereby allowing to improve water vapor barrier properties and oxygen barrier properties.

There are no limitations on the ionicity of surfactants, and any type of anionic surfactant, cationic surfactant, amphoteric surfactant, or nonionic surfactant can be used singly or in combination of two or more.

Specific examples of the surfactants include silicone-based surfactants, fluorine-based surfactants, alcohol-based surfactants, acetylenic-based surfactant having an acetylene group, acetylene diol-based surfactant having an acetylene group and two hydroxyl groups, alkyl sulfonic acid-based surfactant having an alkyl group and sulfonic acid, ester-based surfactants, amide-based surfactants, amine-based surfactants, alkyl ether-based surfactants, phenyl ether-based surfactants, sulfate ester-based surfactants, and phenolic-based surfactants. Among them, acetylene diol-based surfactants are preferable.

<<Oxygen-absorbing coat layer>>

The oxygen-absorbing coat layer is a layer formed with an oxygen-absorbing coating agent composition.

<<Oxygen-absorbing coating agent composition>>

The oxygen-absorbing coating agent composition is an oxygen-absorbing coating agent composition containing at least an oxygen-absorbing compound and an oxidation promoting catalyst.

The oxygen-absorbing coating agent composition can further contain a modifier, a diluting solvent, various additives or the like, if necessary.

The oxygen-absorbing coating agent composition can also be used as a printing ink binder.

The oxygen-absorbing coating agent composition may be prepared by adding an oxygen-absorbing compound to an existing coating agent composition, or by using the oxygen-absorbing compound as a resin component.

Herein, the existing coating agent composition may be a one-component coating agent composition or a two-component coating agent composition.

The oxygen-absorbing coating agent composition can contain one or two or more oxygen-absorbing compounds.

The oxygen-absorbing coating agent composition and/or the above existing coating agent composition may be curable or non-curable. In the case of being curable, any of thermosetting, photocurable, electron beam curable, and the

like may be possible.

The oxygen-absorbing compound may be one that reacts or does not react with the components contained in the existing coating agent composition. In addition, oxygen-absorbing compounds may react with each other.

Depending on the presence or absence of the above reaction and the type of reaction, as oxygen-absorbing compounds, one or two or more types can be selected and used from those without a functional group, those with a (co) polymerizable functional group, and those with a functional group that can react as a main agent or curing agent.

Specifically, for example, an oxygen-absorbing compound without a functional group and/or an oxygen-absorbing compound with a functional group can be added to a two-component urethane-based coating agent composition containing an isocyanate-based compound and a hydroxyl group-containing compound. In this case, the functional group is preferably an isocyanate group and/or a hydroxyl group.

In addition, for example, an oxygen-absorbing coating agent composition can be prepared by replacing the combination of the main agent and curing agent of the oxygen-absorbing coating agent composition with a combination of an isocyanate-based compound and an oxygen-absorbing compound having a hydroxyl group, a combination of a hydroxyl group-containing compound and an oxygen-absorbing compound having an isocyanate group, or a combination of an oxygen-absorbing compound having a hydroxyl group and an oxygen-absorbing compound having an isocyanate group.

The oxygen-absorbing coating agent composition is preferably a urethane-based oxygen-absorbing coating agent composition.

The solid content in the oxygen-absorbing coating agent composition is not particularly limited, and is preferably 20% by mass or more and 100% by mass or less.

The content of the oxygen-absorbing compound in the solid content excluding the oxidation promoting catalyst in the oxygen-absorbing coating agent composition is preferably 30% by mass or more and 100% by mass or less. At less than the above range, there is a risk that oxygen absorption becomes insufficient. The case of 100% by mass is a case where the oxygen-absorbing compound can be used as a resin component of the coating agent composition, and a case where there are sufficient coat properties as a single component, there is a curable functional group as a single component, or a mixture of an oxygen-absorbing compound having a functional group as a main agent and an oxygen-absorbing compound having a functional group as a curing agent is used.

The content of the oxidation promoting catalyst in the oxygen-absorbing coating agent composition is preferably 10 ppm or more and 6000 ppm or less on a basis of the total solid content.

If the content is less than the above range, the oxygen absorption may be insufficient, and if the content is more than the above range, the oxygen absorption may become unstable, the oxygen absorption is lost before the package is produced, which causes a risk of impairing the effect of suppressing deterioration due to oxygen after the package content package is produced.

[Oxygen-absorbing compound]

The oxygen-absorbing compound in the present invention has oxygen-absorbing properties, generates less odor, and can be used singly or mixed with a resin or resin composition.

The oxygen-absorbing compound in the present invention is an unsaturated five-membered ring-containing compound having one or two or more unsaturated five-membered rings, in which any bond between the five carbon atoms constituting the unsaturated five-membered ring is a carbon-carbon double bond, and a monovalent and/or divalent or higher electron-donating organic group 1 is bonded to the unsaturated five-membered ring.

When there is one unsaturated five-membered ring, the five-membered ring or the organic group 1 has a functional group having active hydrogen, or a group in which the active hydrogen of the functional group having active hydrogen is replaced with a monovalent organic group 2, and when there are two or more unsaturated five-membered rings, the unsaturated five-membered rings are bonded to each other via a divalent or higher organic group 2 that replaces the active hydrogen of the active hydrogen group on each of the organic groups 1.

When there are two or more unsaturated five-membered rings in one molecule, the unsaturated five-membered rings are bonded to each other via a structure in which an active hydrogen of a functional group having an active hydrogen on each of the five-membered rings or organic group 1 is substituted with a divalent or higher organic group 2.

The unsaturated five-membered ring, organic group 1, and organic group 2 present in one molecule may each be of one or two or more types, and the number may be one or two or more. In addition, the number of the organic group 1 bonded to one unsaturated five-membered ring may be one or two or more. Further, the oxygen-absorbing compound may be a mixture of molecules having two or more structures in which the types and numbers of the unsaturated five-membered rings, organic groups 1, and organic groups 2 present in one molecule are different, as described above.

The organic group 1 donates electrons to the unsaturated five-membered ring, whereby the electron density of the carbon-carbon double bond portion of the unsaturated five-membered ring increases, increasing reactivity with oxygen, and improving oxygen absorption.

It is preferable that no electron-withdrawing group is bonded to the unsaturated five-membered ring. Bonding an electron-withdrawing group, the electron density of the carbon-carbon double bond portion of the unsaturated five-membered ring is lowered, reducing the reactivity with oxygen and decreasing the oxygen absorption.

Specific examples of the molecular structure of the oxygen-absorbing compound include one unsaturated five-membered ring bonded to a monovalent or divalent organic group 1, one unsaturated five-membered ring bonded to a monovalent or divalent organic group 1 and a monovalent organic group 2 in this order, two unsaturated five-membered rings bonded via a divalent organic group 1 and a divalent organic group 2, and three unsaturated five-membered rings bonded via a divalent organic group 1 and a trivalent organic group 2.

In addition, the oxygen-absorbing compound may or may not have a crosslinkable functional group.

The crosslinkable functional group may be a functional group that has been possessed by the compound from which the organic group 2 was derived, or may be a functional group that has been added by chemical modification.

The oxygen-absorbing compound has a crosslinkable functional group, whereby the oxygen-absorbing compound is mixed with a resin or a resin composition, the oxygen-absorbing compound becomes more compatible with the resin or the resin composition, or becomes part of the crosslinked structure of the resin or the resin composition, making it less likely to bleed out from the resin or the resin composition or the cured product of the resin composition, and as a result, the content of the oxygen-absorbing compound in the resin or the resin composition can be increased.

Specific examples of the crosslinkable functional groups include aliphatic hydroxyl groups, aromatic hydroxyl groups, isocyanate groups, amino groups, epoxy groups, and (meth)acrylic groups. Among them, the isocyanate groups and aliphatic hydroxyl groups are preferable.

When the oxygen-absorbing compound has a crosslinkable functional group, the number of crosslinkable functional groups contained in one molecule is preferably one or two or more. In addition, the crosslinkable functional groups contained in one molecule may be one type or two or more types.

The functional group equivalent of the crosslinkable functional group is not particularly limited, and is preferably 500 to 20,000, more preferably 1,000 to 15,000, and still more preferably 1,500 to 10,000.

The number average molecular weight of the oxygen-absorbing compound is preferably 100 to 10,000, more preferably 200 to 5,000, and still more preferably 300 to 2,500. If the number average molecular weight is smaller than the above range, precipitation is likely to occur in mixing with a resin or a resin composition. If the number average molecular weight is larger than the above range, mixing with the resin or resin composition increases the viscosity of the mixture, and thus a large amount of diluting solvent tends to be required to be contained, making it difficult to obtain a thick film or layer, and coating suitability tends to deteriorate.

In addition, the oxygen absorption effect of the oxygen-absorbing compound of the present invention can be promoted by heating or adding a catalyst.

(Unsaturated five-membered ring)

The unsaturated five-membered ring possessed by the oxygen-absorbing compound has a carbon-carbon double bond within the unsaturated five-membered ring. Herein, the carbon-carbon double bond is any bond between five carbon atoms constituting an unsaturated five-membered ring, and there may be one or two in one unsaturated five-membered ring.

The carbon-carbon double bond portion reacts with oxygen molecules in the air and takes in oxygen molecules, causing the oxygen-absorbing compound to exhibit oxygen-absorbing properties.

Examples of the compound from which the unsaturated five-membered ring or the unsaturated five-membered ring to which the electron-donating organic group 1 is bonded is derived include cyclopentadiene, dicyclopentadiene, norbornene, and the derivatives thereof. The oxygen-absorbing compound can have an unsaturated five-membered ring derived from one or two or more selected from the group consisting of these.

The concentration of the unsaturated five-membered ring in the oxygen-absorbing compound is not particularly limited, and is preferably 1% by mass or more and 70% by mass or less, more preferably 5% by mass or more and 60% by mass or less. If the concentration is lower than the above range, the oxygen absorption tends to be insufficient, and it is difficult to obtain an oxygen-absorbing compound having the concentration higher than the above range, and the balance with various physical properties tends to be poor.

(Electron-donating organic group 1)

Specific examples of the organic group 1 include an alkyl group, an alkylene group, and a cyclic alkylene group. Among them, a cyclic alkylene group is preferable, and one that constitutes an aliphatic bicyclic alkylene group together with the unsaturated five-membered ring is more preferable.

Specific examples of the cyclic alkylene group include a cyclopropylene group, a cyclobutylene group, a cyclopentylene group, a cyclohexylene group, a cycloheptylene group, and a cyclooctylene group. Among them, a

cyclopentylene group is more preferable.

(Electron-withdrawing organic group)

Specific examples of the electron-withdrawing group include phenyl group, phenylene group, carbonyl group, and halogen.
For indene and coumarone, in which only these electron-withdrawing groups are bonded to an unsaturated five-membered ring, the electron density of the carbon-carbon double bond portion of the unsaturated five-membered ring becomes low, reactivity with oxygen decreases, and oxygen absorption is low.

(Functional group having active hydrogen)

Functional groups having active hydrogen are chemically reactive.
Specific examples of the functional group having active hydrogen include a primary amino group, a secondary amino group, an aliphatic hydroxyl group, an aromatic hydroxyl group, an imino group, a carboxyl group, a urethane group, and an urea group, and among them, the primary amino group, the secondary amino group, the aliphatic hydroxyl group, and the aromatic hydroxyl group are preferable, and the aliphatic hydroxyl group is more preferable.

(Organic group 2)

The organic group 2 is a monovalent and/or divalent or higher valent group that replaces the active hydrogen of a functional group having active hydrogen on the five-membered ring or organic group 1 and is bonded to the five-membered ring or organic group 1.
When there are two or more unsaturated five-membered rings in one molecule, the unsaturated five-membered rings are bonded to each other via a structure in which the active hydrogen of a functional group having active hydrogen is replaced with the organic group 2 having a valence of two or more.
As a specific example, for example, a functional group having an active hydrogen on the organic group 1 reacts with an isocyanate group of an isocyanate-based compound having a structural part from which the organic group 2 is derived to replace active hydrogen with the organic group 2, allowing bonding by a urethane group.
Bonding the organic group 2 allows the oxygen-absorbing compound to have two or more of the unsaturated five-membered rings in one molecule, further allowing to improve compatibility, dispersibility, and reactivity in mixing with a resin and a resin composition to prepare a mixture. Further, the mixture and the cured product of the mixture can be adjusted to be soft.
The organic group 2 may be an aliphatic group, an aromatic group, or may have both an aliphatic group and an aromatic group.
The organic groups 2 present in one molecule of the oxygen-absorbing compound may be one or two or more types.
The organic group 2 is preferably a group containing a structural part derived from an isocyanate-based compound and/or a hydroxyl group-containing compound. Herein, the structural part derived from an isocyanate-based compound and/or a hydroxyl group-containing compound may include a structural part derived from a reaction product of an isocyanate-based compound and a hydroxyl group-containing compound.

(Isocyanate-based compound)

Examples of the isocyanate-based compound from which the above organic group 2 is derived include tetramethylene diisocyanate, hexamethylene diisocyanate, lysine diisocyanate, isophorone diisocyanate, norbornane diisocyanate, Xylylene diisocyanate, Toluylene diisocyanate, diphenylmethane diisocyanate, phenylene diisocyanate, diphenyl ether diisocyanate, hydrogenated diphenylmethane diisocyanate, polymethylene polyphenyl polyisocyanate, and trimethylolpropane adducts thereof, biuret forms thereof, allophanate forms thereof, isocyanurate forms (trimers) thereof, and various derivatives thereof. Among them, biuret forms of Toluylene diisocyanate, isophorone diisocyanate, and hexamethylene diisocyanate are preferable.
In the present invention, one or two or more selected from the group consisting of these isocyanate-based compounds can be used as the origin of the structural part of the above monovalent and/or divalent or more hydrocarbon group. When two or more types are used, two types may be used in the same molecule of the oxygen-absorbing compound, or molecules of oxygen-absorbing compounds having one different type may be mixed.
The number average molecular weight of the isocyanate-based compound is preferably 100 to 10,000, more preferably 160 to 5,000. If the number average molecular weight is smaller than the above range, precipitation is likely to occur in mixing with a resin or a resin composition. If the number average molecular weight is larger than the above range,

mixing with a resin or a resin composition increases the viscosity of the mixture, and thus a large amount of a diluting solvent tends to be required to be contained, making difficult to obtain a thick film or layer, and coating suitability tends to deteriorate.

(Hydroxyl group-containing compound)

The hydroxyl group-containing compound is a compound from which the organic group 2 described above is derived, and has two or more hydroxyl groups.

For the oxygen-absorbing multilayer body or oxygen-absorbing multilayer body for a lid part, examples of hydroxyl group-containing compounds include polyhydric alcohols, polyolefin polyols, polyether polyols, polyester polyols, polycarbonate polyols, poly(meth)acrylic acid ester polyols, phenoxy resins, and urethane chain-extended polyols thereof. Among them, the polyether polyols and polyolefin polyols are preferable.

For the oxygen-absorbing coated multilayer body, examples of hydroxyl group-containing compounds include polyhydric alcohols, polyolefin polyols, polyether polyols, polyester polyols, polycarbonate polyols, poly(meth)acrylic acid ester polyols, phenoxy resins, urethane chain-extended polyols thereof, vinyl chlorides, vinyl acetate copolymers, cellulose acetate-based resins, styrene-maleate ester-based copolymers, polyamide-based resins, and polyimide-based resins. Among them, it is preferable to include one or two or more selected from the group consisting of polyester polyols, poly(meth)acrylic acid ester polyols, polyether polyols, urethane chain-extended polyols thereof, vinyl chloride-vinyl acetate copolymers, cellulose acetate-based resins, styrene-maleate ester-based copolymers, polyamide-based resins, and polyimide-based resins.

The above hydroxyl group compounds are obtained by (co)polymerizing raw materials having hydroxyl groups, or by modifying the above resins with hydroxyl group-containing compounds.

In order to prevent odor generation, it is preferable for the hydroxyl group-containing compound to have no double bonds in the aliphatic chain of the main skeleton or to have two hydroxyl groups. Compounds having terminal hydroxyl groups are preferable because of being more readily available, but hydroxyl groups do not need to be at the terminal.

In the present invention, one or two or more types selected from the group consisting of these can be used as the hydroxyl group-containing compound from which the above organic group 2 is derived. When two or more types are used, two types may be used in the same molecule of the oxygen-absorbing compound, or molecules of the oxygen-absorbing compound having different one type may be mixed.

The number average molecular weight of the hydroxyl group-containing compound is preferably 500 to 10,000, more preferably 750 to 5,000, and still more preferably 1,000 to 3,000. If the number average molecular weight is smaller than the above range, precipitation is likely to occur in mixing with a resin or resin composition. If the number average molecular weight is larger than the above range, mixing with a resin or resin composition increases the viscosity of the mixture, and thus a large amount of diluting solvent tends to be required to be contained, making it difficult to obtain a thick film or layer, and coating suitability tends to deteriorate.

- Polyhydric alcohols

Polyhydric alcohols are monomers that have two or more hydroxyl groups.

Specific examples of the polyhydric alcohols include diols such as ethylene glycol, propylene glycol, 1,3-propanediol, 1,4-butanediol, 1,3-butanediol, 1,6-hexanediol, cyclohexanedimethanol, 1,8-octanediol, 1,9-nonanediol, neopentyl glycol, 3-methyl-1,5-pentanediol, 2-methyl-1,3-propanediol, 2,2,4-trimethyl-1,3-pentanediol, 2,4-diethyl-1,5-pentanediol, 1,12-octadecanediol, 2,2'-oxydiethanol; glycerin, mannitol, and sorbitol.

Among them, ethylene glycol is preferable from the viewpoint of oxygen absorption.

- Polyolefin polyol

Polyolefin polyol is a polyolefin-based resin that has two or more hydroxyl groups.

Specific examples of the polyolefin polyol include those not only having a main skeleton of a polyolefin such as polyethylene, polypropylene, polybutylene, polybutadiene, hydrogenated polybutadiene, polyisoprene, hydrogenated polyisoprene, ethylene-vinyl acetate copolymer, ethylene-ethyl (meth)acrylate copolymer, ethylene-(meth)acrylic acid copolymer, and ethylene-propylene copolymer, but also having a hydroxyl group.

Among them, those having an ethylene-vinyl acetate copolymer or hydrogenated polyisoprene as the main skeleton are particularly preferable.

- Polyether polyol

Polyether polyol is a polyether-based resin having two or more hydroxyl groups.

Polyether polyol is obtained, for example, by dehydration condensation of the above polyhydric alcohols or polyolefin polyols, and has not only a polyether structure in the main skeleton but also a hydroxyl group.
For the oxygen-absorbing multilayer body or oxygen-absorbing multilayer body for a lid part, specific examples of the polyether polyols include: polyalkylene ether diols such as diethylene glycol, triethylene glycol, dipropylene glycol, polyethylene ether diol, polypropylene ether diol, and polybutylene ether diol; and glycerin-modified polyether polyols. Among them, polyalkylene ether diol is preferable, and polypropylene ether diol is particularly preferable.
For the oxygen-absorbing coated multilayer body, specific examples of polyether polyols include: polyalkylene ether diol such as diethylene glycol, triethylene glycol, dipropylene glycol, polyethylene ether diol, polypropylene ether diol, and polybutylene ether diol; and glycerin-modified polyether polyols. Among them, the polyalkylene ether diol is preferred, and the polypropylene ether diol is particularly preferable.

- Polyester polyol

Polyester polyol is a polyester-based resin having two or more hydroxyl groups.
The polyester polyol is obtained, for example, by an esterification reaction between various polyvalent carboxylic acids or derivatives thereof and the above polyhydric alcohols, polyolefin polyols, polyether polyols or the like, and has not only a polyester structure in the main skeleton but also a hydroxyl group.
Specific examples of a polyvalent carboxylic acid include adipic acid, phthalic acid, isophthalic acid, terephthalic acid, maleic acid, fumaric acid, succinic acid, oxalic acid, malonic acid, pimelic acid, azelaic acid, sebacic acid, suberic acid, glutaric acid, 1,4-cyclohexanedicarboxylic acid, and trimellitic acid, and examples of derivatives of these polyvalent carboxylic acids include esterification products, acid anhydrides, and acylation products.
Among them, the polyester polyols using two or more types of polyhydric alcohols and two or more types of polyvalent carboxylic acids in combination are preferable in order to reduce crystallinity.

- Polycarbonate polyol

Polycarbonate polyol is a polycarbonate-based resin having two or more hydroxyl groups.
Polycarbonate has a polyol-derived portion in the main skeleton, and this polyol-derived portion may be derived from the above polyhydric alcohols, polyolefin polyol, polyether polyol, polyester polyol, and the like.
Among them, the polycarbonate polyol using two or more polyhydric alcohols in combination are preferable in order to reduce crystallinity.

- Poly(meth)acrylic acid ester polyol

Poly(meth)acrylic acid ester polyol is a (meth)acrylic acid ester (co)polymer having two or more hydroxyl groups.
Poly(meth)acrylic acid ester polyol can be obtained, for example, by using a hydroxyl group-containing monomer such as 2-hydroxyethyl methacrylate or a (meth)acrylic acid ester having a hydroxyl group synthesized from one (meth) acrylic acid or a derivative thereof and one diol, and polymerizing the hydroxyl group-containing monomers with each other or copolymerizing with a (meth)acrylic acid ester not having a hydroxyl group.
The diol that can be used in synthesizing the (meth)acrylic acid ester having a hydroxyl group include the above diols, polyolefin polyol, polyether polyols, and the like.
Among them, the poly(meth)acrylic acid ester copolymer with 2-hydroxyethyl methacrylate is preferable.

- Phenoxy resin

Phenoxy resin is a resin obtained by reacting a polyhydric phenol compound with a polyhydric epoxy compound, and has a structure in which an aliphatic hydroxyl group is generated at the bond formed by the reaction of an aromatic hydroxyl group with an epoxy group.
As the phenoxy resin, those obtained by reacting a bisphenol with diglycidyl etherified bisphenols are readily available and are common.
Examples of the polyhydric phenol compound include bisphenol A and bisphenol F, and examples of the polyhydric epoxy compound include bisphenol A diglycidyl ether and bisphenol F diglycidyl ether.
Among them, the phenoxy resin with bisphenol A is preferable.
The terminal of the phenoxy resin may be an aromatic hydroxyl group or an epoxy group.

- Urethane chain-extended polyol

Urethane chain-extended polyol is a polyol having two or more hydroxyl groups obtained by extending the above

hydroxyl group-containing compound with a urethane chain.

The urethane chain-extended polyol can be obtained, for example, by subjecting the above various hydroxyl group-containing compounds into polymerization reaction with the above isocyanate-based compounds to extend the urethane chain. In addition, if necessary, diamines or amino alcohols may be used in combination for polymerization.

Among them, there are preferable the urethane chain-extended polyols obtained by reacting the above various hydroxyl group-containing compounds having hydroxyl groups at both ends with diisocyanate-based compounds.

(Specific examples of oxygen-absorbing compounds)

Specific examples of oxygen-absorbing compounds are shown as follows.

3a,4,5,6,7,7a-Hexahydro-4,7-methano-1H-indenol represented by formula (1), 3a,4,5,6,7,7a-hexahydro-4,7-methano-1H-indenamine represented by formula (1-b), and 3a,4,5,6,7,7a-hexahydro-4,7-methano-1H-inden-1-ol represented by formula (1-c) are examples of oxygen-absorbing compounds having one unsaturated five-membered ring and one organic group 1 in which the one organic group 1 has a hydroxyl group or an amino group as a functional group having active hydrogen.

[Chemical Formula 6]

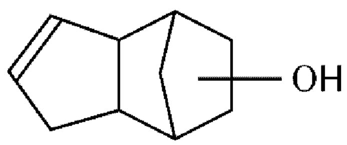

(1)

[Chemical Formula 7]

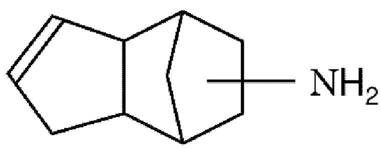

(1-b)

[Chemical Formula 8]

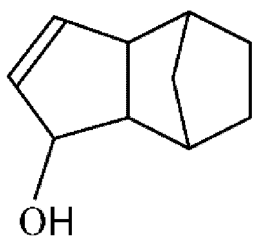

(1-c)

The oxygen-absorbing compound represented by formula (2) is, for example, an oxygen-absorbing compound that can be obtained by reacting a hydroxyl group, which is a functional group having active hydrogen on the organic group 1 of the oxygen-absorbing compound represented by the formula (1), with an isocyanate group of $R^1(NCO)_a$, which is an isocyanate-based compound from which the organic group 2 is derived, to replace the active hydrogen of the hydroxyl group, and bonding a pieces of unsaturated five-membered rings and the organic group 1 via $R^1$.

[Chemical Formula 9]

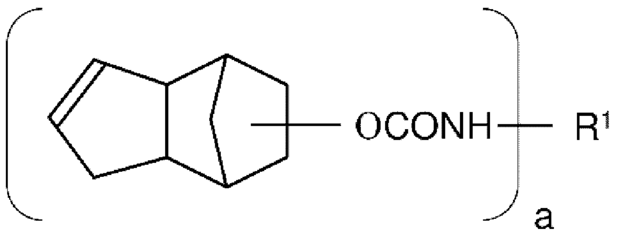

(2)

(In the formula, a is a number of 1 or more, $R^1$ is an organic group having 1 or more carbon atoms, contains at least an alkylene and/or phenylene structure, and can further contain a structure derived from one or two or more selected from the group consisting of polyhydric alcohols, polyolefin polyol, polyether polyol, polyester polyol, polycarbonate polyol, poly(meth)acrylic acid ester polyol, phenoxy resin, and urethane chain-extended polyols thereof.)

The oxygen-absorbing compound represented by formula (5) is an oxygen-absorbing compound in which a = 2 in the formula (2) and $R^1$ is, for example, a group derived from an isocyanate-based compound OCN-$R^4$-NCO and a hydroxyl group-containing compound HO-$R^5$-OH, the group containing a structural part formed by the reaction of the two.

[Chemical Formula 10]

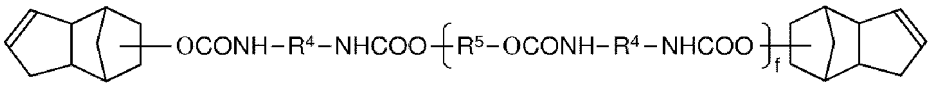

(5)

(In the formula, f represents a number of 0 or more, and each of $R^4$ and $R^5$ represents an organic group having 1 or more carbon atoms, an organic group containing at least an alkylene and/or phenylene structure, and can further contain a structure derived from one or two or more selected from the group consisting of polyhydric alcohols, polyolefin polyols, polyether polyols, polyester polyols, polycarbonate polyols, poly(meth)acrylic acid ester polyols, phenoxy resins, and urethane chain-extended polyols thereof.)

The oxygen-absorbing compound represented by the formula (3) is an oxygen-absorbing compound represented by the formula (2), in which, for example, $R^1$ is derived from an isocyanate-based compound and a hydroxyl group-containing compound, a structural part formed by the reaction of the two is contained, and hydroxyl groups are contained as residue of excess hydroxyl groups or as a result of chemical modification.

[Chemical Formula 11]

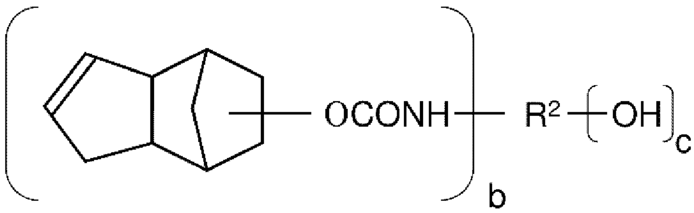

(3)

(In the formula, each of b and c represents a number of 1 or more, $R^2$ represents an organic group having 1 or more carbon atoms, at least an alkylene and/or phenylene structure is contained, and there can be further contained a structure derived from one or two or more selected from the group consisting of polyhydric alcohols, polyolefin polyols, polyether polyols, polyester polyols, polycarbonate polyols, poly(meth)acrylic acid ester polyols, phenoxy resins, and urethane chain-extended polyols thereof.)

The oxygen-absorbing compound represented by the formula (4) is an oxygen-absorbing compound represented by the formula (2), in which, for example, $R^1$ is derived from an isocyanate-based compound and a hydroxyl group-containing compound, a structural part formed by the reaction of the two is contained, and an isocyanate group is contained as residue of excess isocyanate groups or as a result of chemical modification.

[Chemical Formula 12]

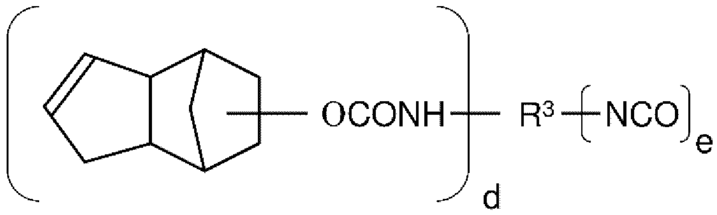 (4)

(In the formula, each of d and e represents a number of 1 or more, $R^3$ represents an organic group having 1 or more carbon atoms, at least an alkylene and/or phenylene structure is contained, and there can be further contained a structure derived from one or two or more selected from the group consisting of polyhydric alcohols, polyolefin polyols, polyether polyols, polyester polyols, polycarbonate polyols, poly(meth)acrylic acid ester polyols, phenoxy resins, and urethane chain-extended polyols thereof.)

[Oxidation promoting catalyst]

An oxidation promoting catalyst is a compound that promotes the action of an oxygen-absorbing compound for absorbing oxygen molecules and being oxidized.

Examples of the oxidation promoting catalysts include peroxides and compounds including cations composed of transition metals.

Specific examples of such peroxides include hydrogen peroxide.

The compound including a cation composed of a transition metal is preferably a metal soap composed of a transition metal-containing compound capable of releasing a cation or complex of a transition metal atom and an anion or ligand composed of a fatty acid.

The transition metal is preferably cobalt, manganese, iron, nickel, copper, or the like, and the anion or ligand is preferably an anion or ligand composed of stearic acid, naphthenic acid, octylic acid, acetylacetonate, or the like.

As the oxidation promoting catalyst, there can be used a metal soap formed by combining a cation composed of one or two or more transition metals selected from the group consisting of the above transition metals and an anion composed of one or two or more fatty acids selected from the group consisting of the above long-chain fatty acids. Specific examples of the compound include cobalt octylate, acetylacetone cobalt (II), acetylacetone cobalt (III), acetylacetone manganese (III), and acetylacetone iron (III).

[Modifier]

A modifier is a compound having a functional group that reacts with the oxygen-absorbing compound when the oxygen-absorbing compound has a functional group, and various reactive monomers and resins can be used.

Containing the modifier in the oxygen-absorbing adhesive composition can bond the oxygen-absorbing compound to other components in the oxygen-absorbing adhesive composition, adjust the content of the oxygen-absorbing compound in the oxygen-absorbing adhesive composition, and adjust the hardness of the cured product of the oxygen-absorbing adhesive composition.

Alternatively, containing the modifier in the oxygen-absorbing coating agent composition can bond the oxygen-absorbing compound to other components in the oxygen-absorbing coating agent composition, adjust the content of the oxygen-absorbing compound in the oxygen-absorbing coating agent composition, or adjust the hardness of the cured product of the oxygen-absorbing coating agent composition.

For example, when the oxygen-absorbing compound has a hydroxyl group or an isocyanate group, a modifier composed of an isocyanate-based compound and/or a hydroxyl group-containing compound can be used.

When the oxygen-absorbing adhesive composition or the oxygen-absorbing coating agent composition is a urethane-based composition, the equivalent ratio NCO/OH of the oxygen-absorbing adhesive composition or the oxygen-absorbing coating agent composition is preferably 0.5 or more and 8 or less. At smaller than the above range, the oxygen-absorbing adhesive composition or the oxygen-absorbing coating agent composition may not cure sufficiently, and sufficient laminate strength (adhesion strength) may not be obtained, and at larger than the above range, the pot life of the oxygen-absorbing adhesive composition or the oxygen-absorbing coating agent composition may become too short.

(Isocyanate-based compound for modifier)

As the isocyanate-based compound for the modifier, the isocyanate-based compound used in the synthesis of the oxygen-absorbing compound can be used, and any of aromatic isocyanates, aliphatic isocyanates, and urethane chain-extended isocyanates thereof can be used. In addition, in order for the oxygen-absorbing adhesive composition or the oxygen-absorbing coating agent composition to be cured, it is preferable to use one having two or more isocyanate groups in one molecule. However, an isocyanate-based compound having one isocyanate group in one molecule can be also used in combination within a range that does not inhibit the sufficient effect of the oxygen-absorbing adhesive composition or oxygen-absorbing coating agent composition.
As the isocyanate-based compound having two or more isocyanate groups in one molecule, a biuret form of hexamethylene diisocyanate is particularly preferable.
Specific examples of the isocyanate-based compounds include tetramethylene diisocyanate, hexamethylene diisocyanate, lysine diisocyanate, isophorone diisocyanate, norbornane diisocyanate, Xylylene diisocyanate, Toluylene diisocyanate, diphenylmethane diisocyanate, hydrogenated diphenylmethane diisocyanate, phenyl diisocyanate, diphenyl ether diisocyanate, polymethylene polyphenyl polyisocyanate, and trimethylolpropane adducts thereof, biuret forms thereof, allophanate forms thereof, isocyanurate forms (trimers) thereof, and further, various derivatives thereof. Among them, biuret forms of Toluylene diisocyanate, isophorone diisocyanate, and hexamethylene diisocyanate are preferable.

(Hydroxyl group-containing compound for modifier)

As the hydroxyl group-containing compound for the modifier, the hydroxyl group-containing compound used in the synthesis of the oxygen-absorbing compound can be used, and any of aromatic hydroxyl group-containing compounds, aliphatic hydroxyl group-containing compounds, and urethane chain-extended polyols thereof can be used. In addition, in order for the oxygen-absorbing adhesive composition or oxygen-absorbing coating agent composition to be cured, those having two or more hydroxyl groups in one molecule are preferable. However, a hydroxyl group-containing compound having one hydroxyl group in one molecule can be used in combination within a range that does not inhibit the sufficient effect of the oxygen-absorbing adhesive composition or oxygen-absorbing coating agent composition.
As the hydroxyl group-containing compound having two or more hydroxyl groups in one molecule, either aromatic hydroxyl group-containing compounds or aliphatic hydroxyl group-containing compounds can be used, and they may be alcohol-based or phenol-based.
As the hydroxyl group-containing compound having two or more hydroxyl groups in one molecule, particularly preferable are polyalkylene ether diols and urethane chain-extended polyols of polyalkylene ether diols.

[Diluting solvent]

There are no particular limitations on the diluting solvent, as long as the oxygen-absorbing compound and the oxidation promoting catalyst are uniformly dissolved or dispersed, the oxygen-absorbing adhesive composition or the oxygen-absorbing coating agent composition becomes uniform, and for example, coating is suitable for dry lamination step or the like, and for example, ester-based diluting solvents, ketone-based diluting solvents, hydrocarbon-based diluting solvents, and the like can be used.
Specific examples of the ester-based diluting solvents include ethyl acetate and butyl acetate, specific examples of the ketone-based diluting solvents include methyl ethyl ketone, and specific examples of the hydrocarbon-based diluting solvents include toluene. Among them, ethyl acetate is easy to use and is preferable.

[Various additives]

The oxygen-absorbing adhesive composition or oxygen-absorbing coating agent composition can contain various additives if necessary.
For example, curing accelerators; curing regulators for extending pot life; and antioxidants, adhesion aids, tackifiers, leveling agents, ultraviolet absorbers, antifoaming agents, coloring pigments, and extender pigments for suppressing a decrease in oxygen absorption during storage or use of an oxygen-absorbing adhesive composition or an oxygen-absorbing coating agent composition and before the content is accommodated in a package can also be added.

(Curing accelerator)

A curing accelerator can be used without particular limitations as long as it accelerates the curing reaction of the oxygen-absorbing adhesive composition or oxygen-absorbing coating agent composition.
Specific examples of the curing accelerators include metal-containing compounds such as dibutyltin dilaurate,

dibutyltin diacetate, dioctyltin dilaurate, dibutyltin dimaleate, tetrabutyl titanate, and tetraisopropyl titanate, and tertiary amines such as 1,8-diaza-bicyclo(5,4,0)undecene-7, 1,5-diazabicyclo(4,3,0)nonene-5 and triethanolamine, and one or two or more types selected from the group consisting of these can be used.

(Curing regulator)

The oxygen-absorbing adhesive composition or oxygen-absorbing coating agent composition is used in combination of a curing regulator to allow the pot life to be extended if the pot life is shortened due to the oxidation promoting catalyst contained.

As specific curing regulators, phosphoric acids are preferable, examples thereof include orthophosphoric acid, metaphosphoric acid, polyphosphoric acid, and ester derivatives thereof, and one or two or more types selected from the group consisting of these can be used.

The amount of the reaction regulator added is preferably 200 ppm or more and 400 ppm or less with respect to the resin component of the oxygen-absorbing adhesive composition or oxygen-absorbing coating agent composition. At less than the above range, it is difficult to obtain the effect of extending the pot life, and at more than the above range, there is a risk of inhibiting curing of the oxygen-absorbing coating agent composition.

(Antioxidant)

In storing or using the oxygen-absorbing adhesive composition or oxygen-absorbing coating agent composition, and further, in the step before the package produced with the oxygen-absorbing adhesive composition or the oxygen-absorbing coating agent composition accommodates the content, the oxygen-absorbing adhesive composition or oxygen-absorbing coating agent composition can contain an antioxidant in order to suppress deterioration of oxygen absorption and maintain high oxygen absorption after accommodating the content.

Specific examples of the antioxidant include phenol-based one, lactone-based one, thioether-based one, gallic acid-based one, ascorbic acid, erythorbic acid, catechin, dibutylhydroxytoluene, tocopherol, citric acid, butylhydroxyanisole, phosphite ester, hindered amine, and aromatic amine-based one, and one or two or more types selected from the group consisting of these can be used.

In addition, if it is assumed that heat or light is used as a trigger for developing oxygen absorption, it is preferable to use antioxidants with low heat resistance and light resistance such as ascorbic acid and tocopherol, and it is not preferable to use antioxidants with high heat resistance and high light resistance such as phenol-based one.

The amount of the antioxidant added is preferably 10 ppm or more and 10,000 ppm or less with respect to the oxygen-absorbing compound. At less than the above range, the antioxidant effect tends to be insufficient, and at more than the above range, there is a risk of decreasing oxygen absorption.

(Adhesive aid and adhesion aid)

A silane coupling agent is preferable as an adhesive aid or adhesion aid to assist in adhesive strength.

Examples of the silane coupling agent include γ-glycidoxypropyltrialkoxysilane, γ-methacryloxypropyltrialkoxysilane, γ-glycidoxypropylmethyldialkoxysilane, β-(3,4-epoxycyclohexyl)ethyltrialkoxysilane, γ-aminopropyltrialkoxysilane, γ-aminopropylmethyldialkoxysilane, N-(β-aminoethyl)-γ-aminopropyltrialkoxysilane, N-(β-aminoethyl)-γ-aminopropylmethyldialkoxysilane, N-butyl-3-amino-2-methylpropyltrialkoxysilane, γ-mercaptopropyltrialkoxysilane, and γ-mercaptopropylmethyldialkoxysilane, and the alkoxy group is preferably a methoxy group or an ethoxy group, and one or two or more types selected from the group consisting of these can be used.

(Tackifier)

Examples of tackifiers include paraffin wax, polyethylene wax, rosin, rosin glycerin ester, terpene, and alkylphenol, and one or two or more types selected from the group consisting of these can be used.

(Leveling agent)

Examples of leveling agents include acrylic polymer-based, modified silicone-based, and acetylene diol-based, and one or two or more types selected from the group consisting of these can be used.

(Ultraviolet absorber)

Examples of ultraviolet absorbers include benzotriazole-based one, hydroxyphenyltriazine-based one, and

hindered amine-based one, and one or two or more types selected from the group consisting of these can be used.

(Antifoaming agent)

Examples of antifoaming agents include surfactants, and polyether-modified silicone oil, and one or two or more types selected from the group consisting of these can be used.

(Coloring pigment)

Examples of coloring pigments include: organic-based pigments such as anthraquinone, diketopyrrolopyrrole, perylene maroon, carbon black, dioxazine, perylene, benzimidazolone, isoindolinone, isoindoline, phthalocyanine-based, and indanthrene; and inorganic-based pigments such as yellow iron oxide, red iron oxide, azomethine copper complex, titanium oxide, and silicon oxide, and one or two or more types selected from the group consisting of these can be used.

(Extender pigment)

Examples of extender pigments include white or colorless pigments that are used as fillers or as regulators for coloring power, gloss, strength, feel, and the like.

Specific examples thereof include inorganic-based pigments such as barium sulfate, barium carbonate, calcium carbonate, magnesium oxide, magnesium carbonate, magnesium hydroxide, barium titanate, calcium hydroxide, calcium sulfite, calcium sulfate, calcium oxide, calcium silicate, titanium oxide, silica, zeolite, and talc, and one or two or more types selected from the group consisting of these can be used.

<<Method for preparing oxygen-absorbing adhesive composition and oxygen-absorbing coating agent composition>>

The oxygen-absorbing adhesive composition or oxygen-absorbing coating agent composition can be produced by mixing all the constituent components such as an oxygen-absorbing compound, an oxidation promoting catalyst, if necessary, a modifier, a diluting solvent, and various additives. Alternatively, the composition can be produced by mixing an oxygen-absorbing compound, an oxidation promoting catalyst, if necessary, a modifier, a diluting solvent, various additives, or the like into an existing adhesive composition or coating agent composition.

The method of performing the above mixing and the order of mixing each component are not particularly limited, and the method and mixing order of preparing a general adhesive composition or coating agent composition can be applied.

Specific examples of mixing methods include a method of dissolving and mixing in a solvent and a method of melting and kneading. In this case, it is preferable to adjust the heating temperature to increase solubility and dispersibility.

<<Method of using oxygen-absorbing adhesive composition and oxygen-absorbing coating agent composition>>

There is no particular limitation on the method of using the oxygen-absorbing adhesive composition, and the method of using as a general adhesive can be applied.

Examples thereof include a non-solvent lamination method with heating to achieve an appropriate viscosity, and a dry lamination method with diluting solvents and other compounded adhesives to adjust the coating viscosity to an appropriate level.

In a case of forming an adhesive layer using an oxygen-absorbing adhesive composition, the coating amount is preferably 2 to 5 g/$m^2$, more preferably 3 to 5 g/$m^2$. At less than the above range, there is a risk of failing to obtain sufficient oxygen absorption properties, and at more than the above range, the oxygen absorption properties do not change much, leading to cost disadvantages, which is not preferable.

There is no particular limitation on the method of using the oxygen-absorbing coating agent composition, and a method of using as a general coating agent can be applied.

For example, a coating layer can be formed by applying once or multiple times by conventionally known means such as a roll coating method, a spray coating method, a spin coating method, a dipping method, a brush method, a bar coating method, and an applicator method.

In a case of forming a coat layer using the oxygen-absorbing coating agent composition, the coating amount is preferably 2 to 10 g/$m^2$, more preferably 3 to 7 g/$m^2$. At less than the above range, there is a risk of failing to obtain sufficient oxygen absorption properties, and at more than the above range, the oxygen absorption properties do not change much, leading to cost disadvantages, which is not preferable.

A multilayer body obtained by using an oxygen-absorbing adhesive composition to form and adhere an adhesive

layer, or a multilayer body obtained by using an oxygen-absorbing coating agent composition to form a coating agent layer is typically preferably subjected to aging at a temperature of 20°C or more and 50°C or less for 2 days or more and 5 days or less.

During aging, it is preferable to performing aging at the lowest possible temperature or under an inert gas atmosphere so as not to reduce the oxygen absorption properties of the multilayer body.

In a case of storing the produced multilayer body, it is preferable to perform storing at 10°C or less or under an inert gas atmosphere so as not to reduce the oxygen absorption properties of the multilayer body.

<<Object that can be adhered>>

There are no particular limitations on the object that can be adhered to the oxygen-absorbing adhesive composition, and for example, it is possible to adhere to resin molded products, resin films, paper, metals, metal foils, inorganic vapor-deposited film surfaces, and inorganic oxide vapor-deposited film surfaces.

<<Object that can be coated>>

There are no particular limitations on the object that can be coated with the oxygen-absorbing coating agent composition, and for example, it is possible to coat to resin molded products, resin films, paper, metals, metal foils, inorganic vapor-deposited film surfaces, and inorganic oxide vapor-deposited film surfaces.

Specific examples of the resin for the resin film include polyester-based resins such as polyethylene terephthalate (PET), polyamide-based resins such as various nylons, polyethylene-based resin, polypropylene-based resin, cyclic polyolefin-based resin, polystyrene-based resin, acrylonitrile-styrene copolymer (AS resin), acrylonitrile-butadiene-styrene copolymer (ABS resin), polyolefin-based resins such as polybutene-based resins, polyvinyl chloride-based resin, polycarbonate-based resin, polyimide-based resin, polyamideimide-based resin, diallyl phthalate-based resin, silicone-based resin, polysulfone-based resin, polyphenylene sulfide-based resin, polyether sulfone-based resin, polyurethane-based resin, cellulose-based resin, poly(meth)acrylic-based resin, polyvinylidene chloride-based resin, acetal-based resin, and fluorine-based resin.

Specific examples of paper include paper base materials for paper layers, bleached or unbleached with strong size, or paper base materials such as pure white roll paper, kraft paper, paperboard, coated paper, processed paper, and milk base paper, and barrier paper with a barrier coat layer or vapor deposited layer.

Specific examples of metal foil include aluminum foil, copper foil, and stainless steel foil.

Specific examples of the inorganic material (metal) in the inorganic vapor deposited layer is aluminum.

Specific examples of the inorganic oxide of the inorganic vapor deposited layer (inorganic oxide vapor deposited layer) include silica, alumina, indium tin oxide, zinc oxide, tin oxide, titanium oxide, zirconium oxide, vanadium oxide, barium oxide, chromium oxide and the like, silicon nitride, and silicon carbide. Among them, silica and alumina are preferable.

<<Sealant layer>>

The sealant layer may be composed of one layer, or may have a multilayer structure of two or more layers in which the compositions are the same or different.

The sealant layer is a layer for heat sealing when forming the oxygen-absorbing coated package, and accordingly, preferably contains a resin having heat sealability.

In addition, the sealant layer may be stacked on the whole surface of the multilayer body, or may be stacked on a part of the surface, for example, only on a portion to be heat-sealed, which is a part coat or a part laminate.

In addition, it is preferable that the sealant layer contains a plant-derived polyolefin-based resin. However, the sealant layer may contain a fossil fuel-derived polyolefin-based resin.

The plant-derived polyethylene-based resin can be selected from those having a suitable density and MFR, according to physical properties of the fossil fuel-derived polyethylene-based resin which is used in combination, and the use of the sealant layer.

It is preferable that the content of the plant-derived polyolefin-based resin in the whole sealant layer is 40% by mass or more and 100% by mass or less. If the content is smaller than the above range, the biomass ratio of the sealant layer or the multilayer body becomes low, and an effect of reducing the environmental load results in becoming low.

It is preferable that a biomass ratio of the oxygen-absorbing multilayer body of the present invention is 10% or higher and 50% or lower. If the biomass ratio is smaller than the above range, the reduction in the environmental load is small, and if the biomass ratio is larger than the above range, a hand cutting property and a drop impact resistance of the multilayer body tend to be easily lowered.

In addition, it is preferable that the biomass ratio of the sealant layer is 10% or higher and 20% or lower. If the

biomass ratio is smaller than the above range, the reduction in the environmental load is small, and if the biomass ratio is larger than the above range, a hand cutting property and a drop impact resistance of the multilayer body tend to be easily lowered.

When the sealant layer has a multilayer structure, the sealant layer may include a layer which contains the plant-derived polyolefin-based resin and a layer which does not contain the plant-derived polyolefin-based resin. For example, it is preferable that a layer on an outer surface of the sealant layer, which is the outermost surface of the multilayer body, does not contain a plant-derived polyethylene-based resin. Furthermore, in the case where the sealant layer has a multilayer structure of three or more layers, as shown in Figure 4, it is preferable that a sealant layer 4a on the outer surface of the sealant layer, which is the outermost surface of the multilayer body, and a sealant layer 4a on an inner surface of the sealant layer which comes in contact with other layers do not contain a plant-derived polyethylene-based resin, and a sealant layer 4b in the inside of the sealant layer contains a plant-derived polyethylene-based resin.

When the oxygen-absorbing packaging container is formed, the sealant layer of the oxygen-absorbing lid part is heat-sealed to the bottom part, and when the contents are taken out from the oxygen-absorbing packaging container in which the contents have been accommodated, the sealant layer is peeled off from the lid part. Accordingly, it is preferable that the sealant layer has heat sealability with respect to the bottom part, and has easy openability (easy peelability).

In order to have the easy openability, it is preferable for the sealant layer to have an easy-peel layer as the outermost layer of the sealant layer, and further have a support layer for supporting the easy-peel layer.

The easy-peel layer can provide easy openability by, for example, cohesive failure and peeling at a sea-island interface of the easy-peel layer having a sea-island structure, and by having an appropriate adhesion strength.

In the case of the easy-peel layer having the sea-island structure, the easy-peel layer is a layer formed from a blend polymer which contains two or three or more resins incompatible with each other. In order to have heat sealability, it is preferable that the sea structure portion contains a resin having the heat sealability.

Here, blended polymers are not those which have been positively reacted with each other. In addition, because the resins are incompatible with each other, the sea-island structure is formed. Because the resins are incompatible and the bond at the sea-island interface is weak, the sea-island interface tends to easily cause peeling at the time of being peeled, and the easy peelability of the easy-peel layer as a whole can be provided.

In the case of the easy-peel layer having a moderate adhesion strength, it is preferable that the easy-peel layer is a heat-sealable resin having a moderate adhesion strength, or a blend of a resin having a high adhesion strength and a heat-sealable resin having a low adhesion strength. Furthermore, the adhesion strength can be adjusted by containing of a pressure-sensitive adhesive resin or a filler.

In addition, the type of resin to be blended and a blending ratio thereof can be adjusted according to the composition of the resin on the surface of the bottom part to be heat-sealed.

It is preferable that the above support layer for supporting the easy-peel layer contains a heat-sealable resin, in order to have the heat sealability.

The sealant layer having such easy peelability can be formed by stacking of known and publicly used easy-peel films.

In addition, the sealant layer may contain an arbitrary additive in such a range as not to significantly impair the effects of the present invention. Examples of the additives include various additives for resins, which are generally used for adjusting the moldability, productivity and various physical properties of the resin film, for example, an anti-blocking agent, a slip agent, an antioxidant, a pigment, a flow control material, a flame retardant, a filler, an ultraviolet absorber and a surfactant.

In the case of the oxygen-absorbing multilayer body or an oxygen-absorbing multilayer body for a lid part, a thickness of the sealant layer is preferably 10 $\mu$m to 200 $\mu$m, and more preferably 30 $\mu$m to 100 $\mu$m.

In the case of the oxygen-absorbing coated multilayer body, the thickness of the sealant layer is preferably 1 $\mu$m or thicker and 150 $\mu$m or thinner, and is more preferably 5 $\mu$m or thicker and 70 $\mu$m or thinner. In the case where the sealant layer is a part coat which uses a heat sealing agent, the thickness is more preferably 5 $\mu$m or thicker and 7 $\mu$m or thinner.

[Resin having heat sealability]

Resins having the heat sealability, which can be used, include; polyolefin-based resins; acid-modified polyolefin-based resins obtained by acid-modification of a polyolefin resin by graft polymerization or copolymerization with the use of an unsaturated carboxylic acid such as acrylic acid, methacrylic acid, maleic acid, maleic anhydride, fumaric acid and itaconic acid, and an anhydride thereof; and polyvinyl acetate-based resins, poly(meth)acrylic-based resins, polyvinyl chloride-based resins, and others. These resins can be used alone or in combination of two or more.

In the case of the oxygen-absorbing coated multilayer body, it is preferable to use a polyolefin-based resin among the above resins, from the viewpoint of adhesiveness, a manufacturing cost, and the like; and particularly preferable resins among the polyolefin-based resins are low-density polyethylene, straight-chain low-density polyethylene and the like.

For the polyolefin-based resin having the heat sealability or a raw material polyolefin-based resin of the acid-modified polyolefin-based resin, it is preferable to employ a plant-derived polyolefin-based resin. However, the above resins may contain a fossil fuel-derived polyolefin-based resin.

(Polyolefin-based resin)

Specific examples of the polyolefin-based resins include polyethylene, low-density polyethylene, medium-density polyethylene, high-density polyethylene, straight-chain (linear) low-density polyethylene, ethylene-α-olefin copolymer which has been polymerized with the use of a metallocene catalyst, polypropylene, ethylene-vinyl acetate copolymer, ethylene-vinyl alcohol copolymer, an ionomer resin, ethylene-acrylic acid copolymer, ethylene-ethyl acrylate copolymer, ethylene-methacrylic acid copolymer, ethylene-methyl methacrylate copolymer, ethylene-propylene copolymer, methylpentene (co)polymer, butene (co)polymer, ethylene-acrylic acid copolymer, ethylene-methacrylic acid copolymer, and cyclic olefin (co)polymers such as polynorbornene. The copolymers may be random or block copolymers.
The polyolefin-based resin is classified into, for example, a polyethylene-based resin or a polypropylene-based resin, according to a skeleton of a monomer which has been used for synthesis of the polyolefin; or may be a copolymer. In the present invention, the term "based resin" is added as a general term for various types, and, for example, a polyethylene-based resin is also used as a general term for various types of polyethylene.
In addition, polyolefins that are produced by polymerization of α-olefins such as ethylene, propene, 1-butene, 1,3-butadiene and 1-hexene which are used as raw materials are called as polyethylene-based resins, polypropylene-based resins, polybutylene-based resins, polybutadiene-based resins, and polyhexene-based resins, respectively.
As a polymerization method, for example, for a low-density polyethylene, a high-pressure method is generally used, and for a straight-chain low-density polyethylene, such polymerization methods are generally used as a low-pressure polymerization method (a gas-phase polymerization method using a Ziegler-Natta catalyst or a liquid-phase polymerization method using a metallocene catalyst), a slurry method, a solution method and a gas-phase polymerization method.
A plant-derived polyolefin-based resin can be used for a polyolefin-based resin having the heat sealability or a raw material polyolefin-based resin of the acid-modified polyolefin-based resin. However, a fossil fuel-derived polyolefin-based resin may be used in combination.
Due to the use of the plant-derived polyolefin-based resin, the environmental load can be reduced.
The plant-derived resins can be selected from those having a suitable density and MFR, according to physical properties of the fossil fuel-derived resin which is used in combination, and the use conditions of the multilayer body.
It is preferable that the content of the plant-derived polyolefin-based resin in the sealant layer is 40% by mass or more and 100% by mass or less. If the content is smaller than the above range, the effect of reducing the environmental load results in becoming low.
When the sealant layer has a multilayer structure, the sealant layer may include a layer which contains the plant-derived polyolefin-based resin and a layer which does not contain the plant-derived polyolefin-based resin. For example, it is preferable that a layer on an outer surface which is the outermost surface of the multilayer body, does not contain a plant-derived polyolefin-based resin. Furthermore, in the case where the sealant layer has a multilayer structure of three or more layers, it is preferable that the layers on both surfaces of the sealant layer do not contain a plant-derived polyolefin-based resin, and the inner layer contains a plant-derived polyolefin-based resin.
Whether the resin is classified into the fossil fuel-derived polyolefin-based resin or the plant-derived polyolefin-based resin is determined by an origin of a raw material monomer of the polyolefin-based resin.

(Fossil fuel-derived polyolefin-based resin)

In the present invention, the fossil fuel-derived polyolefin-based resin is a polyolefin-based resin that has been obtained by using a raw material monomer obtained by thermal decomposition of naphtha which is obtained from fossil fuels, as in the related art, without using a plant-derived raw material monomer.

(Plant-derived polyolefin-based resin)

In the present invention, the term "plant-derived" means that the resin contains carbon derived from a plant raw material, and for example, means that the resin is produced with the use of a compound obtained from plants as a raw material.
A method for producing the plant-derived polyolefin-based resin includes, for example: firstly, producing bioethanol by fermentation of a sugar solution or starch, any of which is obtained from plants such as sugarcane, corn and sweet potato, by a microorganism such as yeast according to a conventional method; and heating the bioethanol in the presence of a catalyst for intramolecular dehydration reaction or the like to obtain ethylene and an α-olefin (1-butene, 1-hexene, or the like).

Subsequently, the resultant as a raw material monomer for polymerization can be polymerized in the presence of a conventional catalyst in the same way as in the production of the fossil fuel-derived polyolefin-based resin, to thereby produce the plant-derived polyolefin-based resin. The catalyst and the polymerization method for the polymerization are similar to those for the fossil fuel-derived polyolefin-based resin.

It is also possible to use a fossil fuel-derived monomer in combination, for a part of the raw material monomer for polymerization or the copolymerizable monomer, as needed.

The above polyolefin-based resin can contain a fossil fuel-derived resin and/or a resin which has been synthesized with the use of a plant-derived raw material. By the plant-derived polyolefin-based resin being contained, which has been synthesized with the use of the plant-derived raw material, the environmental load can be reduced.

The plant-derived polyolefin-based resin can be selected from those having a suitable density and MFR, according to physical properties of the fossil fuel-derived polyolefin-based resin which is used in combination, and the use of the sealant layer.

It is preferable that the content of the plant-derived polyolefin-based resin in the sealant layer A or B is 40% by mass or more and 100% by mass or less. If the content is smaller than the above range, the biomass ratio of the sealant layer A or B or the multilayer body becomes low, and an effect of reducing the environmental load results in becoming low.

It is preferable that a biomass ratio of the oxygen-absorbing multilayer body of the present invention is 10% or higher and 50% or lower. If the biomass ratio is smaller than the above range, the reduction in the environmental load is small, and if the biomass ratio is larger than the above range, a hand cutting property and a drop impact resistance of the multilayer body tend to be easily lowered.

In addition, it is preferable that the biomass ratio of the sealant layer A or B is 10% or higher and 20% or lower. If the biomass ratio is smaller than the above range, the reduction in the environmental load is small, and if the biomass ratio is larger than the above range, the hand cutting property and the drop impact resistance of the multilayer body tend to be easily lowered.

When the sealant layer A or B has a multilayer structure, the sealant layer A or B may include a layer which contains the plant-derived polyolefin-based resin and a layer which does not contain the plant-derived polyolefin-based resin. For example, it is preferable that a layer on an outer surface of the sealant layer A or B, which is the outermost surface of the multilayer body, does not contain a plant-derived polyolefin-based resin. Furthermore, in the case where the sealant layer A or B has a multilayer structure of three or more layers, it is preferable that the layer on the outer surface, which is the outermost surface of the multilayer body, and a layer on an inner surface which comes in contact with other layers do not contain a plant-derived polyolefin-based resin, and the inner layer contains a plant-derived polyolefin-based resin.

The polyolefin-based resin is classified into, for example, a polyethylene-based resin or a polypropylene-based resin, according to a skeleton of a monomer which has been used for synthesis of the polyolefin; or may be a copolymer. In the present invention, the term "based resin" is added as a general term for various types, and, for example, a polyethylene-based resin is also used as a general term for various types of polyethylene.

In addition, polyolefins that are produced by polymerization of $\alpha$-olefins such as ethylene, propene, 1-butene, 1,3-butadiene and 1-hexene which are used as raw materials are called as polyethylene-based resins, polypropylene-based resins, polybutylene-based resins, polybutadiene-based resins, and polyhexene-based resins, respectively.

As a polymerization method, for example, for a low-density polyethylene, a high-pressure method is generally used, and for a straight-chain low-density polyethylene, such polymerization methods are generally used as a low-pressure polymerization method (a gas-phase polymerization method using a Ziegler-Natta catalyst or a liquid-phase polymerization method using a metallocene catalyst), a slurry method, a solution method and a gas-phase polymerization method.

[Biomass ratio]

The biomass ratio is an indicator of a mixing ratio between the fossil fuel-derived raw material and the plant-derived raw material (biomass); is determined by measurement of the concentration of radioactive carbon ($^{14}C$); and is represented by the following expression.

$$\text{Biomass ratio (\%)} = {}^{14}\text{C concentration (pMC)} \times 0.935$$

This $^{14}C$ is contained in a certain concentration in plant-derived raw materials, but does not almost exist in fossil fuels confined in the ground. Accordingly, the concentration of $^{14}C$ measured by accelerator mass spectrometry can be used as an indicator of the content of plant-derived raw materials in the multilayer body.

In the present invention, the concentration of $^{14}C$ in the sealant layer is measured by taking out the sealant layer as a sample to be measured, burning the sealant layer to generate carbon dioxide, collecting and purifying the carbon dioxide in a vacuum line, reducing the carbon dioxide with hydrogen while using iron as a catalyst, and producing graphite.

Then, the graphite is filled in a device dedicated to $^{14}C$-AMS (manufactured by NEC Corporation) based on a tandem accelerator; count of $^{14}C$, concentration ($^{13}C/^{12}C$) of $^{13}C$, and concentration ($^{14}C/^{12}C$) of $^{14}C$ are measured; a ratio of the concentration of $^{14}C$ of the sample carbon to the standard modern carbon is calculated from the measured values; and the biomass ratio of the whole multilayer body is calculated. As a standard sample, an oxalic acid standard sample ($HO_xII$) is used which is provided by National Institute of Standards and Technology (NIST).

[Method for forming sealant layer]

A method for forming the sealant layer is not particularly limited, and a conventionally known method for stacking sealant layers can be applied.

It is also acceptable to produce a sealant film formed of one layer or two or more layers for the sealant layer, in advance, and bond and stack the sealant films on another layer constituting the multilayer body, via an adhesive agent or the like. As for a method for producing the sealant film, it is also acceptable to melt-extrude one resin composition or two or more resin compositions, form the resultant compositions into a film by an inflation method; or to melt-extrude the compositions onto a roll, by an extrusion method which uses T-die molding or the like, narrow the resultant compositions, and form a film.

Here, it is preferable to subject one surface of the produced sealant film to corona treatment, place the corona-treated surface opposite to a side to be stacked, and bond and stack the surface onto the side to be stacked.

Alternatively, it is also acceptable to melt a resin composition for forming the sealant layer, melt-(co)extrude the resultant composition, allow the resultant composition to flow on a stacking target layer, and stack a sealant layer formed of one layer or multiple layers on another layer constituting the multilayer body, by an extrusion method that uses T-die molding or the like, which uses a feed block method or a multi-manifold method.

Furthermore, alternatively, a heat sealing agent containing an aqueous or organic solvent-based solvent may be applied onto a stacking target layer and then dried to form a sealant layer formed of one layer or multiple layers.

In any of the methods, a multilayer sealant film can be produced, or a sealant layer can be formed, with the use of resin compositions having the same or different compositions, and by the (co)melt-extrusion or the coating/drying. When the sealant layer is stacked on a part of the surface, not on the whole surface, the part coating is preferable which uses the above heat sealing agent.

<<Base material layer>>

As a material of the base material layer, for example, general materials can be used which are known and publicly used as a basic material constituting a pouch, a lid part of a packaging container or a package, and have excellent mechanical, physical, chemical and other properties, particularly, strength, toughness and heat resistance. Specifically, various resin films and/or paper substrates can be used, and the resin film and the paper substrate can be also used in combination.

The base material layer may be formed of one layer, or may be formed of a multilayer of two or more layers which have the same or different compositions and are stacked by arbitrary stacking means.

A thickness of the base material layer can be appropriately set by those skilled in the art, but for the purpose of imparting appropriate strength and stiffness to the multilayer body, it is preferable for the thickness of the base material layer to be 5 μm to 100 μm, is more preferable to be 10 μm to 50 μm, and is further preferable to be 12 μm to 25 μm.

The base material layer may be integrated with an oxygen barrier layer in advance; and may be, for example, a resin film with an inorganic vapor deposited layer, or barrier paper such as a paper substrate with the oxygen barrier layer.

(Resin film)

In the case of the oxygen-absorbing multilayer body or the oxygen-absorbing multilayer body for a lid part, specific examples of the resin film include resin films that have been produced with the use of tough thermoplastic resins which include: polyester-based resins such as polyethylene terephthalate (PET) and polyethylene naphthalate; polyolefin-based resins such as polypropylene; polyamide-based resins such as nylon; and polyaramid-based resin, a polycarbonate-based resins, polyacetal-based resins, fluorine-based resins, and others.

In the case of the oxygen-absorbing coated multilayer body, examples of the specific resins constituting the resin film include resin films produced with the use of tough thermoplastic resins which include: polyester-based resins such as polyethylene terephthalate (PET), polybutylene terephthalate (PBT), and polyethylene naphthalate (PNT); polyolefin-based resins such as polyethylene-based resins (low-density polyethylene (LDPE) or straight-chain low-density polyethylene (LLDPE) and the like), polypropylene-based resins, polybutene-based resins, and cyclic polyolefin resins; polyamide-based resins such as nylon; polyaramid-based resins, polyimide-based resins, polyamide-imide-based resins, and polyurethane-based resins; sulfone-based resins such as polysulfone-based resins, polyphenylene sulfide-based

resins, and polyethersulfone-based resins; polycarbonate-based resins, polyacetal-based resins, a cellulose-based resin, polyvinyl chloride, and polyvinylidene chloride; nitrile-based resins such as acrylonitrile-styrene copolymer (AS resin) and acrylonitrile-butadiene-styrene copolymer (ABS resin); and poly(meth)acrylic-based resins, polystyrene-based resins, polyarylphthalate-based resins, silicone-based resins, fluorine-based resins and others.

In addition, for the above resin films, any of an unstretched film, a stretched film which is stretched in a uniaxial direction or a biaxial direction, and the like, can be used.

In the case of the oxygen-absorbing multilayer body or the oxygen-absorbing multilayer body for a lid part, among the above, a biaxially stretched PET film and a biaxially stretched polypropylene film are preferably used.

In the present invention, in the case of the oxygen-absorbing coated multilayer body, a biaxially stretched polyethylene terephthalate film, a biaxially stretched nylon film, a polyacrylonitrile film, an ethylene-vinyl alcohol copolymer film, a non-stretched polypropylene (CPP), a low-density polyethylene (LDPE) film, a straight-chain low-density polyethylene (LLDPE) film and the like, any of which can be bonded by heat sealing or an adhesive agent, are preferred; and a biaxially stretched PET film and a biaxially stretched nylon film are particularly preferably used.

The resin that is used for the above resin film can contain a fossil fuel-derived resin and/or a resin which is synthesized with the use of a plant-derived raw material. By the plant-derived resin which has been synthesized with the use of the plant-derived raw material being contained, the environmental load can be reduced.

The plant-derived resins can be selected from those having a suitable density and MFR, according to physical properties of the fossil fuel-derived resin which is used in combination, and the use of the base material layer.

It is preferable that the content of the plant-derived resin in the resin film is 40% by mass or more and 100% by mass or less. If the content is smaller than the above range, the biomass ratio of the base material layer or the multilayer body becomes low, and an effect of reducing the environmental load results in becoming low.

When a layer formed of the resin film of the base material layer has a multilayer structure, the layer formed of the resin film of the base material layer may include a layer which contains the plant-derived resin and a layer which does not contain the plant-derived resin. For example, it is preferable that a layer on an outer surface which is the outermost surface of the multilayer body, does not contain a plant-derived resin. Furthermore, in the case where the layer formed of the resin film of the base material layer has a multilayer structure of three or more layers, it is preferable that the layer on the outer surface, which is the outermost surface of the multilayer body, and a layer on an inner surface which comes in contact with other layers do not contain a plant-derived resin, and the inner layer contains a plant-derived resin.

(Paper substrate)

In the case of the oxygen-absorbing multilayer body or the oxygen-absorbing multilayer body for a lid part, the paper substrate can impart shaping properties, bending resistance, rigidity and the like; and can employ, for example, a strong sizing bleached or unbleached paper substrate for a paper layer, or a paper substrate such as pure white rolled paper, kraft paper, paperboard, coated paper, processed paper, milk base paper, or others.

In the case of the oxygen-absorbing multilayer body, it is preferable for a basis weight of the paper substrate to be about 30 g/$m^2$ to 600 g/$m^2$, and is more preferable to be about 50 g/$m^2$ to 450 g/$m^2$.

In the case of the oxygen-absorbing multilayer body for a lid part, it is preferable for a basis weight of the paper substrate to be about 30 g/$m^2$ to 600 g/$m^2$, and is more preferable to be about 30 g/$m^2$ to 150 /$m^2$.

In the case of the oxygen-absorbing coated multilayer body, various known materials can be used for the paper substrate (base paper), and various types of paper can be used, for example, such as strong sizing bleached or unbleached paper, pure white rolled paper, high-quality paper, medium-quality paper, coated paper, one side gloss paper, kraft paper, one side gloss kraft paper, bleached kraft paper, glassine paper, paperboard, processed paper, white board paper, liner, milk base paper, and barrier coated paper.

It is preferable for a basis weight of the paper substrate to be 25 g/$m^2$ or more and 400 g/$m^2$ or less, and is more preferable to be 30 g/$m^2$ or more and 110 g/$m^2$ or less. When the basis weight is within this range, the paper substrate is suitable for packaging applications such as packaging materials, containers, and cups for foods and the like, and is particularly suitable for soft packaging applications.

The paper substrate may be a laminate in which a plurality of these papers are overlapped.

In addition, in order to enhance the adhesiveness with an adjacent layer, the surface of the paper substrate may be subjected to physical surface treatment such as corona discharge treatment, ozone treatment, plasma treatment, glow discharge treatment, or sand blast treatment, or chemical surface treatment such as chemical treatment or oxidation treatment with the use of a chemical agent, as needed.

Examples of specific chemical agents to be used in the chemical treatment include oxidized starch, hydroxyethyl etherified starch, enzyme-modified starch, polyacrylamide, polyvinyl alcohol, a surface sizing agent, a water resistant agent, a water retention agent, a thickener, and a lubricant; and these can be used singly or two or more thereof may be mixed and used.

The above various chemical agents may be used by being mixed with a pigment.

As for the pigment, inorganic pigments such as kaolin, clay, engineered kaolin, delaminated clay, heavy calcium carbonate, light calcium carbonate, mica, talc, titanium dioxide, barium sulfate, calcium sulfate, zinc oxide, silicic acid, silicate, colloidal silica, and satin white; and organic pigments of solid type, hollow type, core-shell type, and the like, can be used singly or two or more thereof can be mixed and used.

The method of the surface treatment of the paper substrate is not particularly limited, and a known coating apparatus can be used such as a rod metering size press, a pond size press, a gate roll coater, a spray coater, a blade coater and a curtain coater.

The method for producing (papermaking) the paper substrate is not particularly limited, and the paper substrate can be produced by performing papermaking by an acidic papermaking method, a neutral papermaking method, or an alkaline papermaking method, with the use of a known Fourdrinier former, on-top hybrid former, gap former machine, or the like.

The paper substrate is produced from pulp, and may contain a filler, various auxiliaries, and the like.

Examples of usable pulp include: chemical pulp such as broadleaf bleached kraft pulp (LBKP), broadleaf unbleached kraft pulp (LUKP), conifer bleached kraft pulp (NBKP), conifer unbleached pulp (NUKP), and sulfite pulp; mechanical pulp such as stone grind pulp and thermomechanical pulp; wood fiber such as deinked pulp and waste paper pulp; and non-wood fiber obtained from kenaf, bamboo and hemp. These may be used singly, or two or more thereof may be appropriately mixed and used.

Among these, it is preferable to use chemical pulp and mechanical pulp of wood fiber, and it is more preferable to use chemical pulp, because of being less contaminated with foreign matter, less discolored with time, and have high whiteness and satisfactory surface feeling at the time of printing.

As the filler, known fillers can be used. Specific examples thereof include white carbon, talc, kaolin, clay, heavy calcium carbonate, light calcium carbonate, titanium oxide, zeolite, and synthetic resin fillers.

Various additives can be used as needed which include: internal auxiliary agents for papermaking such as aluminum sulfate, various anionic, cationic, nonionic or amphoteric yield improving agents, drainage improving agents, paper strength enhancing agents and internal sizing agents. Furthermore, dyes, fluorescent whitening agents, pH adjusting agents, antifoaming agents, pitch control agents, slime control agents and the like can be also added as needed.

Furthermore, plastic compounding agents or additives can be added as needed such as a lubricant, a crosslinking agent, an antioxidant, an ultraviolet absorber, a light stabilizer, a filler, a reinforcing agent, an antistatic agent and a pigment, for the purpose of improving or modifying processability, heat resistance, weather resistance, mechanical properties, dimensional stability, antioxidation properties, slip properties, mold release properties, flame retardancy, antifungal properties, electrical properties, strength and the like. The amount thereof to be added can be freely selected according to the purpose, in such a range as not to adversely affect other properties.

To the resin film to be used for the base material layer, plastic compounding agents or additives can be added as needed such as a lubricant, a crosslinking agent, an antioxidant, an ultraviolet absorber, a light stabilizer, a filler, a reinforcing agent, an antistatic agent and a pigment, for the purpose of improving or modifying processability, heat resistance, weather resistance, mechanical properties, dimensional stability, antioxidation properties, slip properties, mold release properties, flame retardancy, antifungal properties, electrical properties, strength and the like. The amount thereof to be added can be freely selected according to the purpose, in such a range as not to adversely affect other properties.

The base material layer can be stacked on another layer via an adhesive layer. Furthermore, in order to strengthen the adhesion strength between the base material layer and the adhesive layer, the surface of the base material layer on the side in contact with the adhesive agent can be subjected to physical surface treatment such as corona discharge treatment, ozone treatment, plasma treatment, glow discharge treatment, or sand blast treatment, or chemical surface treatment such as oxidation treatment with the use of a chemical agent, in advance, as needed.

<<Printed layer>>

The printed layer visually shows a design pattern such as characters, numerals, figures, symbols, pictures, patterns and the like, for example, for decoration, indication of contents, indication of a best-before date, indication of a manufacturer, a seller and the like, and for imparting beauty; and a desired design pattern can be formed.

In order that the printed layer can be visually identified, it is preferable that the printed layer becomes the outermost layer when the package is formed, or that a layer outside the printed layer is transparent.

In the case of the oxygen-absorbing multilayer body or the oxygen-absorbing multilayer body for a lid part, it is preferable to form the printed layer on one side or both sides of the base material layer, by a printing method such as a gravure printing method and a flexographic printing method. The printed layer may be provided on the whole surface to be printed, or may be provided on a part.

When the printed layer is formed inside the oxygen-absorbing multilayer body or the oxygen-absorbing multilayer body for a lid part, the adhesiveness of the printed layer can be improved, and it can be suppressed that the ink rubbing,

peeling and the like of the printed layer occur due to an impact or friction given from the outside.
In the case of the oxygen-absorbing coated multilayer body, the printed layer can be provided, for example, on the surface of the paper substrate layer which is to be the outside of the package, with the use of a conventionally known printing ink. The printing method is not particularly limited, and a conventionally known method can be used such as gravure printing, flexographic printing and screen printing. The printed layer may be provided on the whole surface to be printed, or may be provided on a part.

<<General-purpose adhesive layer, adhesive resin layer>>

A general-purpose adhesive layer (adhesive resin layer) or an anchor coat layer can be included between each layer constituting the oxygen-absorbing multilayer body, the oxygen-absorbing multilayer body for lid part, or the oxygen-absorbing coated multilayer body.
The adhesive resin layer may be a layer (extruded resin layer) which has been formed by, for example, a (co) extrusion lamination method in which an adhesive resin composition is melt-extruded, or a T-die (co)extrusion method; or may be a layer (dry lamination layer) which has been formed by dry lamination that uses a dry lamination adhesive agent.
In addition, the surface of the adhesive resin layer, which is stacked extruded resin layers, may be subjected to physical surface treatment such as corona discharge treatment, ozone treatment, plasma treatment, glow discharge treatment, or sand blast treatment, or chemical surface treatment such as oxidation treatment with the use of a chemical agent, as needed.
Resins contained in the above adhesive resin composition, which can be used, for example, include; polyolefin-based resins; acid-modified polyolefin-based resins obtained by acid-modification of a polyolefin resin by graft polymerization or copolymerization with the use of an unsaturated carboxylic acid such as acrylic acid, methacrylic acid, maleic acid, maleic anhydride, fumaric acid and itaconic acid, and an anhydride thereof; and polyvinyl acetate-based resins, poly(meth)acrylic-based resins, polyvinyl chloride-based resins, and others. These resins can be used alone or in combination of two or more.
Specific examples of the polyolefin-based resins include polyethylene, low-density polyethylene, medium-density polyethylene, high-density polyethylene, straight-chain (linear) low-density polyethylene, ethylene-$\alpha$-olefin copolymer which has been polymerized with the use of a metallocene catalyst, polypropylene, ethylene-vinyl acetate copolymer, ethylene-vinyl alcohol copolymer, an ionomer resin, ethylene-acrylic acid copolymer, ethylene-ethyl acrylate copolymer, ethylene-methacrylic acid copolymer, ethylene-methyl methacrylate copolymer, ethylene-propylene copolymer, methylpentene (co)polymer, butene (co)polymer, polyisoprene, ethylene-acrylic acid copolymer, ethylene-methacrylic acid copolymer, and cyclic olefin (co)polymers such as polynorbornene. The copolymers may be random or block copolymers.
The polyolefin-based resin is classified into, for example, a polyethylene-based resin or a polypropylene-based resin, according to a skeleton of a monomer which has been used for synthesis of the polyolefin; or may be a copolymer. In the present invention, the term "based resin" is added as a general term for various types, and, for example, a polyethylene-based resin is also used as a general term for various types of polyethylene.
In addition, polyolefins that are produced by polymerization of $\alpha$-olefins such as ethylene, propene, 1-butene, 1,3-butadiene and 1-hexene which are used as raw materials are called as polyethylene-based resins, polypropylene-based resins, polybutylene-based resins, polybutadiene-based resins, and polyhexene-based resins, respectively.
The adhesive resin layer can contain additives such as an antioxidant, an ultraviolet absorber, a light stabilizer, an antistatic agent, an anti-blocking agent, a flame retardant, a crosslinking agent, and a colorant, in such a range as not to impair the characteristics of the present invention.
In the case of the oxygen-absorbing multilayer body or the oxygen-absorbing multilayer body for a lid part, a thickness of the adhesive layer is not particularly limited, but is preferably 1 g/$m^2$ or thicker and 20 g/$m^2$ or thinner, or 1 $\mu$m or thicker and 20 $\mu$m or thinner. By the thickness of the extruded resin layer being set to the above numerical range, a stable adhesion strength can be obtained.
In the case of the oxygen-absorbing coated multilayer body, the thickness of the adhesive resin layer is not particularly limited; but is preferably 5 $\mu$m or thicker and 60 $\mu$m or thinner, in the case of the extruded resin; and is preferably 0.1 g/$m^2$ or thicker and 20 g/$m^2$ or thinner, in the case of the dry laminate adhesive agent. By the thickness of the adhesive resin layer being set to the above numerical range, the stable adhesion strength can be obtained.
In addition, specific examples of the dry lamination adhesive agent constituting the adhesive resin layer formed by dry lamination, which can be used, include a two-component curing type urethane-based adhesive agent, a polyester urethane-based adhesive agent, a polyether urethane-based adhesive agent, an acrylic-based adhesive agent, a polyester-based adhesive agent, a polyamide-based adhesive agent, a polyvinyl acetate-based adhesive agent, an epoxy-based adhesive agent, and a rubber-based adhesive agent.
The anchor coat layer is a layer that is formed by applying and drying an anchor coating agent, and can improve an adhesion between adjacent layers.

Examples of the anchor coating agent include anchor coating agents which are formed from an arbitrary resin having a heat resistant temperature of 135°C or higher, such as a vinyl-modified resin, an epoxy resin, a urethane resin, a polyester resin, and polyethylene imine.
Among the above, a curable anchor coating agent is particularly preferable which contains a polyacrylic-based or polymethacrylic-based resin having two or more hydroxyl groups (polyol) in one molecule as a main agent, and an isocyanate compound as a curing agent.
In addition, a silane coupling agent may be used in combination, and nitrocellulose may be used in combination in order to increase heat resistance.
A thickness of the anchor coat layer is not particularly limited, but is preferably, for example, 0.05 μm or thicker and 1 μm or thinner.

<<Functional layer>>

Examples of the functional layer include: a layer formed from a resin which adsorbs little perfume components and the like contained in the contents to be filled and packaged, has an adequate aroma retention property and the like, further has such a property as not to generate a change in taste, an offensive odor and the like, and can be extruded; and a layer formed from a light-shielding material (light-shielding layer). The functional layer may have barrier properties against oxygen gas, water vapor and the like.
Specific examples of the above usable resin include: polyacrylic-based resins, polymethacrylic-based resins, polyacrylonitrile-based resins, polymethacrylonitrile-based resins, polystyrene-based resins, and polycarbonate-based resins; a polyethylene terephthalate-based resin, or a resin obtained by copolymerizing or modifying a part of an ethylene component and/or a terephthalate component thereof with another di- or higher-polyhydric alcohol component or dicarboxylic acid component; or a polyester-based resin such as a polyethylene naphthalate-based resin; and polyamide-based resins, a saponified product of ethylene-vinyl acetate copolymer, polyvinyl alcohol-based resins, polyvinyl chloride-based resins, polyvinylidene chloride-based resins, and others.
Among the above resins, it is preferable to use a resin having aroma retention properties and barrier properties against oxygen gas, water vapor and the like; and specifically, it is preferable to use, for example, a resin which has adequate aroma retention properties, barrier properties and the like, and is formed from a saponified product of ethylene-vinyl acetate copolymer, a polyamide-based resin, a polyacrylonitrile-based resin, or a polyester-based resin.
The light-shielding layer is a layer provided so as to prevent ultraviolet rays and/or visible light, from reaching the contents.
The light-shielding layer can be formed with the use of white ink that contains titanium oxide or the like as a main component, black ink that contains carbon black or the like as a main component, gray ink that contains aluminum paste as a main component, a resin film that is colored with a coloring agent which is light-shielded by addition of a pigment, a dye or the like, a metal foil, a metal vapor deposited film, and the like.
When the metal foil such as an aluminum foil is used as the barrier layer, as described above, the barrier layer can also serve as the light-shielding layer.
These light-shielding materials can be used singly or in combination of two or more types thereof.
It is preferable for a thickness of the light-shielding layer to be 4 μm or thicker and 12 μm or thinner, and is more preferable to be 5 μm or thicker and 9 μm or thinner, in the case where white ink, black ink or gray ink has been used.
It is preferable for the above thickness to be 5 μm to 30 μm, in the case of the aluminum foil; is preferable to be 50 Å to 3000 Å, and is more preferable to be 100 Å to 1000 Å, in the case of the metal vapor deposited film; and is preferable to be 5 μm to 300 μm, and is more preferable to be 10 μm to 100 μm, in the case of the resin film that is colored with a coloring agent.

<<Reinforcing layer>>

The reinforcing layer is a layer that imparts a mechanical strength, a deformation resistance, a drop impact resistance, a pinhole resistance, a heat resistance, sealability, quality maintainability, workability, hygiene and the like, to the multilayer body, as an intermediate layer.
The reinforcing layer may be formed of any of a resin film which has been formed by extrusion film formation or inflation film formation, a resin coating film, synthetic paper and the like.
Specific examples of the resins contained in the reinforcing layer, which can be used, include known resins that include: low-density polyethylene, medium-density polyethylene, high-density polyethylene, linear low-density polyethylene, polypropylene, an ethylene-propylene copolymer, an ethylene-vinyl acetate copolymer, an ionomer resin, an ethylene-ethyl acrylate copolymer, an ethylene-acrylic acid or methacrylic acid copolymer, methylpentene polymer, a polybutene-based resin, a polyvinyl chloride-based resin, a polyvinyl acetate-based resin, a polyvinylidene chloride-based resin, vinyl chloride-vinylidene chloride copolymer, a poly(meth)acrylic-based resin, a polyacrylonitrile-based resin,

a polystyrene-based resin, an acrylonitrile-styrene copolymer (AS-based resin), an acrylonitrile-butadiene-styrene copolymer (ABS-based resin), a polyester-based resin, a polyamide-based resin, a polycarbonate-based resin, a polyvinyl alcohol-based resin, saponified products of an ethylene-vinyl acetate copolymer, a fluorine-based resin, a diene-based resin, a polyacetal-based resin, a polyurethane-based resin, cellulose, nitrocellulose, and others.

In the present invention, in the case of the oxygen-absorbing coated multilayer body, it is preferable to use the polyester-based resin for the reinforcing layer.

Examples of the polyester-based resins include polyethylene terephthalate (PET), polyethylene naphthalate (PEN), polybutylene terephthalate (PBT), polybutylene naphthalate (PBN), polytetramethylene terephthalate, and polycyclohexane dimethylene terephthalate (PCT).

In addition, in the case where it is desired to improve a puncture resistance of the multilayer body, it is preferable to have a reinforcing layer formed of a polyamide (nylon) film.

The above resins can contain a resin which has been synthesized with the use of a fossil fuel-derived resin and/or a plant-derived raw material. By the plant-derived resin which has been synthesized with the use of the plant-derived raw material being contained, the environmental load can be reduced.

The plant-derived resins can be selected from those having a suitable density and MFR, according to physical properties of the fossil fuel-derived resin which is used in combination, and the use of the reinforcing layer.

It is preferable that the content of the plant-derived resin in the reinforcing layer is 40% by mass or more and 100% by mass or less. If the content is smaller than the above range, the biomass ratio of the reinforcing layer or the multilayer body becomes low, and an effect of reducing the environmental load results in becoming low.

When the reinforcing layer has a multilayer structure, the reinforcing layer may include a layer which contains a plant-derived resin and a layer which does not contain a plant-derived resin. For example, it is preferable that a layer on an outer surface which is the outermost surface of the multilayer body, does not contain a plant-derived resin. Furthermore, in the case where the reinforcing layer has a multilayer structure of three or more layers, it is preferable that the layers on both surfaces of the reinforcing layer do not contain a plant-derived resin, and the inner layer contains a plant-derived resin.

In addition, for the above resin films, any of an unstretched film, a stretched film which is stretched in a uniaxial direction or a biaxial direction, and the like, can be used.

The reinforcing layer may be provided with a vapor deposited film for the purpose of improving barrier properties, and in addition, the reinforcing layer can contain additives such as an antioxidant, an ultraviolet absorber, a light stabilizer, an antistatic agent, an anti-blocking agent, a flame retardant, a crosslinking agent, and a colorant, in such a range as not to impair the characteristics of the present invention.

In the case of the oxygen-absorbing multilayer body or the oxygen-absorbing multilayer body for a lid part, a thickness of the reinforcing layer is not particularly limited, but can be selected from a range of about several μm to 300 μm to be used.

In the case of the oxygen-absorbing coated multilayer body, the thickness of the reinforcing layer is not particularly limited; but is preferably 5 μm or thicker and 500 μm or thinner, and is more preferably 10 μm or thicker and 200 μm or thinner.

<<Method for producing oxygen-absorbing multilayer body, oxygen-absorbing multilayer body for lid part, and oxygen-absorbing coated multilayer body>>

A method for producing the oxygen-absorbing multilayer body, the oxygen-absorbing multilayer body for a lid part, and the oxygen-absorbing coated multilayer body, with the use of the materials as described above will be described. The following production method is one example, and does not limit the present invention.

Each layer constituting the oxygen-absorbing multilayer body, the oxygen-absorbing multilayer body for a lid part or the oxygen-absorbing coated multilayer body can be stacked by an arbitrary method including: a laminating method which is used when a usual packaging material is produced, for example, such as a wet lamination method, a dry lamination method, a solventless dry lamination method, an extrusion lamination method, a T-die coextrusion molding method, a coextrusion lamination method, and an inflation method; and others.

The oxygen-absorbing multilayer body, the oxygen-absorbing multilayer body for a lid part, or the oxygen-absorbing coated multilayer body of the present invention can be subjected to secondary processing, for the purpose of imparting surface functions such as chemical functions, electrical functions, magnetic functions, mechanical functions, friction/abrasion/lubrication functions, optical functions, thermal functions and biocompatibility.

Examples of the secondary processing include embossing, painting, bonding, printing, metallizing (plating or the like), machining, and surface treatment (antistatic treatment, corona discharge treatment, plasma treatment, photochromism treatment, physical vapor deposition, chemical vapor deposition, coating, or the like). In addition, the multilayer body of the present invention can be subjected to lamination processing (dry lamination or extrusion lamination), bag-making, and other post-treatment processes.

In addition, when the above-described stacking is performed, the surface of each layer can be subjected to

pretreatment such as corona treatment and ozone treatment, if necessary. In addition, for example, anchor coating agents such as isocyanate-based (urethane-based), polyethyleneimine-based, polybutadiene-based and organic titanium-based, or anchor coating agents such as polyurethane-based, polyacrylic-based, polyester-based, epoxy-based, polyvinyl acetate-based, cellulose-based and other laminating adhesive agents can be arbitrarily used.

(Production of oxygen-absorbing multilayer body)

When the oxygen-absorbing multilayer body is produced, as long as the oxygen barrier layer, the oxygen-absorbing adhesive layer, and the sealant layer are stacked in this order, the order of forming and stacking the respective layers may be arbitrary.

For example, an example of the case will be described in which an oxygen-absorbing multilayer body is produced that has a layered configuration of base material layer/oxygen barrier layer/printed layer/oxygen-absorbing adhesive layer/sealant layer.

For example, firstly, a non-inorganic vapor deposited layer side of the resin film with an inorganic vapor deposited layer, which has an inorganic vapor deposited layer on one surface as the oxygen barrier layer, is opposed to one surface of the resin film serving as the base material layer, and is bonded thereto via an adhesive agent or the like. Then, the printed layer is formed on the surface of the inorganic vapor deposited layer by gravure printing or the like.

Subsequently, an oxygen-absorbing adhesive composition is applied onto the printed layer, and is dried to form an oxygen-absorbing adhesive layer; and a sealant film for a sealant layer is bonded and stacked thereon.

Then, aging treatment is performed as needed.

In this way, an oxygen-absorbing multilayer body can be obtained.

(Production of oxygen-absorbing multilayer body for lid part)

When the oxygen-absorbing multilayer body for a lid part is produced, as long as the base material layer, the oxygen barrier layer, the oxygen-absorbing adhesive layer, and the sealant layer are stacked in this order, the order of forming and stacking the respective layers may be arbitrary.

For example, an example of the case will be described in which the oxygen-absorbing multilayer body for a lid part is produced that has a layered configuration of base material layer/printed layer/oxygen barrier layer/oxygen-absorbing adhesive layer/sealant layer.

For example, firstly, the printed layer is formed on a corona-treated surface of the base material layer, and then the oxygen barrier layer is formed on the printed layer.

Next, the oxygen-absorbing adhesive composition is applied to the stacked oxygen barrier layer, and is dried as needed; and thereby, the oxygen-absorbing adhesive layer is formed.

Then, the sealant film for the sealant layer is bonded onto the oxygen-absorbing adhesive layer to form the sealant layer.

Then, aging treatment is performed as needed.

In this way, an oxygen-absorbing multilayer body for a lid part can be obtained.

(Production of oxygen-absorbing coated multilayer body)

When the oxygen-absorbing coated multilayer body is produced, the order of forming and stacking the base material layer, the oxygen barrier layer and the oxygen-absorbing coat layer may be arbitrary.

An example of a method for producing the oxygen-absorbing coated multilayer body will be described below.

For example, in the case where the oxygen-absorbing coated multilayer body has a layer structure of base material layer/oxygen barrier layer/oxygen-absorbing coat layer, and the base material layer/oxygen barrier layer is formed of a resin film with an inorganic vapor deposited layer, an oxygen-absorbing coating agent is applied to the inorganic vapor deposited layer surface of the resin film with an inorganic vapor deposited layer, and is dried; and thereby, the oxygen-absorbing coated multilayer body can be obtained.

For example, in the case where the oxygen-absorbing coated multilayer body has a layer structure of base material layer/oxygen barrier layer/oxygen-absorbing coat layer, and the base material layer/oxygen barrier layer is formed of barrier paper (layer structure: base paper/water-vapor barrier resin layer/oxygen barrier resin layer), firstly, the surface of the barrier paper on the oxygen barrier resin layer side is subjected to corona treatment, and subsequently, an oxygen-absorbing coating agent is applied to the corona-treated surface, and is dried; and thereby, the oxygen-absorbing coated multilayer body can be obtained.

Furthermore, a heat sealing agent is applied to the surface of the oxygen-absorbing coat layer of the oxygen-absorbing coated multilayer body obtained in the above, by part coating, and is dried; and the oxygen-absorbing coated multilayer body can be obtained which has a layer structure of base material layer/oxygen barrier layer/oxygen-absorbing

coat layer/sealant layer.

The oxygen-absorbing coated multilayer body obtained in the above may be subjected to aging treatment as needed.

In this way, the oxygen-absorbing coated multilayer body can be obtained.

<<Oxygen-absorbing packaging material>>

The oxygen-absorbing packaging material is a packaging material produced from the oxygen-absorbing multilayer body of the present invention.

The oxygen-absorbing packaging material may further include layers having various functions, as needed.

<<Oxygen-absorbing pouch>>

The oxygen-absorbing pouch is a pouch produced from an oxygen-absorbing packaging material, is one form of the oxygen-absorbing package, and has a bag-like shape; and may be a packaging bag of various forms. In addition, an added value can be imparted by various shape designs and print decorations to the oxygen-absorbing pouch.

The pouch can be produced with a small amount of materials as compared to a bottle, and is effective in saving resources. In addition, the oxygen-absorbing pouch produced with the use of a conventional iron-based oxygen-absorbing film is colored deeply, and the contents cannot be visually recognized; and the contents cannot be inspected with the use of a metal detector or the like, and cannot be heated in a microwave oven. In contrast to this, the oxygen-absorbing pouch of the present invention can be produced so as to be colorless and transparent, and the contents can be inspected with the use of a metal detector or the like, and can be heated in a microwave oven.

The oxygen-absorbing pouch can be produced by bending of the oxygen-absorbing packaging material, or by folding of the packaging material in such a way as to wrap the contents, or by heat-sealing of the packaging material.

The oxygen-absorbing pouch can be produced into various shapes of oxygen-absorbing pouches, for example, by operations of: folding the oxygen-absorbing packaging material into two, or preparing two sheets of the oxygen-absorbing packaging material, and overlapping faces of the sealant layers thereof so as to oppose to each other; and further heat-sealing the peripheral end portions thereof, according to a heat-sealed form, for example, such as a side-sealing form, a two-side sealing form, a three-side sealing form, a four-side sealing form, an envelope-sealing form, a butt-sealing form (pillow-sealing form), a pleat-sealing form, a flat-bottom sealing form, a square-bottom sealing form, or a gusset form.

In the above, the heat sealing can be performed by a known method, for example, such as bar sealing, rotary roll sealing, belt sealing, impulse sealing, high-frequency sealing, and ultrasonic sealing.

The pouch can have airtightness suitable for retort treatment and accommodation of electronic parts, by being sealed by heat sealing. In addition, it is possible for the pouch to enhance convenience of taking in and out and storage of the contents, by being provided with a chuck or a spout.

Specific examples of the shape of the oxygen-absorbing pouch include: a flat pouch having a planar shape and a gusset type pouch in which the bottom of the bag, for example, is expanded in a square shape and can stand by itself, which are basic shapes; a refilling pouch, a pouch for retort, a pouch for microwave oven, a pouch for liquid packet, a pouch for bag-in-box, a pouch for infusion solution bag, and a pouch for stick packaging; a pouch with spout, in which the spout is attached to the center of the upper part or the corner of the upper part of the bag; and an exterior pouch for electronic parts.

<<Method for producing oxygen-absorbing pouch>>

The oxygen-absorbing pouch can be produced into various shapes of oxygen-absorbing pouches, for example, by operations of: folding the oxygen-absorbing packaging material into two, or preparing two sheets of the oxygen-absorbing packaging material, and overlapping faces of the sealant layers thereof so as to oppose to each other; and further heat-sealing the peripheral end portions thereof, according to a heat-sealed form, for example, such as a side-sealing form, a two-side sealing form, a three-side sealing form, a four-side sealing form, an envelope-sealing form, a butt-sealing form (pillow-sealing form), a pleat-sealing form, a flat-bottom sealing form, a square-bottom sealing form, or a gusset form.

In the above, the heat sealing can be performed by a known method, for example, such as bar sealing, rotary roll sealing, belt sealing, impulse sealing, high-frequency sealing, ultrasonic sealing and flame sealing.

A method for producing an oxygen-absorbing pouch will be described by taking a refill pouch 100 shown in Figure 4 as an example, which is a self-supporting pouch.

The wall surface films 11 and 11' and the bottom film may be the same oxygen-absorbing packaging material of the present invention, or may also be different oxygen-absorbing packaging materials.

Firstly, a gusset portion 14 is formed by operations of: folding back bottom films inward and inserting the bottom

films in between lower portions of wall surface films 11 and 11' up to a bottom film folded portion 12; and heat-sealing the folded bottom portion at a bottom sealed portion 15 which has such a ship bottom shape that the inside is recessed in a curved line shape from both sides to a central portion.

Next, a body portion is formed by an operation of heat-sealing the end edge portions on both sides of the front and rear wall surface films 11 and 11' at side sealed portions 16a and 16b.

Then, a narrow spout portion 20 which is tapered and faces obliquely upward and outward is formed by an operation of heat-sealing an outer periphery of one corner portion (a corner portion on a left side in the figure) of the upper portion of the pouch 100 at a spout portion sealed portion 17.

Here, the upper sealed portion 18 that is a portion in which the spout portion 20 is not provided, among the upper portion of the pouch 100, is used as a filling port for the contents, accordingly, is determined to be an unsealed opening portion before the contents are filled, and is heat-sealed after the contents have been filled.

Subsequently, a cut out portion or a half-cut line is provided in each portion.

Cut out portions 19a and 19b are provided on both sides of the spout portion 20, and the spout portion 20 is formed into a protruding shape; and at a position to be unsealed on the tip side of the spout portion 20, a half-cut line 21 and a notch 22 at the upper end portion thereof are provided as easily openable mean.

The half-cut lines 21 are shown as three parallel lines in the figure, but can be provided in a form of an arbitrary number of the lines and shape. Examples thereof include: one line, two parallel lines, and a plurality of parallel lines such as one to three lines on both sides of the center half-cut line, respectively; and a shape converging on the center half-cut line, a shape in which a plurality of parallel lines and a line in an oblique direction that obliquely intersects the parallel lines are combined, and the like.

Semicircular cut out portions 13a and 13b of a bottom film are provided in the vicinity of lower ends of both sides of the bottom film which has been folded inward.

<<Oxygen-absorbing packaging material for lid part>>

The oxygen-absorbing packaging material for a lid part is a packaging material for the lid part, which has been produced from the oxygen-absorbing multilayer body for the lid part of the present invention.

The oxygen-absorbing packaging material for the lid part may further include layers having various functions, as needed.

<<Oxygen-absorbing lid part>>

The oxygen-absorbing lid part of the present invention is a lid part for a packaging container, which has been produced from the oxygen-absorbing packaging material for the lid part of the present invention. In addition, an added value can be imparted by various shape designs and print decorations to the lid part.

The oxygen-absorbing lid part has a form of a film, and may have a shape in which the oxygen-absorbing packaging material for the lid part of the present invention is conformed to be substantially identical to the outer periphery of the heat-sealed portion of the bottom part to be combined with, a shape that is slightly larger than the outer periphery, or a shape which partially protrudes from the outer periphery.

<<Method for producing oxygen-absorbing lid part>>

The oxygen-absorbing lid part can be produced by an operation of cutting the oxygen-absorbing packaging material for a lid part of the present invention into a shape that matches the outer periphery of the heat-sealed portion of the bottom part to be heat-sealed, a shape that is slightly larger than the outer periphery, or a shape that partially protrudes from the outer periphery. Alternatively, it is also acceptable to heat-seal to a heat-sealed portion of the bottom part, and then cut the resultant into a shape that matches the outer periphery, a shape that is slightly larger than the outer periphery, or a shape that partially protrudes from the outer periphery.

<<Oxygen-absorbing packaging container>>

The oxygen-absorbing packaging container of the present invention is a packaging container that has been produced with the use of the oxygen-absorbing lid part of the present invention in combination with a bottom part or the like, for example, as shown in Figure 15, and may be a packaging container having various forms; and specific examples thereof include a molded container and a squeezed container for ham or the like. In addition, an added value can be imparted by various shape designs and print decorations to the container.

In the oxygen-absorbing packaging container, the sealant layer of the oxygen-absorbing lid part is heat-sealed to the bottom part, and the oxygen barrier layer is positioned on the outer side of the container than the sealant layer.

The bottom part has, for example, a concave portion for accommodating the contents, and a flange portion for being heat-sealed to the lid part; and has, for example, a tray-like shape. The layer structure of the bottom part is not particularly limited; but the bottom part has preferably a heat seal layer to be heat-sealed to the lid part, and can be formed from a packaging material that includes, for example, a layer structure such as PP/EVOH/PP, polyamide/saponified product of ethylene-vinyl acetate copolymer/LDPE.
The concave portion in the oxygen-absorbing packaging container can accommodate contents, and the accommodation is performed before the lid part and the bottom part are heat-sealed; after the contents have been accommodated, the flange portion of the bottom part and the lid part having a film shape are bonded by heat sealing or bonding with an adhesive agent, and the contents can be protected due to hermetic sealing. In addition, the accommodated contents can be taken out by peeling off the lid part.

<<Method for producing oxygen-absorbing packaging container>>

The oxygen-absorbing packaging container can be produced by, for example, the following production method. The following examples show merely one example of the method for producing the oxygen-absorbing packaging container of the present invention, and the present invention is not thereby limited.
The oxygen-absorbing packaging container shown in Figure 15 is produced by: firstly, preparing the tray-shaped bottom part shown in Figure 15; placing the packaging material for the lid part on the bottom part so that the sealant layer faces the bottom part; and heat-sealing the packaging material for the lid part and the bottom part, at the flange portion of the bottom part.
Here, in the above, when the packaging material for the lid part is placed on the bottom part, it is acceptable to place one packaging material for the lid part on one bottom part, and perform heat sealing, or to place one packaging material for the lid part on two or more bottom parts, and perform heat sealing. In addition, the two or more bottom parts may be cut individually, or may be connected.
Then, a lid that has been formed by a heat sealed packaging material for the lid part is cut into a shape that matches the outer periphery of the flange portion of the bottom part, a shape that is annularly slightly larger than the outer periphery, or a shape that partially protrudes.
As another production method, it is acceptable in the above to cut the packaging material for the lid part in advance, into a shape that matches the outer periphery of the flange portion of the bottom part, a shape annularly slightly larger than the outer periphery, or a partially protruding shape, and then to place the resultant material on the bottom part and perform heat sealing.
When an oxygen-absorbing packaging container filler is produced in which the contents are accommodated and packaged, it is preferable to accommodate the contents in the concave portion of the bottom part before the above heat sealing, and then perform the above heat sealing.
In the above, the heat sealing can be performed by a known method, for example, such as bar sealing, rotary roll sealing, belt sealing, impulse sealing, high-frequency sealing, ultrasonic sealing and flame sealing.

<<Oxygen-absorbing coated packaging material>>

The oxygen-absorbing coated packaging material is a packaging material produced from an oxygen-absorbing coated multilayer body.
The oxygen-absorbing coated packaging material may further include a layer having various functions, as needed.

<<Oxygen-absorbing coated package>>

The oxygen-absorbing coated package is a package produced from an oxygen-absorbing coated packaging material; and in addition, an added value can be imparted by various shape designs and print decoration.
In the oxygen-absorbing coated package, the oxygen barrier layer is positioned on the outer side of the oxygen-absorbing coat layer.
In one embodiment, the oxygen-absorbing coated package of the present invention may be a pouch. The pouch can be produced with a small amount of materials as compared to a bottle, and is effective in saving resources.
Specific examples of the shape of the pouch include: a flat pouch having a planar shape and a gusset type pouch in which the bottom of the bag, for example, is expanded in a square shape and can stand by itself, which are basic shapes; a refilling pouch, a pouch for retort, a pouch for microwave oven, a pouch for liquid packet, a pouch for bag-in-box, a pouch for infusion solution bag, and a pouch for stick packaging; and a pouch with spout, in which the spout is attached to the center of the upper part or the corner of the upper part of the bag. The pouch can have airtightness due to sealing by heat sealing, and it is possible for the pouch to enhance convenience of taking in and out and storage of the contents, by being

provided with a chuck or a spout.

<<Method for producing oxygen-absorbing coated package>>

The oxygen-absorbing coated packaging bag, which is one embodiment of the oxygen-absorbing coated package, can be formed by, for example, the following method. The following examples show merely one example of a method for producing the oxygen-absorbing coated package of the present invention, and the present invention is not thereby limited.

The oxygen-absorbing coated pouch which is one embodiment of the oxygen-absorbing coated packaging bag can be produced into various shapes, for example, by operations of: folding the oxygen-absorbing coated packaging material into two, or preparing two sheets of the oxygen-absorbing coated packaging material, and overlapping faces of the sealant layers thereof so as to oppose to each other; and further heat-sealing the peripheral end portions thereof, according to a heat-sealed form, for example, such as a side-sealing form, a two-side sealing form, a three-side sealing form, a four-side sealing form, an envelope-sealing form, a butt-sealing form (pillow-sealing form), a pleat-sealing form, a flat-bottom sealing form, a square-bottom sealing form, or a gusset form.

In the above, the heat sealing can be performed by a known method, for example, such as bar sealing, rotary roll sealing, belt sealing, impulse sealing, high-frequency sealing, ultrasonic sealing and flame sealing.

## Examples

The present invention will be described in more detail by the following Examples and Comparative Examples, but the present invention is not limited to these Examples.

<Raw materials>

Main raw materials used in the Examples are as follows.

[Raw materials for oxygen-absorbing compound]

- Polypropylene ether diol 1: SANNIX PP-1000 produced by Sanyo Chemical Industries, Ltd. Number average molecular weight 1000.
- Polypropylene ether diol 2: SANNIX PK-400, produced by Sanyo Chemical Industries, Ltd. Number average molecular weight 400.
- Polycarbonate diol 1: Duranol T5651, produced by Asahi Kasei Chemicals Corporation. Number average molecular weight 1000.
- Hydroxyl group-terminated polyisoprene 1: Poly ip, produced by Idemitsu Kosan Co., Ltd. Number average molecular weight 2500.
- Hydroxyl group-terminated polybutadiene-1: Poly bd R15HT, produced by Idemitsu Kosan Co., Ltd. Number average molecular weight 1200. Hydroxyl group-terminated 1,2-addition polymers of 1,3-butadiene.
- Toluylene diisocyanate 1: Coronate T-65, produced by Tosoh Corporation.
- Oxygen-absorbing compound 1: 3a,4,5,6,7,7a-hexahydro-4,7-methano-1H-inden-6-ol.
- Oxidation promoting catalyst solution 1: Octope AE, produced by Hope Chemical Co., Ltd. A 4% ethyl acetate solution of cobalt octoate, which is an oxidation promoting catalyst.
- Oxidation promoting catalyst solution 2: Acetope Mn(III), produced by Hope Chemical Co., Ltd. A 10% ethyl acetate solution of manganese (III) acetylacetonate, which is an oxidation promoting catalyst.

[General-purpose adhesive agent]

- DL adhesive agent 1: two-liquid curable polyester urethane-based adhesive agent produced by Rock Paint Co. Ltd.

[Films for base material layer, barrier layer and reinforcing layer]

- PET film 1: biaxially stretched PET film produced by Toyobo Co., Ltd., both surfaces of which are corona surfaces. 12 μm thick.
- PET film 2: biaxially stretched PET film produced by Toyobo Co., Ltd., one surface of which is corona surface. 12 μm thick.
- Plant-derived PET film 1: biaxially stretched plant-derived PET film produced by Toyobo Co., Ltd., both surfaces of which are corona surfaces. 12 μm thick. Biomass ratio of 20%.
- Plant-derived PET film 2: biaxially stretched plant-derived PET film produced by Toyobo Co., Ltd., one side of which is corona surface. 12 μm thick. Biomass ratio of 20%.
- Nylon film 1: Bonyl produced by Kohjin Film & Chemicals Co., Ltd. 15 μm thick.
- Nylon film 2: ONE produced by Unitika Ltd. 15 μm thick.
- Transparent vapor deposited PET film 1: IB-PET (PIR2) produced by Dai Nippon Printing Co., Ltd. PET film having transparent alumina vapor deposited film on one side. 12 μm thick.
- Transparent vapor deposited PET film 2: IB-PET (PUB) produced by Dai Nippon Printing Co., Ltd. PET film having transparent alumina vapor deposited film on one side. 12 μm thick. Antistatic product.
- Transparent vapor deposited plant-derived PET film 1: Biomatech (R) IB-PET produced by Dai Nippon Printing Co., Ltd. PET film having transparent alumina vapor deposited film on one side. 12 μm thick. Biomass ratio of 20%.
- Transparent vapor deposited nylon film 1: IB-ONY produced by Dai Nippon Printing Co., Ltd. ON film having transparent alumina vapor deposited film on one side. 15 μm thick.
- Transparent vapor deposited PBT film 1: PBT film having transparent alumina vapor deposited film on one side. 15 μm thick.
- Aluminum foil 1: aluminum foil having thickness of 7 μm.
- Barrier paper 1: Shield Plus produced by Nippon Paper Industries Co., Ltd. Basis weight of 66 $g/m^2$. The layer structure is base paper/water-vapor barrier resin layer/oxygen barrier resin layer/protective resin layer. Basis weight of base paper is 50 $g/m^2$. The water-vapor barrier resin layer is a coat layer containing kaolin. The oxygen barrier layer contains polyvinyl alcohol as a watersoluble polymer.

[Ink for printed layer]

- Gravure ink 1: Finat produced by DIC Graphics Corporation.

[Film for sealant layer, and heat sealing agent]

- LLDPE film 1: liner low density polyethylene, N-165, produced by Aicello Corporation 40 μm thick.
- LLDPE film 2: non-stretched LLDPE film N-165 produced by Aicello Corporation 100 μm thick.
- LLDPE film 3: non-stretched LLDPE film N-165 produced by Aicello Corporation 50 μm thick.
- LLDPE film 4: non-stretched LLDPE film, TUX FC-D produced by Mitsui Chemicals Tohcello, Inc. 60 μm thick.
- LLDPE film 5: non-stretched LLDPE film, L-140AS-1 produced by Aicello Corporation 50 μm thick.
- Plant-derived LLDPE film 1: non-stretched plant-derived straight-chain low-density polyethylene film, produced by Dai Nippon Printing Co., Ltd. 40 μm thick. Biomass ratio of 16%.
- Plant-derived LLDPE film 2: non-stretched plant-derived straight-chain low-density polyethylene film, produced by Dai Nippon Printing Co., Ltd. 100 μm thick. Biomass ratio of 16%.
- Plant-derived LLDPE film 3: non-stretched plant-derived straight-chain low-density polyethylene film, produced by Dai Nippon Printing Co., Ltd. 50 μm thick. Biomass ratio of 16%.
- Plant-derived LLDPE film 4: non-stretched plant-derived straight-chain low-density polyethylene film, produced by Dai Nippon Printing Co., Ltd. 60 μm thick. Biomass ratio of 16%.
- CPP film 1: non-stretched CPP film, ZK207, produced by Toray Advanced Film Co., Ltd. 60 μm thick.
- CPP film 2: non-stretched CPP film, ZK207, produced by Toray Advanced Film Co., Ltd. 70 μm thick.
- CPP film 3: non-stretched CPP film, ZK207, produced by Toray Advanced Film Co., Ltd. 100 μm thick.
- OPP film 1: U-1 produced by Mitsui Chemicals Tohcello, Inc. Biaxially stretched PP film. 20 μm thick.
- Easy-peel film 1: CMPS produced by Mitsui Chemicals Tohcello Inc. 50 μm thick.
- Heat sealing agent: Seikadyne 1900w, produced by Dainichiseika Color & Chemicals Mfg. Co., Ltd. Aqueous part coating agent containing EVA and chlorinated PP.

[Coating agent]

- General-purpose coating agent 1: specially modified polyester resin coating material, Pro Touch White 077-0204, produced by Rock Paint Co., Ltd. Solid content of 49.5 % by mass.
- General-purpose coating agent 2: acrylic silicone resin coating material, CrystalRock UV Guard Clear, 159-0150, produced by Rock Paint Co., Ltd. Solid content of 47.2 % by mass.

<Production of transparent vapor deposited PBT film 1>

An apparatus for continuously forming a vapor deposited film was used where a pretreatment section in which a plasma pretreatment device was arranged and a film-forming section were separated; in the pretreatment section, plasma was introduced from a plasma supply nozzle under the following plasma conditions; one surface of a polybutylene terephthalate (PBT) film which was a base material and had a thickness of 15 μm was subjected to a pretreatment by special oxygen plasma at a conveyance speed of 400 m/min; and in the film-forming section in which the resultant PBT film was continuously conveyed, a vapor deposited film of aluminum oxide having a thickness of 15 nm was formed on a plasma-treated surface of the PBT film, with the use of a reactive resistance heating method as a heating means of a vacuum vapor deposited method, under the following conditions.

(Plasma pretreatment conditions)

- Plasma intensity: 150 W·sec/$m^2$
- Plasma-forming gas: 1200 (sccm) of argon and 3000 (sccm) of oxygen
- Magnetic forming means: permanent magnet of 1000 gausses
- Voltage applied between pre-treatment drum and plasma supply nozzle: 340 V
- Air pressure of pretreatment section: 3.8 Pa

(Film-forming conditions for aluminum oxide)

- Air pressure: $8.1 \times 10^{-2}$ Pa
- Conveyance speed: 400 m/min
- Light transmissivity at wavelength of 366 nm: 92%

<Preparation of solution of raw material>

(Synthesis of polyol 1 and preparation of polyol solution 1)

The following raw materials were added to a flask equipped with a nitrogen inlet tube, a stirrer, a fractionating column and a condenser, and were subjected to a dehydration condensation at an internal temperature of 180 to 200°C while being stirred.

| | |
|---|---|
| Ethylene glycol | 53.8 parts by mass |
| Neopentyl glycol | 180.3 parts by mass |
| 1,6-hexanediol | 204.6 parts by mass |
| Isophthalic acid | 287.8 parts by mass |
| Adipic acid | 273.5 parts by mass |

When the acid number of the solid content in the reaction liquid reached 15 mgKOH/g, the dehydration reaction was further allowed to proceed at 200 to 240°C, while nitrogen was blown in.

When the acid number of the solid content in the reaction liquid reached 10 mgKOH/g or smaller, the internal pressure was reduced to 30 Torr, and the reaction was continued.

When the acid number of the solid content in the reaction liquid reached 3 mgKOH/g or smaller, the reaction was finished, the resultant reaction liquid was cooled to room temperature, and a polyol 1 was obtained.
The number average molecular weight of the obtained polyol 1 was 2000, which was a polyester polyol.
Subsequently, the polyol 1 was dissolved in ethyl acetate, the solid content was adjusted to 60% by mass, and a polyol solution 1 was obtained.

(Synthesis of polyol 2 and preparation of polyol solution 2)

The following raw materials were charged into a flask equipped with a nitrogen inlet tube, a stirrer, and a condenser; and the mixture was heated while being stirred, and subjected to a reflux reaction for 6 hours.

| | |
|---|---|
| Polypropylene ether diol 1 | 300.0 parts by mass |
| Polypropylene ether diol 2 | 250.0 parts by mass |
| Toluylene diisocyanate 1 | 104.0 parts by mass |
| Ethyl acetate | 163.5 parts by mass |

It was confirmed that the absorption of the isocyanate group disappeared completely in the infrared absorption spectrum, the synthesis was finished, the resultant mixture was cooled, and a polyol 2 was obtained.
The number average molecular weight of the obtained polyol 2 was 2000, which was a urethane chain-extended polyol.
Subsequently, the polyol 2 was dissolved in ethyl acetate, the solid content was adjusted to 60% by mass, and a polyol solution 2 was obtained.

(Synthesis of polyol 3 and preparation of polyol solution 3)

The following raw materials were added to a flask equipped with a nitrogen inlet tube, a stirrer, a fractionating column and a condenser, a dehydration condensation reaction was allowed to proceed at an internal temperature of 180 to 200°C while being stirred.

| | |
|---|---|
| Ethylene glycol | 70.0 parts by mass |
| Neopentyl glycol | 140.0 parts by mass |
| 1,6-hexanediol | 190.0 parts by mass |
| Isophthalic acid | 300.0 parts by mass |
| Terephthalic acid | 300.0 parts by mass |

When the acid number of the solid content in the reaction liquid reached 15 mgKOH/g, the dehydration reaction was further allowed to proceed at 200 to 240°C, while nitrogen was blown in.
When the acid number of the solid content in the reaction liquid reached 10 mgKOH/g or smaller, the internal pressure was reduced to 30 Torr, and the reaction was continued.
When the acid number of the solid content in the reaction liquid reached 0.1 mgKOH/g or smaller, the reaction was finished, the resultant reaction liquid was cooled to room temperature, and a polyol 3 was obtained.
The number average molecular weight of the obtained polyol 3 was 8000, which was a polyester polyol.
Subsequently, the polyol 3 was dissolved in ethyl acetate, the solid content was adjusted to 60% by mass, and a polyol solution 3 was obtained.

(Synthesis of polyol 4 and preparation of polyol solution 4)

The following raw materials were charged into a flask equipped with a nitrogen inlet tube, a stirrer, and a condenser; and the mixture was heated while being stirred, and subjected to a reflux reaction for 6 hours.

| | |
|---|---|
| Polycarbonate diol 1 | 100.0 parts by mass |
| 1,6-hexanediol | 50.1 parts by mass |

(continued)

| | |
|---|---|
| Isophorone diisocyanate | 118.5 parts by mass |
| Ethyl acetate | 138.0 parts by mass |

It was confirmed that the absorption of the isocyanate group disappeared completely in the infrared absorption spectrum, the synthesis was finished, the resultant mixture was cooled, and a polyol 4 was obtained.
The number average molecular weight of the obtained polyol 4 was 8000, which was a urethane chain-extended polyester/polycarbonate polyol.
Subsequently, the polyol 4 was dissolved in ethyl acetate, the solid content was adjusted to 60% by mass, and a polyol solution 4 was obtained.

(Synthesis of polyol 5 and preparation of polyol solution 5)

The following raw materials were added to a flask equipped with a nitrogen inlet tube, a stirrer, a fractionating column and a condenser, a dehydration condensation reaction was allowed to proceed at an internal temperature of 180 to 200°C while being stirred.

| | |
|---|---|
| Ethylene glycol | 70.0 parts by mass |
| Neopentyl glycol | 140.0 parts by mass |
| 1,6-hexanediol | 190.0 parts by mass |
| Isophthalic acid | 300.0 parts by mass |
| Terephthalic acid | 300.0 parts by mass |

When the acid number of the solid content in the reaction liquid reached 15 mgKOH/g, the dehydration reaction was further allowed to proceed at 200 to 240°C, while nitrogen was blown in.
When the acid number of the solid content in the reaction liquid reached 10 mgKOH/g or smaller, the internal pressure was reduced to 30 Torr, and the reaction was continued.
When the acid number of the solid content in the reaction liquid reached 3 mgKOH/g or smaller, the reaction was finished, the resultant reaction liquid was cooled to room temperature, and a polyol 5 was obtained.
The number average molecular weight of the obtained polyol 5 was 2000, which was a polyester polyol.
Subsequently, the polyol 5 was dissolved in ethyl acetate, the solid content was adjusted to 60% by mass, and a polyol solution 5 was obtained.

(Preparation of polyisocyanate solution 1)

The following raw materials were added to a flask equipped with a nitrogen inlet tube, a stirrer and a condenser, the mixture was stirred, and a polyisocyanate solution 1 was obtained which had 60% by mass of solid content.

| | |
|---|---|
| Biuret body of hexamethylene diisocyanate parts by mass | 100.0 |
| Ethyl acetate parts by mass | 66.7 |

[Table 1]

| | | Unit | Polyol solution | | Polyisocyanate solution |
|---|---|---|---|---|---|
| | | | 1 | 2 | 1 |
| Blending of reaction liquid | Ethylene glycol | Parts by mass | 53.8 | | |
| | Neopentyl glycol | Parts by mass | 180.3 | | |
| | 1,6-hexanediol | Parts by mass | 204.6 | | |
| | Polypropylene ether diol 1 | Parts by mass | | 300.0 | |
| | Polypropylene ether diol 2 | Parts by mass | | 250.0 | |
| | Isophthalic acid | Parts by mass | 287.8 | | |
| | Adipic acid | Parts by mass | 273.5 | | |
| | Toluylene diisocyanate 1 | Parts by mass | | 104.0 | |
| | Biuret body of hexamethylene diisocyanate | Parts by mass | | | 100.0 |
| | Ethyl acetate | Parts by mass | | 163.5 | 66.7 |
| | Total | Parts by mass | 1000.0 | 817.5 | 166.7 |
| Additional blending | Ethyl acetate | Parts by mass | 666.7 | 272.5 | 0.0 |
| | Total | Parts by mass | 1666.7 | 1090.0 | 166.7 |
| Features | Solid content in solution | % by mass | 60.0 | 60.0 | 60.0 |
| | Number average molecular weight | - | 2000 | 2000 | 479 |

[Table 2]

| | | Unit | Polyol solution | | |
|---|---|---|---|---|---|
| | | | 3 | 4 | 5 |
| Blending of reaction liquid | Ethylene glycol | Parts by mass | 70.0 | | 70.0 |
| | Neopentyl glycol | Parts by mass | 140.0 | | 140.0 |
| | 1,6-hexanediol | Parts by mass | 190.0 | 50.1 | 190.0 |
| | Polycarbonate diol 1 | Parts by mass | | 100.0 | |
| | Isophthalic acid | Parts by mass | 300.0 | | 300.0 |
| | Terephthalic acid | Parts by mass | 300.0 | | 300.0 |
| | Isophorone diisocyanate | Parts by mass | | 118.5 | |
| | Biuret body of hexamethylene diisocyanate | Parts by mass | | | |
| | Ethyl acetate | Parts by mass | | 138.0 | |
| | Total | Parts by mass | 1000.0 | 406.6 | 1000.0 |
| Additional blending | Ethyl acetate | Parts by mass | 666.7 | 41.0 | 666.7 |
| | Total | Parts by mass | 1666.7 | 447.6 | 1666.7 |
| Features | Solid content in solution | % by mass | 60.0 | 60.0 | 60.0 |
| | Number average molecular weight | - | 8000 | 8000 | 2000 |

<Synthesis of oxygen-absorbing compound and preparation of oxygen-absorbing compound solution>

[Oxygen-absorbing compound 2]

Firstly, the following raw materials were added to a flask equipped with a nitrogen inlet tube, a stirrer and a condenser, and were reacted at an internal temperature of 80 to 90°C for 8 hours while being stirred.

| | |
|---|---|
| Oxygen-absorbing compound 1 | 100.0 parts by mass |
| Isophorone diisocyanate | 74.0 parts by mass |

It was confirmed that the absorption of the isocyanate group disappeared completely in the infrared absorption spectrum, the synthesis was finished, the resultant mixture was cooled, and an oxygen-absorbing compound 2 was obtained.

Then, the oxygen-absorbing compound 2 was dissolved in ethyl acetate, and an oxygen-absorbing compound solution 2 was prepared which had 80% by mass of solid content.

[Oxygen-absorbing compound 3]

Firstly, the following raw materials were added to a flask equipped with a nitrogen inlet tube, a stirrer and a condenser, and were reacted at an internal temperature of 80 to 90°C for 8 hours while being stirred.

| | |
|---|---|
| Oxygen-absorbing compound 1 | 100.0 parts by mass |
| Polyisocyanate solution 1 | 212.5 parts by mass |

It was confirmed that the content of the NCO group in the solid content of the reaction liquid by the amine equivalent method became about 0.64% by mass, the synthesis was finished, the resultant reaction liquid was cooled, a solvent was removed, and an oxygen-absorbing compound 3 was obtained.

Then, the oxygen-absorbing compound 3 was dissolved in ethyl acetate, and an oxygen-absorbing compound solution 3 was prepared which had 60% by mass of solid content.

[Oxygen-absorbing compound 4]

Firstly, the following raw materials were added to a flask equipped with a nitrogen inlet tube, a stirrer and a condenser, and were reacted at an internal temperature of 80 to 90°C for 8 hours while being stirred.

| | |
|---|---|
| Oxygen-absorbing compound 1 | 100.0 parts by mass |
| Polyol solution 1 | 682.3 parts by mass |
| Polyisocyanate solution 1 | 265.6 parts by mass |

It was confirmed that the absorption of the isocyanate group disappeared completely in the infrared absorption spectrum, the synthesis was finished, the resultant mixture was cooled, the solvent was removed, and an oxygen-absorbing compound 4 was obtained.

Then, the oxygen-absorbing compound 4 was dissolved in ethyl acetate, and an oxygen-absorbing compound solution 4 was prepared which had 60% by mass of solid content.

[Oxygen-absorbing compound 5]

An oxygen-absorbing compound 5 was obtained according to the same operations as in the above oxygen-absorbing compound 4, except that the polyol solution 2 was used in place of the polyol solution 1.

Then, the oxygen-absorbing compound 5 was dissolved in ethyl acetate, and an oxygen-absorbing compound solution 5 was prepared which had 60% by mass of solid content.

[Oxygen-absorbing compound 6]

The following raw materials were charged into a flask equipped with a nitrogen inlet tube, a stirrer and a condenser, and were reacted at an internal temperature of 80 to 90°C for 6 hours while being stirred.

parts by mass

| | |
|---|---|
| Hydroxyl group-terminated polyisoprene 1 | 100.0 parts by mass |
| Isophorone diisocyanate | 4.7 parts by mass |

It was confirmed that the absorption of the isocyanate group disappeared completely in the infrared absorption spectrum, the synthesis was finished, the resultant mixture was cooled, and an oxygen-absorbing compound 6 was obtained which was a urethane polyol.

The number average molecular weight of the obtained oxygen-absorbing compound 6 was 7000.

Then, the oxygen-absorbing compound 6 was dissolved in ethyl acetate, and an oxygen-absorbing compound solution 6 was prepared which had 60% by mass of solid content.

[Oxygen-absorbing compound 7]

Firstly, the following raw materials were added to a flask equipped with a nitrogen inlet tube, a stirrer and a condenser, and were reacted at an internal temperature of 80 to 90°C for 8 hours while being stirred.

| | |
|---|---|
| Oxygen-absorbing compound 1 | 100.0 parts by mass |
| Polyol solution 1 | 2000.0 parts by mass |
| Isophorone diisocyanate | 111.2 parts by mass |

It was confirmed that the absorption of the isocyanate group disappeared completely in the infrared absorption spectrum, the synthesis was finished, the resultant mixture was cooled, the solvent was removed, and an oxygen-absorbing compound 7 was obtained.

Then, the oxygen-absorbing compound 7 was dissolved in ethyl acetate, and an oxygen-absorbing compound solution 7 was prepared which had 60% by mass of solid content.

[Oxygen-absorbing compound 8]

Firstly, the following raw materials were added to a flask equipped with a nitrogen inlet tube, a stirrer and a condenser, and were reacted at an internal temperature of 80 to 90°C for 8 hours while being stirred.

| | |
|---|---|
| Oxygen-absorbing compound 1 | 100.0 parts by mass |
| Polyol solution 3 | 682.3 parts by mass |
| Polyisocyanate solution 1 | 265.6 parts by mass |

It was confirmed that the absorption of the isocyanate group disappeared completely in the infrared absorption spectrum, the synthesis was finished, the resultant mixture was cooled, the solvent was removed, and an oxygen-absorbing compound 8 was obtained.

Then, the oxygen-absorbing compound 8 was dissolved in ethyl acetate, and an oxygen-absorbing compound solution 8 was prepared which had 60% by mass of solid content.

The charged compositions of the reaction liquids at the time when the oxygen-absorbing compounds 2 to 8 were synthesized are summarized in Table 3 and Table 4.

In addition, the charged compositions of the oxygen-absorbing compound solutions 2 to 8 are summarized in Table 5 and Table 6.

[Table 3]

| | | Raw material name | Unit | Oxygen-absorbing compound | | | | |
|---|---|---|---|---|---|---|---|---|
| | | | | For Examples | | | | For Comparative Example |
| | | | | 2 | 3 | 4 | 5 | 6 |
| Oxygen-absorbing compound reaction liquid | Blending of raw material | Oxygen-absorbing compound 1 | Parts by mass | 100.0 | 100.0 | 100.0 | 100.0 | |
| | | Polyol solution 1 | Parts by mass | | | 682.3 | | |
| | | Polyol solution 2 | Parts by mass | | | | 682.3 | |
| | | Hydroxyl group-terminated polyisoprene 1 | Parts by mass | | | | | 100.0 |
| | | Polyisocyanate solution 1 | Parts by mass | | 212.5 | 265.6 | 265.6 | |
| | | Isophorone diisocyanate | Parts by mass | 74.0 | | | | 4.7 |
| | | Total | Parts by mass | 174.0 | 312.5 | 1047.9 | 1047.9 | 104.7 |
| | | Total solid content | Parts by mass | 174.0 | 227.5 | 668.7 | 668.7 | 104.7 |
| | | Solid content ratio in reaction liquid | % by mass | 100.0 | 72.8 | 63.8 | 63.8 | 100.0 |
| | | Oxygen-absorbing compound 1 | % by mass | 57.5 | 44.0 | 15.0 | 15.0 | |

(continued)

| | | Raw material name | | Unit | Oxygen-absorbing compound | | | | |
|---|---|---|---|---|---|---|---|---|---|
| | | | | | For Examples | | | | For Comparative Example |
| | | | | | 2 | 3 | 4 | 5 | 6 |
| | Blending ratio of solid content | Polyol 1 | | % by mass | | | 61.2 | | |
| | | Polyol 2 | | % by mass | | | | 61.2 | |
| | | Hydroxyl group-terminated polyisoprene 1 | | % by mass | | | | | 95.5 |
| | | Biuret body of hexamethylene diisocyanate | | % by mass | | 56.0 | 23.8 | 23.8 | |
| | | Isophorone diisocyanate | | % by mass | 42.5 | | | | 4.5 |
| | | Total | | % by mass | 100.0 | 100.0 | 100.0 | 100.0 | 100.0 |
| Features | | Charged equivalent ratio NCO/OH of reaction liquid | | - | 1.00 | 1.20 | 0.83 | 0.83 | 0.53 |
| | | Oxygen-absorbing compound | Contained functional group | - | None | NCO group | OH group | OH group | OH group |
| | | | Concentration of unsaturated five-membered ring | % by mass | 25.3 | 19.4 | 6.6 | 6.6 | 00 |

[Table 4]

| | | Raw material name | | Unit | Oxygen-absorbing compound | |
|---|---|---|---|---|---|---|
| | | | | | 7 | 8 |
| Oxygen-absorbing compound reaction liquid | Blending of raw material | Oxygen-absorbing compound 1 | | Parts by mass | 100.0 | 100.0 |
| | | Polyol solution 1 | | Parts by mass | 2000.0 | |
| | | Polyol solution 3 | | Parts by mass | | 682.3 |
| | | Polyisocyanate solution 1 | | Parts by mass | | 265.6 |
| | | Isophorone diisocyanate | | Parts by mass | 111.2 | |
| | | Total | | Parts by mass | 2211.2 | 1047.9 |
| | | Solid content ratio in reaction liquid | | % by mass | 63.8 | 63.8 |
| | Blending ratio of solid content | Oxygen-absorbing compound 1 | | % by mass | 7.1 | 15.0 |
| | | Polyol 1 | | % by mass | 85.0 | |
| | | Polyol 3 | | % by mass | | 61.2 |
| | | Biuret body of hexamethylene diisocyanate | | % by mass | | 23.8 |
| | | Isophorone diisocyanate | | % by mass | 7.9 | |
| | | Total | | % by mass | 100.0 | 100.0 |
| Features | | Charged equivalent ratio NCO/OH of reaction liquid | | - | 1.04 | 0.93 |
| | | Oxygen-absorbing compound | Contained functional group | - | NCO group | OH group |
| | | | Concentration of unsaturated five-membered ring | % by mass | 3.1 | 6.6 |

[Table 5]

| | Raw material name | Unit | Oxygen-absorbing compound solution | | | | |
|---|---|---|---|---|---|---|---|
| | | | For Examples | | | | For Comparative Example |
| | | | 2 | 3 | 4 | 5 | 6 |
| Blending of oxygen-absorbing compound solution | Oxygen-absorbing compound 2 | Parts by mass | 300 | | | | |
| | Oxygen-absorbing compound 3 | Parts by mass | | 300 | | | |
| | Oxygen-absorbing compound 4 | Parts by mass | | | 300 | | |
| | Oxygen-absorbing compound 5 | Parts by mass | | | | 300 | |
| | Oxygen-absorbing compound 6 | Parts by mass | | | | | 300 |
| | Ethyl acetate | Parts by mass | 75 | 200 | 200 | 200 | 200 |
| | Total | Parts by mass | 375 | 500 | 500 | 500 | 500 |
| Features | Content ratio of oxygen-absorbing compound in solution | % by mass | 80.0 | 60.0 | 60.0 | 60.0 | 60.0 |

[Table 6]

| | Raw material name | Unit | Oxygen-absorbing compound solution | |
|---|---|---|---|---|
| | | | 7 | 8 |
| | Oxygen-absorbing compound 7 | Parts by mass | 300 | |
| | Oxygen-absorbing compound 8 | Parts by mass | | 300 |
| | Ethyl acetate | Parts by mass | 200 | 200 |
| | Total | Parts by mass | 500 | 500 |
| Features | Content ratio of oxygen-absorbing compound in solution | % by mass | 60.0 | 60.0 |

<Preparation of oxygen-absorbing adhesive composition>

(Preparation of oxygen-absorbing adhesive composition A1)

The following raw materials were mixed and homogenized at room temperature, and an oxygen-absorbing adhesive composition A1 was obtained, and was subjected to various evaluations.

| | |
|---|---|
| Oxygen-absorbing compound solution 2 | 100 parts by mass |
| Polyol solution 1 | 100 parts by mass |

(continued)

| | |
|---|---|
| Polyisocyanate solution 1 | 10 parts by mass |
| Oxidation promoting catalyst solution 1 | 1 part by mass |
| Ethyl acetate | 140 parts by mass |

(Preparation of oxygen-absorbing adhesive compositions A2 to A9, and B1 to B2)

Oxygen-absorbing adhesive compositions A2 to A9 and B1 to B2 were obtained according to the same operations as in the oxygen-absorbing adhesive composition A1, according to the blending in Tables 7 to 9.

[Table 7]

| | | | Unit | Oxygen-absorbing adhesive composition | | | |
|---|---|---|---|---|---|---|---|
| | | | | For Examples | | | |
| | | | | A1 | A2 | A3 | A4 |
| Blending | Oxygen-absorbing compound | Oxygen-absorbing compound solution 2 | Parts by mass | 100.0 | | | |
| | | Oxygen-absorbing compound solution 3 | Parts by mass | | 100.0 | | |
| | | Oxygen-absorbing compound solution 4 | Parts by mass | | | 250.0 | |
| | | Oxygen-absorbing compound solution 5 | Parts by mass | | | | 250.0 |
| | | Oxygen-absorbing compound solution 6 | Parts by mass | | | | |
| | Hydroxyl group-containing compound | Polyol solution 1 | Parts by mass | 100.0 | 100.0 | | |
| | | Polyol solution 2 | Parts by mass | | | | |
| | Isocyanate compound | Polyisocyanate solution 1 | Parts by mass | 10.0 | | 25.0 | 25.0 |
| | Oxidation promoting catalyst | Oxidation promoting catalyst solution 1 | Parts by mass | 1.0 | 1.0 | 1.0 | 1.0 |
| | | Oxidation promoting catalyst solution 2 | Parts by mass | | | | |
| | Solvent | Ethyl acetate | Parts by mass | 140.0 | 140.0 | 220.0 | |
| | Total | | Parts by mass | 351.0 | 341.0 | 496.0 | 276.0 |

(continued)

| | | | Unit | Oxygen-absorbing adhesive composition | | | |
|---|---|---|---|---|---|---|---|
| | | | | For Examples | | | |
| | | | | A1 | A2 | A3 | A4 |
| Composition of raw material solid content | Oxygen-absorbing compound | Oxygen-absorbing compound 2 | % by mass | 54.8 | | | |
| | | Oxygen-absorbing compound 3 | % by mass | | 50.0 | | |
| | | Oxygen-absorbing compound 4 | % by mass | | | 90.9 | |
| | | Oxygen-absorbing compound 5 | % by mass | | | | 90.9 |
| | | Oxygen-absorbing compound 6 | % by mass | | | | |
| | Hydroxyl group-containing compound | Polyol 1 | % by mass | 41.1 | 50.0 | | |
| | | Polyol 2 | % by mass | | | | |
| | Isocyanate compound | Biuret body of hexamethylene diisocyanate | % by mass | 4.1 | | 9.1 | 9.1 |
| | Oxidation promoting catalyst | Oxidation promoting catalyst 1 | ppm | 274 | 333 | 242 | 242 |
| | | Oxidation promoting catalyst 2 | ppm | | | | |
| | Total | | % by mass | 100.0 | 100.0 | 100.0 | 100.0 |

[Table 8]

| | | | Unit | Oxygen-absorbing adhesive composition | | | |
|---|---|---|---|---|---|---|---|
| | | | | For Examples | | | |
| | | | | A5 | A6 | A7 | A8 |
| Blending | Oxygen-absorbing compound | Oxygen-absorbing compound solution 2 | Parts by mass | | | | |
| | | Oxygen-absorbing compound solution 3 | Parts by mass | | 100.0 | 100.0 | 100.0 |
| | | Oxygen-absorbing compound solution 4 | Parts by mass | 125.0 | 100.0 | | |
| | | Oxygen-absorbing compound solution 5 | Parts by mass | 125.0 | | 100.0 | |
| | | Oxygen-absorbing compound solution 6 | Parts by mass | | | | |
| | Hydroxyl group-containing compound | Polyol solution 1 | Parts by mass | | | | |
| | | Polyol solution 2 | Parts by mass | | | | 100.0 |
| | Isocyanate compound | Polyisocyanate solution 1 | Parts by mass | 25.0 | | | |
| | Oxidation promoting catalyst | Oxidation promoting catalyst solution 1 | Parts by mass | 1.0 | 1.0 | 1.0 | 1.0 |
| | | Oxidation promoting catalyst solution 2 | Parts by mass | | | | |
| | Solvent | Ethyl acetate | Parts by mass | 110.0 | | | 140.0 |
| | Total | | Parts by mass | 386.0 | 201.0 | 201.0 | 341.0 |

(continued)

| | | | Unit | Oxygen-absorbing adhesive composition | | | |
|---|---|---|---|---|---|---|---|
| | | | | For Examples | | | |
| | | | | A5 | A6 | A7 | A8 |
| Composition of raw material solid content | Oxygen-absorbing compound | Oxygen-absorbing compound 2 | % by mass | | | | |
| | | Oxygen-absorbing compound 3 | % by mass | | 50.0 | 50.0 | 50.0 |
| | | Oxygen-absorbing compound 4 | % by mass | 45.5 | 50.0 | | |
| | | Oxygen-absorbing compound 5 | % by mass | 45.5 | | 50.0 | |
| | | Oxygen-absorbing compound 6 | % by mass | | | | |
| | Hydroxyl group-containing compound | Polyol 1 | % by mass | | | | |
| | | Polyol 2 | % by mass | | | | 50.0 |
| | Isocyanate compound | Biuret body of hexamethylene diisocyanate | % by mass | 9.1 | | | |
| | Oxidation promoting catalyst | Oxidation promoting catalyst 1 | ppm | 242 | 333 | 333 | 333 |
| | | Oxidation promoting catalyst 2 | ppm | | | | |
| | Total | | % by mass | 100.0 | 100.0 | 100.0 | 100.0 |

[Table 9]

| | | | Unit | Oxygen-absorbing adhesive composition | | |
|---|---|---|---|---|---|---|
| | | | | For Examples | For Comparative Example | |
| | | | | A9 | B1 | B2 |
| Blending | Oxygen-absorbing compound | Oxygen-absorbing compound solution 2 | Parts by mass | | | |
| | | Oxygen-absorbing compound solution 3 | Parts by mass | 100.0 | | |
| | | Oxygen-absorbing compound solution 4 | Parts by mass | 100.0 | | |
| | | Oxygen-absorbing compound solution 5 | Parts by mass | | | |
| | | Oxygen-absorbing compound solution 6 | Parts by mass | | 100.0 | |
| | Hydroxyl group-containing compound | Polyol solution 1 | Parts by mass | | | 250.0 |
| | | Polyol solution 2 | Parts by mass | | | |
| | Isocyanate compound | Polyisocyanate solution 1 | Parts by mass | | 25.0 | 25.0 |
| | Oxidation promoting catalyst | Oxidation promoting catalyst solution 1 | Parts by mass | | 1.5 | |
| | | Oxidation promoting catalyst solution 2 | Parts by mass | 2.0 | | |
| | Solvent | Ethyl acetate | Parts by mass | | | |
| | Total | | Parts by mass | 202.0 | 126.5 | 275.0 |

(continued)

| | | | Unit | Oxygen-absorbing adhesive composition | | |
|---|---|---|---|---|---|---|
| | | | | For Examples | For Comparative Example | |
| | | | | A9 | B1 | B2 |
| Composition of raw material solid content | Oxygen-absorbing compound | Oxygen-absorbing compound 2 | % by mass | | | |
| | | Oxygen-absorbing compound 3 | % by mass | 50.0 | | |
| | | Oxygen-absorbing compound 4 | % by mass | 50.0 | | |
| | | Oxygen-absorbing compound 5 | % by mass | | | |
| | | Oxygen-absorbing compound 6 | % by mass | | 80.0 | |
| | Hydroxyl group-containing compound | Polyol 1 | % by mass | | | 90.9 |
| | | Polyol 2 | % by mass | | | |
| | Isocyanate compound | Biuret body of hexamethylene diisocyanate | % by mass | | 20.0 | 9.1 |
| | Oxidation promoting catalyst | Oxidation promoting catalyst 1 | ppm | | 799 | |
| | | Oxidation promoting catalyst 2 | ppm | 1664 | | |
| | Total | | % by mass | 100.0 | 100.0 | 100.0 |

<Preparation of oxygen-absorbing coating agent composition>

(Preparation of oxygen-absorbing coating agent composition A10)

The following raw materials were mixed at room temperature, and an oxygen-absorbing coating agent composition was obtained.

| | |
|---|---|
| Oxygen-absorbing compound solution 2 | 100.0 parts by mass |
| General-purpose coating agent 1 | 192.0 parts by mass |
| Oxidation promoting catalyst solution 1 | 1.1 parts by mass |

(Preparation of oxygen-absorbing coating agent compositions A11 to A18 and B3)

Oxygen-absorbing coating agent compositions were obtained according to the same operations as in the oxygen-absorbing coating agent composition A10, according to the blending in Table 10 and Table 11.

[Table 10]

| | | Unit | Oxygen-absorbing coating agent composition | | | | |
|---|---|---|---|---|---|---|---|
| | | | A10 | A11 | A12 | A13 | A14 |
| Blending of coating agent composition | Oxygen-absorbing compound solution 2 | Parts by mass | 100.0 | 100.0 | | | |
| | Oxygen-absorbing compound solution 3 | Parts by mass | | | 100.0 | 100.0 | 100.0 |
| | Oxygen-absorbing compound solution 4 | Parts by mass | | | | | |
| | Oxygen-absorbing compound solution 5 | Parts by mass | | | | | |
| | General-purpose coating agent 1 | Parts by mass | 192.0 | | 192.0 | | |
| | General-purpose coating agent 2 | Parts by mass | | 201.0 | | 201.0 | |
| | Polyol solution 1 | Parts by mass | | | | | 158.0 |
| | Polyol solution 2 | Parts by mass | | | | | |
| | Hydroxyl group-terminated polyisoprene 1 | Parts by mass | | | | | |
| | Polyisocyanate solution 1 | Parts by mass | | | | | |
| | Oxidation promoting catalyst solution 1 | Parts by mass | 1.10 | 1.10 | 1.00 | 1.00 | 1.00 |
| | Oxidation promoting catalyst solution 2 | Parts by mass | | | | | |
| | Total | Parts by mass | 293.1 | 302.1 | 293.0 | 302.0 | 259.0 |

(continued)

| | | Unit | Oxygen-absorbing coating agent composition | | | | |
|---|---|---|---|---|---|---|---|
| | | | A10 | A11 | A12 | A13 | A14 |
| Composition of raw material solid content | Oxygen-absorbing compound 2 | % by mass | 45.7 | 45.7 | | | |
| | Oxygen-absorbing compound 3 | % by mass | | | 38.7 | 38.7 | 38.7 |
| | Oxygen-absorbing compound 4 | % by mass | | | | | |
| | Oxygen-absorbing compound 5 | % by mass | | | | | |
| | Solid content of general-purpose coating agent 1 | % by mass | 54.3 | | 61.3 | | |
| | Solid content of general-purpose coating agent 2 | % by mass | | 54.2 | | 61.2 | |
| | Polyol 1 | % by mass | | | | | 61.2 |
| | Polyol 2 | % by mass | | | | | |
| | Hydroxyl group-terminated polyisoprene 1 | % by mass | | | | | |
| | Biuret body of hexamethylene diisocyanate | % by mass | | | | | |
| | Oxidation promoting catalyst 1 | ppm | 251 | 252 | 258 | 258 | 258 |
| | Oxidation promoting catalyst 2 | ppm | | | | | |
| | Total | % by mass | 100.0 | 100.0 | 100.0 | 100.0 | 100.0 |
| Features | Solid content in oxygen-absorbing coating agent composition | % by mass | 59.7 | 57.9 | 52.9 | 51.3 | 59.8 |
| | Content ratio in solid content: Oxygen-absorbing compound | % by mass | 45.7 | 45.7 | 38.7 | 38.7 | 38.7 |
| | Content ratio in solid content: Unsaturated alicyclic structure | % by mass | 25.9 | 25.1 | 19.9 | 19.3 | 22.5 |

[Table 11]

| | | Unit | Oxygen-absorbing coating agent composition | | | | Comparative Example |
|---|---|---|---|---|---|---|---|
| | | | A15 | A16 | A17 | A18 | B3 |
| Blending of coating agent composition | Oxygen-absorbing compound solution 2 | Parts by mass | 100.0 | | | | |
| | Oxygen-absorbing compound solution 3 | Parts by mass | | | | | |
| | Oxygen-absorbing compound solution 4 | Parts by mass | | 100.0 | | | |
| | Oxygen-absorbing compound solution 5 | Parts by mass | | | 250.0 | 250.0 | |
| | General-purpose coating agent 1 | Parts by mass | | | | | |
| | General-purpose coating agent 2 | Parts by mass | | | | | |
| | Polyol solution 1 | Parts by mass | | | | | |
| | Polyol solution 2 | Parts by mass | 158.0 | | | | |
| | Hydroxyl group-terminated polyisoprene 1 | Parts by mass | | | | | 100.0 |
| | Polyisocyanate solution 1 | Parts by mass | | | 25.0 | 25.0 | |
| | Oxidation promoting catalyst solution 1 | Parts by mass | 1.10 | 0.38 | 1.00 | | 0.40 |
| | Oxidation promoting catalyst solution 2 | Parts by mass | | | | 2.00 | |
| | Total | Parts by mass | 259.1 | 100.4 | 276.0 | 277.0 | 100.4 |

(continued)

| | | Unit | Oxygen-absorbing coating agent composition | | | | Comparative Example |
|---|---|---|---|---|---|---|---|
| | | | A15 | A16 | A17 | A18 | B3 |
| Composition of raw material solid content | Oxygen-absorbing compound 2 | % by mass | 45.8 | | | | |
| | Oxygen-absorbing compound 3 | % by mass | | | | | |
| | Oxygen-absorbing compound 4 | % by mass | | 100.0 | | | |
| | Oxygen-absorbing compound 5 | % by mass | | | 90.9 | 90.9 | |
| | Solid content of general-purpose coating agent 1 | % by mass | | | | | |
| | Solid content of general-purpose coating agent 2 | % by mass | | | | | |
| | Polyol 1 | % by mass | | | | | |
| | Polyol 2 | % by mass | 54.2 | | | | |
| | Hydroxyl group-terminated polyisoprene 1 | % by mass | | | | | 100.0 |
| | Biuret body of hexamethylene diisocyanate | % by mass | | | 9.1 | 9.1 | |
| | Oxidation promoting catalyst 1 | ppm | 252 | 253 | 242 | | 160 |
| | Oxidation promoting catalyst 2 | ppm | | | | 1211 | |
| | Total | % by mass | 100.0 | 100.0 | 100.0 | 100.0 | 100.0 |
| Features | Solid content in oxygen-absorbing coating agent composition | % by mass | 67.5 | 59.8 | 59.8 | 59.6 | 99.6 |
| | Content ratio in solid content: Oxygen-absorbing compound | % by mass | 45.8 | 100.0 | 90.9 | 90.9 | 00 |
| | Content ratio in solid content: Unsaturated alicyclic structure | % by mass | 29.3 | 9.3 | 17.9 | 17.8 | 00 |

<<A, B: production and evaluation of oxygen-absorbing multilayer body>>

<Production and evaluation of various pouches>

1. General-purpose pouch

[Example A1]

A printed layer was formed on the vapor deposited surface of the transparent vapor deposited PET film 1, according to a gravure printing method, with the use of the gravure ink 1.

Next, the surface of the printed layer and the nylon film 1 were laminated to each other according to a dry lamination method.

Next, the oxygen-absorbing adhesive composition A1 was applied to the surface of the printed layer and dried so that the dry coating amount became 3 g/$m^2$, and then the LLDPE film 1 was laminated thereto according to a dry lamination method, and the resultant multilayer body was aged at 22°C for 2 days, and an oxygen-absorbing multilayer body was obtained which had the following layered configuration.

Then, a general-purpose pouch having an appearance shown in Figure 5 was produced so that an inner dimension became 135 mm × 70 mm, with the use of the obtained oxygen-absorbing multilayer body, and was subjected to various evaluations.

Layered configuration: transparent vapor deposited PET film 1 (12 μm)/printed layer/DL adhesive agent 1/nylon film 1/oxygen-absorbing adhesive composition A1 (3 g/$m^2$)/LLDPE film 1 (40 μm)

[Examples A2 to A9, and Comparative Examples A1 to A3]

Oxygen-absorbing multilayer bodies and general-purpose pouches were obtained according to the same operations as in Example A1, except that the type of the oxygen-absorbing adhesive composition and the aging conditions were changed according to the descriptions in Table 12 and Table 13, and were evaluated in the same way.

[Table 12]

| | | | | Unit | General-purpose pouch | | | | | |
|---|---|---|---|---|---|---|---|---|---|---|
| | | | | | Example A | | | | | |
| | | | | | 1 | 2 | 3 | 4 | 5 | 6 |
| Layer structure of oxygen-absorbing multilayer body | Base material layer oxygen barrier layer | Transparent vapor deposited PET film 1 (bottom surface vapor deposited surface) | | μm | 12 | 12 | 12 | 12 | 12 | 12 |
| | Printed layer | Gravure ink 1 | | Presence or absence | Present | Present | Present | Present | Present | Present |
| | General-purpose adhesive layer | DL adhesive agent 1 | | $g/m^2$ | 3 | 3 | 3 | 3 | 3 | 3 |
| | Reinforcing layer | Nylon film 1 | | μm | 15 | 15 | 15 | 15 | 15 | 15 |
| | Oxygen-absorbing adhesive layer | Oxygen-absorbing adhesive composition | A1 | $g/m^2$ | 3 | | | | | |
| | | | A2 | $g/m^2$ | | 3 | | | | |
| | | | A3 | $g/m^2$ | | | 3 | | | |
| | | | A4 | $g/m^2$ | | | | 3 | | |
| | | | A5 | $g/m^2$ | | | | | 3 | |
| | | | A6 | $g/m^2$ | | | | | | 3 |
| | | | A7 | $g/m^2$ | | | | | | |
| | | | A8 | $g/m^2$ | | | | | | |
| | | | A9 | $g/m^2$ | | | | | | |
| | | | B1 | $g/m^2$ | | | | | | |
| | | | B2 | $g/m^2$ | | | | | | |
| | General-purpose adhesive layer | DL adhesive agent 1 | | $g/m^2$ | | | | | | |
| | Sealant layer | LLDPE film 1 | | μm | 40 | 40 | 40 | 40 | 40 | 40 |

(continued)

| | | Unit | General-purpose pouch | | | | | |
|---|---|---|---|---|---|---|---|---|
| | | | Example A | | | | | |
| | | | 1 | 2 | 3 | 4 | 5 | 6 |
| Aging conditions | Temperature | °C | 22 | 22 | 22 | 22 | 22 | 22 |
| | Time period | Day | 2 | 2 | 2 | 2 | 2 | 2 |
| Evaluation results | Laminate strength | N/ 15 mm width | 3.1 | 3.3 | 3.4 | 3.4 | 3.4 | 3.0 |
| | Oxygen absorbed amount (1) | $cc/m^2$ | 290 | 224 | 112 | 112 | 112 | 261 |
| | Odor sensory evaluation | - | 1 | 1 | 1 | 1 | 1 | 1 |

[Table 13]

| | | | | Unit | General-purpose pouch | | | | | |
|---|---|---|---|---|---|---|---|---|---|---|
| | | | | | Example A | | | Comparative Example A | | |
| | | | | | 7 | 8 | 9 | 1 | 2 | 3 |
| Layer structure of oxygen-absorbing multilayer body | Base material layer oxygen barrier layer | Transparent vapor deposited PET film 1 (bottom surface vapor deposited surface) | | μm | 12 | 12 | 12 | 12 | 12 | 12 |
| | Printed layer | Gravure ink 1 | | Presence or absence | Present | Present | Present | Present | Present | Present |
| | General-purpose adhesive layer | DL adhesive agent 1 | | $g/m^2$ | 3 | 3 | 3 | 3 | 3 | 3 |
| | Reinforcing layer | Nylon film 1 | | μm | 15 | 15 | 15 | 15 | 15 | 15 |
| | Oxygen-absorbing adhesive layer | Oxygen-absorbing adhesive composition | A1 | $g/m^2$ | | | | | | |
| | | | A2 | $g/m^2$ | | | | | | |
| | | | A3 | $g/m^2$ | | | | | | |
| | | | A4 | $g/m^2$ | | | | | | |
| | | | A5 | $g/m^2$ | | | | | | |
| | | | A6 | $g/m^2$ | | | | | | |
| | | | A7 | $g/m^2$ | 3 | | | | | |
| | | | A8 | $g/m^2$ | | 3 | | | | |
| | | | A9 | $g/m^2$ | | | 3 | | | |
| | | | B1 | $g/m^2$ | | | | 3 | | |
| | | | B2 | $g/m^2$ | | | | | 3 | |
| | General-purpose adhesive layer | DL adhesive agent 1 | | $g/m^2$ | | | | | | 3 |
| | Sealant layer | LLDPE film 1 | | μm | 40 | 40 | 40 | 40 | 40 | 40 |

(continued)

| | | Unit | General-purpose pouch | | | | | |
|---|---|---|---|---|---|---|---|---|
| | | | Example A | | | Comparative Example A | | |
| | | | 7 | 8 | 9 | 1 | 2 | 3 |
| Aging conditions | Temperature | °C | 22 | 22 | 22 | 22 | 22 | 40 |
| | Time period | Day | 2 | 2 | 2 | 2 | 2 | 3 |
| Evaluation results | Laminate strength | N/ 15 mm width | 3.0 | 3.2 | 3.0 | 3.0 | 2.9 | 4.1 |
| | Oxygen absorbed amount (1) | $cc/m^2$ | 261 | 224 | 182 | 290 | 0 | 0 |
| | Odor sensory evaluation | - | 1 | 1 | 1 | 4 | 1 | 0 |

[Examples B1 to B9, and Comparative Examples B1 to B3]

Oxygen-absorbing multilayer bodies and general-purpose pouches were obtained according to the same operations as in Example A1, except that a material of a plant-derived resin film was used, and the type of the oxygen-absorbing adhesive composition and the aging conditions were changed according to the descriptions in Table 14 and Table 15, and were evaluated in the same way.

[Table 14]

| | | | | Unit | General-purpose pouch | | | | | |
|---|---|---|---|---|---|---|---|---|---|---|
| | | | | | Example B | | | | | |
| | | | | | 1 | 2 | 3 | 4 | 5 | 6 |
| Layer structure of oxygen-absorbing multilayer body | Base material layer oxygen barrier layer | Transparent vapor deposited plant-derived PET film 1 (bottom surface vapor deposited surface) | | µm | 12 | 12 | 12 | 12 | 12 | 12 |
| | Printed layer | Gravure ink 1 | | Presence or absence | Present | Present | Present | Present | Present | Present |
| | General-purpose adhesive layer | DL adhesive agent 1 | | $g/m^2$ | 3 | 3 | 3 | 3 | 3 | 3 |
| | Reinforcing layer | Nylon film 1 | | µm | 15 | 15 | 15 | 15 | 15 | 15 |
| | Oxygen-absorbing adhesive layer | Oxygen-absorbing adhesive composition | A1 | $g/m^2$ | 3 | | | | | |
| | | | A2 | $g/m^2$ | | 3 | | | | |
| | | | A3 | $g/m^2$ | | | 3 | | | |
| | | | A4 | $g/m^2$ | | | | 3 | | |
| | | | A5 | $g/m^2$ | | | | | 3 | |
| | | | A6 | $g/m^2$ | | | | | | 3 |
| | | | A7 | $g/m^2$ | | | | | | |
| | | | A8 | $g/m^2$ | | | | | | |
| | | | A9 | $g/m^2$ | | | | | | |
| | | | B1 | $g/m^2$ | | | | | | |
| | | | B2 | $g/m^2$ | | | | | | |
| | General-purpose adhesive layer | DL adhesive agent 1 | | $g/m^2$ | | | | | | |
| | Sealant layer | Plant-derived LLDPE film 1 | | µm | 40 | 40 | 40 | 40 | 40 | 40 |

(continued)

| | | Unit | General-purpose pouch | | | | | |
|---|---|---|---|---|---|---|---|---|
| | | | Example B | | | | | |
| | | | 1 | 2 | 3 | 4 | 5 | 6 |
| Aging conditions | Temperature | °C | 22 | 22 | 22 | 22 | 22 | 22 |
| | Time period | Day | 2 | 2 | 2 | 2 | 2 | 2 |
| Evaluation results | Laminate strength | N/ 15 mm width | 3.1 | 3.3 | 3.4 | 3.4 | 3.4 | 3.0 |
| | Oxygen absorbed amount (1) | $cc/m^2$ | 290 | 224 | 112 | 112 | 112 | 261 |
| | Odor sensory evaluation | - | 1 | 1 | 1 | 1 | 1 | 1 |
| | Biomass ratio | % | 16.0 | 16.0 | 16.0 | 16.0 | 16.0 | 16.0 |
| | Hand-cut openability | - | ○ | ○ | ○ | ○ | ○ | ○ |

[Table 15]

| | | | | Unit | General-purpose pouch | | | | | |
|---|---|---|---|---|---|---|---|---|---|---|
| | | | | | Example B | | | Comparative Example B | | |
| | | | | | 7 | 8 | 9 | 1 | 2 | 3 |
| Layer structure of oxygen-absorbing multilayer body | Base material layer oxygen barrier layer | Transparent vapor deposited plant-derived PET film 1 (bottom surface vapor deposited surface) | | µm | 12 | 12 | 12 | 12 | 12 | 12 |
| | Printed layer | Gravure ink 1 | | Presence or absence | Present | Present | Present | Present | Present | Present |
| | General-purpose adhesive layer | DL adhesive agent 1 | | $g/m^2$ | 3 | 3 | 3 | 3 | 3 | 3 |
| | Reinforcing layer | Nylon film 1 | | µm | 15 | 15 | 15 | 15 | 15 | 15 |
| | Oxygen-absorbing adhesive layer | Oxygen-absorbing adhesive composition | A1 | $g/m^2$ | | | | | | |
| | | | A2 | $g/m^2$ | | | | | | |
| | | | A3 | $g/m^2$ | | | | | | |
| | | | A4 | $g/m^2$ | | | | | | |
| | | | A5 | $g/m^2$ | | | | | | |
| | | | A6 | $g/m^2$ | | | | | | |
| | | | A7 | $g/m^2$ | 3 | | | | | |
| | | | A8 | $g/m^2$ | | 3 | | | | |
| | | | A9 | $g/m^2$ | | | 3 | | | |
| | | | B1 | $g/m^2$ | | | | 3 | | |
| | | | B2 | $g/m^2$ | | | | | 3 | |
| | General-purpose adhesive layer | DL adhesive agent 1 | | $g/m^2$ | | | | | | 3 |
| | Sealant layer | Plant-derived LLDPE film 1 | | µm | 40 | 40 | 40 | 40 | 40 | 40 |

(continued)

| | | Unit | General-purpose pouch | | | | | |
|---|---|---|---|---|---|---|---|---|
| | | | Example B | | | Comparative Example B | | |
| | | | 7 | 8 | 9 | 1 | 2 | 3 |
| Aging conditions | Temperature | °C | 22 | 22 | 22 | 22 | 22 | 40 |
| | Time period | Day | 2 | 2 | 2 | 2 | 2 | 3 |
| Evaluation results | Laminate strength | N/ 15 mm width | 3.0 | 3.2 | 3.0 | 3.0 | 2.9 | 4.1 |
| | Oxygen absorbed amount (1) | $cc/m^2$ | 261 | 224 | 182 | 290 | 0 | 0 |
| | Odor sensory evaluation | - | 1 | 1 | 1 | 4 | 1 | 1 |
| | Biomass ratio | % | 16.0 | 16.0 | 16.0 | 16.0 | 16.0 | 16.0 |
| | Hand-cut openability | - | ○ | ○ | ○ | ○ | ○ | ⊙ |

2. Refilling pouch

[Example A10]

A printed layer was formed on the vapor deposited surface of the transparent vapor deposited PET film 1, according to a gravure printing method, with the use of the gravure ink 1.

Next, the DL adhesive agent 1 was applied to the surface of the printed layer and dried so that the dry coating amount became 3 g/$m^2$, and then the nylon film 1 was laminated thereto according to a dry lamination method, and a laminated film was obtained.

Next, the oxygen-absorbing adhesive composition A1 was applied to the surface of the nylon film 1 of the obtained laminated film and dried so that the dry coating amount became 3 g/$m^2$, and then the LLDPE film 2 was laminated thereto according to a dry lamination method, the resultant multilayer body was aged at 40°C for 4 days, and an oxygen-absorbing multilayer body was obtained which had the following layered configuration.

Then, a refilling pouch (stand pouch) shown in Figure 4 was produced so that an inner dimension became 135 mm × 230 mm, and the folded length of the gusset portion at the bottom became 40 mm, with the use of the obtained oxygen-absorbing multilayer body, and was subjected to various evaluations.

Layered configuration: transparent vapor deposited PET film 1 (12 μm)/printed layer/DL adhesive agent 1 (3 g/$m^2$)/nylon film 1 (15 μm)/oxygen-absorbing adhesive composition A1 (3 g/$m^2$)/LLDPE2 (100 μm)

[Comparative Examples A4 and A5]

An oxygen-absorbing multilayer body and a refilling pouch were obtained according to the same operations as in Example A10, except that the oxygen-absorbing adhesive composition was changed according to the descriptions in Table 16, and were evaluated in the same way.

[Example B10]

An oxygen-absorbing multilayer body and a refilling pouch were obtained according to the same operations as in Example A10, except that a material of a plant-derived resin film was used, and were evaluated in the same way.

[Comparative Examples B4 and B5]

An oxygen-absorbing multilayer body and a refilling pouch were obtained according to the same operations as in Comparative Examples A4 and A5, except that a material of a plant-derived resin film was used, and were evaluated in the same way.

3. Pouch for retort

[Example A11]

A printed layer was formed on the vapor deposited surface of the transparent vapor deposited PET film 1, according to a gravure printing method, with the use of the gravure ink 1.

Next, the oxygen-absorbing adhesive composition A1 was applied to the surface of the above printed layer and dried so that the dry coating amount became 3 g/$m^2$, and then the nylon film 1 was laminated thereto according to a dry lamination method, and a laminated film was obtained.

Subsequently, the DL adhesive agent 1 was applied to the surface of the nylon film 1 of the obtained laminated film and dried so that the dry coating amount became 3 g/$m^2$, and then the CPP film 1 was laminated thereto according to a dry lamination method, the resultant multilayer body was aged at 40°C for 3 days, and an oxygen-absorbing multilayer body was obtained which had the following layered configuration.

Then, a pouch for retort having an appearance shown in Figure 5 and an inner dimension of 120 mm × 180 mm was produced with the use of the obtained oxygen-absorbing multilayer body, and was subjected to various evaluations.

Layered configuration: transparent vapor deposited PET film 1 (12 μm)/printed layer/oxygen-absorbing adhesive composition A1 (3 g/$m^2$)/nylon film 1 (15 μm)/DL adhesive agent 1 (3 g/$m^2$)/CPP film 1 (60 μm)

[Comparative Example A6]

An oxygen-absorbing multilayer body and a pouch for retort were obtained according to the same operations as in Example A11, except that the oxygen-absorbing adhesive composition was changed according to the descriptions in Table

16, and were evaluated in the same way.

[Table 16]

| | | | | Unit | Refilling pouch | | | Pouch for retort | |
|---|---|---|---|---|---|---|---|---|---|
| | | | | | Example A | Comparative Example A | | Example A | Comparative Example A |
| | | | | | 10 | 4 | 5 | 11 | 6 |
| Layer structure of oxygen-absorbing multilayer body | Base material layer oxygen barrier layer | Transparent vapor deposited PET film 1 (bottom surface vapor deposited surface) | | µm | 12 | 12 | 12 | 12 | 12 |
| | Printed layer | Gravure ink 1 | | Presence or absence | Present | Present | Present | Present | Present |
| | General-purpose adhesive layer | DL adhesive agent 1 | | g/m$^2$ | 3 | 3 | 3 | | 3 |
| | Reinforcing layer | Nylon film 1 | | µm | 15 | 15 | 15 | | |
| | Oxygen-absorbing adhesive layer | Oxygen-absorbing adhesive composition | A1 | g/m$^2$ | 3 | | | 3 | |
| | | | B1 | g/m$^2$ | | | 3 | | |
| | Reinforcing layer | Nylon film 1 | | µm | | | | 15 | 15 |
| | General-purpose adhesive layer | DL adhesive agent 1 | | g/m$^2$ | | 3 | | 3 | 3 |
| | Sealant layer | LLDPE film 2 | | µm | 100 | 100 | 100 | | |
| | | CPP film 1 | | µm | | | | 60 | 60 |
| Aging conditions | | Temperature | | °C | 40 | 40 | 40 | 40 | 40 |
| | | Time period | | Day | 4 | 3 | 3 | 3 | 3 |
| Evaluation results | | Laminate strength | | N/ 15 mm width | 4.2 | 6.2 | 3.8 | 4.2 | 6 |
| | | Oxygen absorbed amount (1) | | cc/m$^2$ | 291 | 0 | 290 | | |
| | | Oxygen absorbed amount (2) | | ppm | | | | 7.5 | 0 |
| | | Odor sensory evaluation | | - | 1 | 0 | 4 | 1 | 0 |
| | | Retort resistance | | - | | | | ○ | ○ |
| | | Microwave resistance | | - | | | | ○ | ○ |
| | | Contents resistance | | - | ○ | ○ | ○ | | |

[Table 17]

| | | | | Unit | Refilling pouch | | |
|---|---|---|---|---|---|---|---|
| | | | | | Example B | Comparative Example B | |
| | | | | | 10 | 4 | 5 |
| Layer structure of oxygen-absorbing multilayer body | Base material layer oxygen barrier layer | Transparent vapor deposited plant-derived PET film 1 (bottom surface vapor deposited surface) | | μm | 12 | 12 | 12 |
| | Printed layer | Gravure ink 1 | | Presence or absence | Present | Present | Present |
| | Adhesive layer | DL adhesive agent 1 | | $g/m^2$ | 3 | 3 | 3 |
| | Reinforcing layer | Nylon film 2 | | μm | 15 | 15 | 15 |
| | Oxygen-absorbing adhesive layer | Oxygen-absorbing adhesive composition | A1 | $g/m^2$ | 3 | | |
| | | | B1 | $g/m^2$ | | | 3 |
| | General-purpose adhesive laver | DL adhesive agent 1 | | $g/m^2$ | | 3 | |
| | Sealant layer | Plant-derived LLDPE film 2 | | μm | 100 | 100 | 100 |
| Aging conditions | | Temperature | | °C | 40 | 40 | 40 |
| | | Time period | | Day | 4 | 3 | 3 |
| Evaluation results | | Laminate strength | | N/ 15 mm width | 4.2 | 6.2 | 3.8 |
| | | Oxygen absorbed amount (1) | | $cc/m^2$ | 291 | 0 | 290 |
| | | Odor sensory evaluation | | - | 1 | 0 | 4 |
| | | Contents resistance | | - | ○ | ○ | ○ |
| | | Biomass ratio | | % | 13.6 | 13.6 | 13.6 |
| | | Hand-cut openability | | - | ○ | ⊙ | ○ |

4. Pouch for microwave oven

[Example A12]

A printed layer was formed on the corona surface of the transparent vapor deposited PET film 1, according to a gravure printing method, with the use of the gravure ink 1.

Next, the DL adhesive agent 1 was applied to the surface of the above printed layer and dried so that the dry coating amount became 3 $g/m^2$, and then the PET film 1 was laminated thereto according to a dry lamination method, and a laminated film was obtained.

Next, the oxygen-absorbing adhesive composition A1 was applied to the surface of the PET film 1 of the obtained laminated film and dried so that the dry coating amount became 3 $g/m^2$, and then the PET film 1 was laminated thereto according to a dry lamination method. The DL adhesive agent 1 was applied to the surface of the obtained laminated film and dried so that the dry coating amount became 3 $g/m^2$, and then the CPP film 1 was laminated thereto according to a dry lamination method, the resultant multilayer body was aged at 40°C for 3 days, and an oxygen-absorbing multilayer body was obtained which had the following layered configuration.

Then, a pouch for microwave oven (stand pouch) shown in Figure 6 was produced so that an inner dimension became 135 mm × 150 mm, and the folded length of the gusset portion at the bottom became 40 mm, with the use of the

obtained oxygen-absorbing multilayer body, and was subjected to various evaluations.

Layered configuration: transparent vapor deposited PET film 1 (12 μm)/printed layer/DL adhesive agent 1 (3 $g/m^2$)/PET film 1 (12 μm)/oxygen-absorbing adhesive composition A1 (3 $g/m^2$)/PET film 1 (12 μm)/CPP film 1 (60 μm)

[Example A13]

A printed layer was formed on the vapor deposited surface of the transparent vapor deposited PET film 1, according to a gravure printing method, with the use of the gravure ink 1.

Next, the oxygen-absorbing adhesive composition A1 was applied to the surface of the above printed layer and dried so that the dry coating amount became 3 $g/m^2$, and then the CPP film 2 was laminated thereto according to a dry lamination method, and the resultant multilayer body was aged at 40°C for 2 days, and an oxygen-absorbing multilayer body was obtained which had the following layered configuration.

Then, a pouch for microwave oven was produced in the same way as in Example A12, with the use of the obtained oxygen-absorbing multilayer body, and was subjected to various evaluations in the same way.

Layered configuration: transparent vapor deposited PET film 1 (15 μm)/printed layer/oxygen-absorbing adhesive composition A1 (3 $g/m^2$)/CPP film 2 (70 μm)

[Comparative Example A7]

An oxygen-absorbing multilayer body and a pouch for microwave oven were obtained according to the same operations as in Example A13, except that the oxygen-absorbing adhesive composition was changed according to the description in Table 18, and were evaluated in the same way.

5. Pouch for liquid packet

[Example A14]

A printed layer was formed on the vapor deposited surface of the transparent vapor deposited nylon film 1, according to a gravure printing method, with the use of the gravure ink 1.

Next, the oxygen-absorbing adhesive composition A1 was applied to the surface of the above printed layer and dried so that the dry coating amount became 3 $g/m^2$, and then the LLDPE film 3 was laminated thereto according to a dry lamination method, and the resultant multilayer body was aged at 22°C for 2 days, and an oxygen-absorbing multilayer body was obtained which had the following layered configuration.

Then, a pouch for liquid packet, which was shown in Figure 7 and had an inner dimension of 60 × 60 mm, was produced with the use of the obtained oxygen-absorbing multilayer body, and was subjected to various evaluations.

Layered configuration: transparent vapor deposited nylon film 1 (15 μm)/printed layer/oxygen-absorbing adhesive composition A1 (3 $g/m^2$)/LLDPE film 3 (50 μm)

[Comparative Examples A8 and A9]

An oxygen-absorbing multilayer body and a pouch for liquid packet were obtained according to the same operations as in Example A14, except that the type of the oxygen-absorbing adhesive composition and the aging conditions were changed according to the description in Table 18, and were evaluated in the same way.

[Table 18]

| | | | | Unit | Pouch for microwave oven | | | Pouch for liquid packet | | |
|---|---|---|---|---|---|---|---|---|---|---|
| | | | | | Example A | | Comparative Example A | Example A | Comparative Example A | |
| | | | | | 12 | 13 | 7 | 14 | 8 | 9 |
| | Base material layer oxygen barrier layer | Transparent vapor deposited PET film 1 (bottom surface vapor deposited surface) | | µm | 12 | | 12 | | | |
| | | Transparent vapor deposited PBT film 1 (bottom surface vapor deposited surface) | | µm | | 15 | | | | |
| | | Transparent vapor deposited nylon film 1 (bottom surface vapor deposited surface) | | µm | | | | 15 | 15 | 15 |
| | Printed layer | Gravure ink 1 | | Presence or absence | Present | Present | Present | Present | Present | Present |
| | General-purpose adhesive layer | DL adhesive agent 1 | | $g/m^2$ | 3 | | 3 | | | |
| | Reinforcing layer | PET film 1 (both surfaces of which are corona surfaces) | | µm | 12 | | 12 | | | |
| | General-purpose adhesive layer | DL adhesive agent 1 | | $g/m^2$ | | | 3 | | 3 | |
| | Oxygen-absorbing adhesive layer | Oxygen-absorbing adhesive composition | A1 | $g/m^2$ | 3 | 3 | | 3 | | |
| | | | B1 | $g/m^2$ | | | | | | 3 |
| | Reinforcing layer | PET film 1 (both surfaces of which are corona surfaces) | | µm | 12 | | 12 | | | |
| | General-purpose adhesive layer | DL adhesive agent 1 | | $g/m^2$ | 3 | | 3 | | | |
| | Sealant layer | LLDPE film 3 | | µm | | | | 50 | 50 | 50 |
| | | CPP film 1 | | µm | 60 | | 60 | | | |
| | | CPP film 2 | | µm | | 70 | | | | |

(continued)

| | | Unit | Pouch for microwave oven | | | Pouch for liquid packet | | |
|---|---|---|---|---|---|---|---|---|
| | | | Example A | | Comparative Example A | Example A | Comparative Example A | |
| | | | 12 | 13 | 7 | 14 | 8 | 9 |
| Aging conditions | Temperature | °C | 40 | 40 | 40 | 22 | 40 | 22 |
| | Time period | Day | 3 | 3 | 3 | 2 | 3 | 2 |
| Evaluation results | Laminate strength | N/ 15 mm width | 3.2 | 3.2 | 3.2 | 2.9 | 5.5 | 2.6 |
| | Oxygen absorbed amount (1) | $cc/m^2$ | | | | 290 | 0 | 290 |
| | Oxygen absorbed amount (2) | ppm | 6.5 | 7.4 | 0 | | | |
| | Odor sensory evaluation | - | 1 | 1 | 0 | 1 | 0 | 4 |
| | Retort resistance | - | ○ | ○ | ○ | | | |
| | Microwave resistance | - | ○ | ○ | ○ | | | |

[Example B14]

An oxygen-absorbing multilayer body and a pouch for liquid packet were obtained according to the same operations as in Example A14, except that a material of a plant-derived resin film was used, and were evaluated in the same way.

[Comparative Examples B8 and B9]

An oxygen-absorbing multilayer body and a pouch for liquid packet were obtained according to the same operations as in Comparative Examples A8 and A9, except that a material of a plant-derived resin film was used, and were evaluated in the same way.

[Table 19]

| | | | | Unit | Pouch for liquid packet | | |
|---|---|---|---|---|---|---|---|
| | | | | | Example B | Comparative Example B | |
| | | | | | 14 | 8 | 9 |
| Layer structure of oxygen-absorbing multilayer body | Base material layer oxygen barrier layer | Transparent vapor deposited nylon film 1 (bottom surface vapor deposited surface) | | μm | 15 | 15 | 15 |
| | Printed layer | Gravure ink 1 | | Presence or absence | Present | Present | Present |
| | General-purpose adhesive layer | DL adhesive agent 1 | | g/m$^2$ | | 3 | |
| | Oxygen-absorbing adhesive layer | Oxygen-absorbing adhesive composition | A1 | g/m$^2$ | 3 | | |
| | | | B1 | g/m$^2$ | | | 3 |
| | Sealant layer | Plant-derived LLDPE film 3 | | μm | 50 | 50 | 50 |
| Aging conditions | | Temperature | | °C | 22 | 40 | 22 |
| | | Time period | | Day | 2 | 3 | 2 |
| Evaluation results | | Laminate strength | | N/ 15 mm width | 2.9 | 5.5 | 2.6 |
| | | Oxygen absorbed amount (1) | | cc/m$^2$ | 290 | 0 | 290 |
| | | Odor sensory evaluation | | - | 1 | 0 | 4 |
| | | Biomass ratio | | % | 11.0 | 11.0 | 11.0 |
| | | Hand-cut openability | | - | ○ | ⊙ | ○ |

6. Pouch for bag-in-box

[Example A15]

A printed layer was formed on the vapor deposited surface of the transparent vapor deposited nylon film 1, according to a gravure printing method, with the use of the gravure ink 1.

Next, the oxygen-absorbing adhesive composition A1 was applied to the surface of the above printed layer and dried so that the dry coating amount became 3 g/m$^2$, and then the LLDPE film 4 was laminated thereto according to a dry lamination method, and the resultant multilayer body was aged at 22°C for 2 days, and an oxygen-absorbing multilayer body was obtained which had the following layered configuration.

Then, the obtained oxygen-absorbing multilayer body and the LLDPE film 4 were overlapped, and a screw-type

spout was attached thereto, and a pouch for bag-in-box was formed which had a dimension of 570 mm × 570 mm, was a four-side seal type, and had a double bag structure shown in Figure 8.

Layered configuration: transparent vapor deposited nylon 1 (15 μm)/printed layer/oxygen-absorbing adhesive composition A1 (3 g/$m^2$)/LLDPE film 4 (60 μm)

[Comparative Examples A10 and A11]

An oxygen-absorbing multilayer body and a pouch for bag-in-box were obtained according to the same operations as in Example A15, except that the type of the oxygen-absorbing adhesive composition and the aging conditions were changed according to the description in Table 20, and were evaluated in the same way.

[Example B15]

An oxygen-absorbing multilayer body and a pouch for bag-in-box were obtained according to the same operations as in Example A15, except that a material of a plant-derived resin film was used, and were evaluated in the same way.

[Comparative Examples B10 and B11]

An oxygen-absorbing multilayer body and a pouch for bag-in-box were obtained according to the same operations as in Comparative Examples A10 and A11, except that a material of a plant-derived resin film was used, and were evaluated in the same way.

7. Pouch for infusion solution bag

[Example A16]

The oxygen-absorbing adhesive composition A1 was applied to a vapor deposited surface of the transparent vapor deposited PET film 1 and dried so that the dry coating amount became 3 g/$m^2$, and then the CPP film 3 was laminated thereto according to a dry lamination method, and the resultant multilayer body was aged at 22°C for 2 days, and an oxygen-absorbing multilayer body was obtained which had the following layered configuration.

Then, a pouch for infusion solution bag, which was shown in Figure 9 and had an inner dimension of 120 mm × 180 mm, was produced with the use of the obtained oxygen-absorbing multilayer body, and was subjected to various evaluations.

Layered configuration: transparent vapor deposited PET film 1 (12 μm)/oxygen-absorbing adhesive composition A1 (3 g/$m^2$)/CPP film 3 (100 μm)

[Comparative Example A12]

An oxygen-absorbing multilayer body and a pouch for infusion solution bag were obtained according to the same operations as in Example A16, except that the type of the oxygen-absorbing adhesive composition and the aging conditions were changed according to the description in Table 20, and were evaluated in the same way.

[Table 20]

| | | | | Unit | Pouch for bag-in-box | | | Pouch for infusion bag | |
|---|---|---|---|---|---|---|---|---|---|
| | | | | | Example A | Comparative Example A | | Example A | Comparative Example A |
| | | | | | 15 | 10 | 11 | 16 | 12 |
| Layer structure of oxygen-absorbing multilayer body | Base material layer oxygen barrier layer | Transparent vapor deposited PET film 1 (bottom surface vapor deposited surface) | | μm | | | | 12 | 12 |
| | | Transparent vapor deposited nylon film 1 (bottom surface vapor deposited surface) | | μm | 15 | 15 | 15 | | |
| | Printed layer | Gravure ink 1 | | Presence or absence | Present | Present | Present | Present | Present |
| | Oxygen-absorbing adhesive layer | Oxygen-absorbing adhesive composition | A1 | g/m$^2$ | 3 | | | 3 | |
| | | | B1 | g/m$^2$ | | | 3 | | |
| | General-purpose adhesive layer | DL adhesive agent 1 | | g/m$^2$ | | 3 | | | 3 |
| | Sealant layer | LLDPE film 4 | | μm | 60 | 60 | 60 | | |
| | | CPP film 3 | | μm | | | | 100 | 100 |
| Aging conditions | | Temperature | | °C | 22 | 22 | 22 | 22 | 40 |
| | | Time period | | Day | 2 | 2 | 2 | 2 | 3 |
| Evaluation results | | Laminate strength | | N/ 15 mm width | 3.9 | 5.8 | 3.1 | 3.2 | 4.2 |
| | | Oxygen absorbed amount (1) | | cc/m$^2$ | 290 | 0 | 287 | 288 | 0 |
| | | Odor sensory evaluation | | - | 1 | 0 | 4 | 1 | 0 |
| | | Retort resistance | | - | | | | ○ | ○ |

[Table 21]

| | | | | Unit | Pouch for bag-in-box | | |
|---|---|---|---|---|---|---|---|
| | | | | | Example B | Comparative Example B | |
| | | | | | 15 | 10 | 11 |
| Layer structure of oxygen-absorbing multilayer body | Base material layer oxygen barrier layer | Transparent vapor deposited nylon film 1 (bottom surface vapor deposited surface) | | μm | 15 | 15 | 15 |
| | Printed layer | Gravure ink 1 | | Presence or absence | Present | Present | Present |
| | Oxygen-absorbing adhesive layer | Oxygen-absorbing adhesive composition | A1 | g/m$^2$ | 3 | | |
| | | | B1 | g/m$^2$ | | | 3 |
| | General-purpose adhesive layer | DL adhesive agent 1 | | g/m$^2$ | | 3 | |
| | Sealant layer | Plant-derived LLDPE film 4 | | μm | 60 | 60 | 60 |
| Aging conditions | | Temperature | | °C | 22 | 22 | 22 |
| | | Time period | | Day | 2 | 2 | 2 |
| Evaluation results | | Laminate strength | | N/ 15 mm width | 3.9 | 5.8 | 3.1 |
| | | Oxygen absorbed amount (1) | | cc/m$^2$ | 290 | 0 | 287 |
| | | Odor sensory evaluation | | - | 1 | 0 | 4 |
| | | Biomass ratio | | % | 11.6 | 11.6 | 11.6 |

8. Pouch for stick packaging

[Example A17]

A printed layer was formed on the corona surface of the PET film 2, according to a gravure printing method, with the use of the gravure ink 1.

Next, the DL adhesive agent 1 was applied to the surface of the above printed layer and dried so that the dry coating amount became 3 g/m$^2$, and then the aluminum foil 1 was laminated thereto according to a dry lamination method, and a laminated film was obtained.

Next, the oxygen-absorbing adhesive composition A1 was applied to the surface of the aluminum foil of the laminated film obtained in the above and dried so that the dry coating amount became 3 g/m$^2$, and then the LLDPE film 1 was laminated thereto according to a dry lamination method, the resultant multilayer body was aged at 40°C for 3 days, and an oxygen-absorbing multilayer body was obtained which had the following layered configuration.

Then, a pouch for stick packaging, which was shown in Figure 10 and had an inner dimension of 35 × 130 mm was produced with the use of the obtained oxygen-absorbing multilayer body, and was subjected to various evaluations.

Layered configuration: PET film 2 (12 μm)/printed layer/DL adhesive agent 1 (3 g/m$^2$)/aluminum foil 1 (7 μm)/oxygen-absorbing adhesive composition A1 (3 g/m$^2$)/LLDPE film 1 (40 μm)

[Comparative Example A13]

An oxygen-absorbing multilayer body and a pouch for stick packaging were obtained according to the same operations as in Example A17, except that the type of the oxygen-absorbing adhesive composition was changed according to the description in Table 22, and were evaluated in the same way.

[Example B17]

An oxygen-absorbing multilayer body and a pouch for bag-in-box were obtained according to the same operations as in Example A17, except that a material of a plant-derived resin film was used, and were evaluated in the same way.

[Comparative Example B13]

An oxygen-absorbing multilayer body and a pouch for bag-in-box were obtained according to the same operations as in Comparative Example A13, except that a material of a plant-derived resin film was used, and were evaluated in the same way.

9. Pouch with spout

[Example A18]

A printed layer was formed on the vapor deposited surface of the transparent vapor deposited PET film 1, according to a gravure printing method, with the use of the gravure ink 1.

Next, the oxygen-absorbing adhesive composition A1 was applied to the surface of the above printed layer and dried so that the dry coating amount became 3 $g/m^2$, and then the nylon film 1 was laminated thereto according to a dry lamination method, and a laminated film was obtained.

Next, the oxygen-absorbing adhesive composition A1 was applied to the surface of the nylon film 1 of the obtained laminated film and dried so that the dry coating amount became 3 $g/m^2$, and then the LLDPE film 2 was laminated thereto according to a dry lamination method, the resultant multilayer body was aged at 22°C for 2 days, and an oxygen-absorbing multilayer body was obtained which had the following layered configuration.

Then, a pouch with spout (gusset pouch) shown in Figure 11 was produced so that an inner dimension became 135 mm $\times$ 210 mm and the folded length of the gusset became 45 mm, with the use of the obtained oxygen-absorbing multilayer body, a spout was attached thereto which was produced by injection molding of high-density polyethylene, and the resultant pouch was subjected to various evaluations.

Layered configuration: transparent vapor deposited PET film 1 (12 $\mu$m)/printed layer/oxygen-absorbing adhesive composition A1 (3 $g/m^2$)/nylon film 1 (15 $\mu$m)/oxygen-absorbing adhesive composition A1 (3 $g/m^2$)/LLDPE film 2 (100 $\mu$m)

[Comparative Example A14]

An oxygen-absorbing multilayer body and a pouch with spout were obtained according to the same operations as in Example A18, except that the type of the oxygen-absorbing adhesive composition and the aging conditions were changed according to the description in Table 22, and were evaluated in the same way.

[Example B18]

An oxygen-absorbing multilayer body and a pouch for bag-in-box were obtained according to the same operations as in Example A18, except that a material of a plant-derived resin film was used, and were evaluated in the same way.

[Comparative Example B14]

An oxygen-absorbing multilayer body and a pouch for bag-in-box were obtained according to the same operations as in Comparative Example A14, except that a material of a plant-derived resin film was used, and were evaluated in the same way.

[Table 22]

| | | | | Unit | Pouch bag for stick packaging | | Pouch bag with spout | |
|---|---|---|---|---|---|---|---|---|
| | | | | | Example A | Comparative Example A | Example A | Comparative Example A |
| | | | | | 17 | 13 | 18 | 14 |
| Layer structure of oxygen absorbing multilayer body | Base material layer oxygen barrier layer | PET film 2 (bottom surface of which is corona surface) | | μm | 12 | 12 | | |
| | | DL adhesive agent 1 | | g/m2 | 3 | 3 | | |
| | | Transparent vapor deposited PET film 1 (bottom surface vapor deposited surface) | | μm | | | 12 | 12 |
| | Printed layer | Gravure ink 1 | | Presence or absence | Present | Present | Present | Present |
| | Adhesive layer | DL adhesive agent 1 | | g/m2 | 3 | 3 | 3 | 3 |
| | Oxygen barrier layer | Aluminum foil 1 | | μm | 7 | 7 | | |
| | Reinforcing laver | Nylon film 1 | | μm | | | 15 | 15 |
| | Oxygen-absorbing adhesive laver | Oxygen-absorbing adhesive composition | A1 | g/m2 | 3 | | 3 | |
| | Adhesive layer | DL adhesive agent 1 | | g/m2 | | 3 | | 3 |
| | Sealant layer | LLDPE film 1 | | μm | 40 | 40 | | |
| | | LLDPE film 2 | | μm | | | 100 | 100 |
| Aging conditions | | Temperature | | °C | 40 | 40 | 22 | 40 |
| | | Time period | | Day | 3 | 3 | 2 | 3 |
| Evaluation results | | Laminate strength | | N/ 15 mm width | 4.0 | 4.6 | 3.9 | 5.7 |
| | | Oxygen absorbed amount (1) | | cc/m2 | 292 | 0 | 288 | 0 |
| | | Odor sensory evaluation | | - | 1 | 0 | 1 | 0 |

[Table 23]

| | | | | Unit | Pouch bag for stick packaging | | Pouch bag with spout | |
|---|---|---|---|---|---|---|---|---|
| | | | | | Example B | Comparative Example B | Example B | Comparative Example B |
| | | | | | 17 | 13 | 18 | 14 |
| Layer structure of oxygen-absorbing multilayer body | Base material layer oxygen barrier layer | Plant-derived PET film 2 (bottom surface of which is corona surface) | | µm | 12 | 12 | | |
| | | DL adhesive agent 1 | | $g/m^2$ | 3 | 3 | | |
| | | Transparent vapor deposited plant-derived PET film 1 (bottom surface vapor deposited surface) | | µm | | | 12 | 12 |
| | Printed layer | Gravure ink 1 | | Presence or absence | Present | Present | Present | Present |
| | Adhesive layer | DL adhesive agent 1 | | $g/m^2$ | 3 | 3 | 3 | 3 |
| | Oxygen barrier layer | Aluminum foil 1 | | µm | 7 | 7 | | |
| | Reinforcing laver | Nylon film 1 | | µm | | | 15 | 15 |
| | Oxygen-absorbing adhesive layer | Oxygen-absorbing adhesive composition | A1 | $g/m^2$ | 3 | | 3 | |
| | Adhesive layer | DL adhesive agent 1 | | $g/m^2$ | | 3 | | 3 |
| | Sealant layer | Plant-derived LLDPE film 1 | | µm | 40 | 40 | | |
| | | Plant-derived LLDPE film 2 | | µm | | | 100 | 100 |
| Aging conditions | | Temperature | | °C | 40 | 40 | 22 | 40 |
| | | Time period | | Day | 3 | 3 | 2 | 3 |
| Evaluation results | | Laminate strength | | N/ 15 mm width | 4.0 | 4.6 | 3.9 | 5.7 |
| | | Oxygen absorbed amount (1) | | $cc/m^2$ | 292 | 0 | 288 | 0 |
| | | Odor sensory evaluation | | - | 1 | 0 | 1 | 0 |
| | | Biomass ratio | | % | 11.7 | 11.7 | 13.8 | 13.8 |
| | | Hand-cut openability | | - | ○ | ⊙ | | |

10. Exterior pouch for electronic parts

[Example A19]

The DL adhesive agent 1 was applied to the vapor deposited surface of the transparent vapor deposited PET film 2 and dried so that the dry coating amount became 3 $g/m^2$, and then the nylon film 2 was laminated thereto according to a dry lamination method, and a laminated film was obtained.

Then, the oxygen-absorbing adhesive composition A1 was applied to the surface of the nylon film 2 of the obtained laminated film and dried so that the dry coating amount became 3 $g/m^2$, and then the LLDPE film 5 was laminated thereto according to a dry lamination method, the resultant multilayer body was aged at 40°C for 3 days, and an oxygen-absorbing multilayer body was obtained which had the following layered configuration.

Then, an exterior pouch for electronic parts having an appearance shown in Figure 12 and an inner dimension of 120 mm × 180 mm, was produced with the use of the obtained oxygen-absorbing multilayer body, and was subjected to various evaluations.

Layered configuration: transparent vapor deposited PET film 2 (12 μm)/DL adhesive agent 1 (3 $g/m^2$)/nylon film 2 (15 μm)/oxygen-absorbing adhesive composition A1 (3 $g/m^2$)/LLDPE film 5 (50 μm)

[Comparative Example 15]

An oxygen-absorbing multilayer body Y having the following layered configuration was obtained according to the same operations as in Example A19, except that the oxygen-absorbing adhesive composition A1 was replaced with the DL adhesive agent 1; and an exterior pouch for electronic parts was produced, and was evaluated in the same way.

Layered configuration: transparent vapor deposited PET film 2 (12 μm)/DL adhesive agent 1 (3 $g/m^2$)/nylon film 2 (15 μm)/DL adhesive agent 1 (3 $g/m^2$)/LLDPE film 5 (50 μm)

[Example B19]

An oxygen-absorbing multilayer body and an exterior pouch for electronic parts were obtained according to the same operations as in Example A19, except that a material of a plant-derived resin film was used, and were evaluated in the same way.

[Comparative Example B14]

An oxygen-absorbing multilayer body and an exterior pouch for electronic parts were obtained according to the same operations as in Comparative Example A15, except that a material of a plant-derived resin film was used, and were evaluated in the same way.

[Table 24]

| | | | | Unit | Exterior pouch for electronic parts | | | |
|---|---|---|---|---|---|---|---|---|
| | | | | | Example A | Comparative Example A | Example B | Comparative Example B |
| | | | | | 19 | 15 | 19 | 15 |
| Layer structure of oxygen-absorbing multilayer body | Base material layer oxygen barrier layer | Transparent vapor deposited PET film 2 (bottom surface vapor deposited surface) | | μm | 12 | 12 | | |
| | | Transparent vapor deposited plant-derived PET film 1 (bottom surface vapor deposited surface) | | μm | | | 12 | 12 |
| | Adhesive layer | DL adhesive agent 1 | | g/m$^2$ | 3 | 3 | 3 | 3 |
| | Reinforcing layer | Nylon film 2 | | μm | 15 | 15 | 15 | 15 |
| | Oxygen-absorbing adhesive layer | Oxygen-absorbing adhesive composition | A1 | g/m$^2$ | 3 | | 3 | |
| | | | B1 | g/m$^2$ | | | | |
| | General-purpose adhesive layer | DL adhesive agent 1 | | g/m$^2$ | | 3 | | 3 |
| | Sealant layer | LLDPE film 5 | | μm | 50 | 50 | | |
| | | Plant-derived LLDPE film 3 | | μm | | | 50 | 50 |
| Aging conditions | | Temperature | | °C | 40 | 40 | 40 | 40 |
| | | Time period | | Day | 3 | 3 | 3 | 3 |
| Evaluation results | | Laminate strength | | N/ 15 mm width | 4.4 | 6 | 4.3 | 6.1 |
| | | Oxygen absorbed amount (1) | | cc/m$^2$ | 289 | 0 | 289 | 0 |
| | | Odor sensory evaluation | | - | 1 | 0 | 1 | 0 |
| | | Biomass ratio | | % | 0 | 0 | 12.5 | 12.5 |

<Summary of results>

Various pouches of all Examples A of the present invention have shown a satisfactory balance among the laminate strength, the oxygen absorbability and the low odor generation, and in addition, have shown satisfactory retort resistance, microwave resistance, contents resistance, and the like, according to the type of each pouch.

On the other hand, various pouches of Comparative Example A have been inferior in any of the laminate strength, the oxygen absorbability and the low odor generation, and have not shown a satisfactory balance among these properties.

Various pouches of all Examples B of the present invention have contained plant-derived polyolefins and have had a high biomass ratio; have shown a satisfactory balance among the laminate strength, the oxygen absorbability and the low odor generation, while reducing an environmental load; and in addition, have shown satisfactory hand cutting openability, retort resistance, microwave resistance, contents resistance, and the like, according to the type of each pouch.

On the other hand, various pouches of Comparative Example B have been inferior in any of the laminate strength, the oxygen absorbability and the low odor generation, and have not shown a satisfactory balance among these properties.

<Evaluation method>

[Oxygen absorbed amount (1)]

(In the case of a transparent pouch with the use of a transparent vapor deposited PET film)

The inside of an obtained pouch was filled with air of 1400 cc/$m^2$ with respect to the inner surface area of a bag with a syringe, and an oxygen sensor chip (non-destructive oxygen sensor chip manufactured by PreSens Precision Sensing limited company); the injection portion was repaired with an adhesive tape; an oxygen concentration in the pouch after having been stored in a thermostatic chamber at 25°C for 14 days was measured with the use of a non-destructive oxygen concentration meter; and the oxygen absorbed amount was calculated. The oxygen concentration was measured with the use of a non-destructive oxygen concentration meter (FIBOX4 OXYGEN METER) manufactured by PreSens Precision Sensing limited company. The unit was cc/$m^2$.

(In the case of an opaque pouch with the use of an aluminum foil)

The inside of an obtained pouch was filled with air of 1400 cc/$m^2$ with respect to the inner surface area of a bag with a syringe; the air in the pouch after having been stored in a thermostatic chamber at 25°C for 14 days was sampled with a syringe; the oxygen concentration was measured; and the oxygen absorbed amount was calculated. The oxygen concentration was measured with the use of a zirconia oxygen concentration meter (manufactured by Toray Industries, Inc.). The unit was cc/$m^2$.

[Oxygen absorbed amount (2)]

The inside of an obtained pouch was filled with an oxygen sensor chip (non-destructive oxygen sensor chip manufactured by PreSens Precision Sensing limited company), and 180 ml of water at room temperature, and then was sealed by heat sealing; and a concentration of dissolved oxygen in the pouch was measured with the use of a non-destructive oxygen concentration meter. After that, the filled pouch was subjected to retort sterilization treatment at 130°C for 30 minutes, and then the oxygen absorbed amount was measured again; and the difference was determined to be the oxygen absorbed amount (2). The oxygen concentration was measured with the use of a non-destructive oxygen concentration meter (FIBOX4 OXYGEN METER) manufactured by PreSens Precision Sensing limited company. The unit was ppm.

[Laminate strength]

A test piece having a reed shape of 15 mm wide was produced from the obtained oxygen-absorbing multilayer body, and a laminate strength between the layers via the oxygen-absorbing adhesive layer was measured with the use of a tensile tester, at a tensile speed of 50 mm/min.

[Odor sensory evaluation]

After the oxygen absorbed amount has been measured, an odor in the pouch was smelled, and the odor was determined according to the following criteria. The odor was determined except an odor derived from the sealant layer.

Evaluation criteria:

0: no odor
1: faint odor
2: weak odor
3: medium odor
4: strong odor

[Retort resistance]

The pouch was filled with water and subjected to retort treatment at 121°C for 30 minutes, and the presence or absence of delamination of the pouch was visually detected. The meanings of the descriptions in Tables are as follows.

Good: No delamination
Poor: Delamination present

[Microwave resistance]

The pouch was filled with water and heated in a microwave oven under conditions of 600 w and 2 minutes, and the presence or absence of delamination of the pouch was visually detected. The meanings of the descriptions in Tables are as follows.

Good: No delamination
Poor: Delamination present

[Contents resistance]

The pouch was filled with a shampoo liquid, and stored at 40°C for 1 week, and then, the presence or absence of delamination of the pouch was visually detected. The meanings of the descriptions in Tables are as follows.

Good: No delamination
Poor: Delamination present

[Biomass ratio]

A biomass ratio of the whole multilayer body was calculated from the following equation, after operations of: combusting a sealant layer which was peeled off and taken out from the multilayer body; thereby generating carbon dioxide; collecting and purifying the carbon dioxide in a vacuum line; measuring a concentration of $^{13}C$ ($^{13}C/^{12}C$) and a concentration of $^{14}C$ ($^{14}C/^{12}C$) in graphite which was formed by the reduction with hydrogen, in which Fe was used as a catalyst, with a device dedicated to $^{14}C$-AMS (manufactured by NEC Corporation) based on a tandem accelerator; and calculating a ratio of $^{14}C$ concentration in the sealant layer. As a standard sample, an oxalic acid standard sample ($HO_xII$) was used which was provided by National Institute of Standards and Technology (NIST).

$$\text{Biomass ratio (\%)} = {}^{14}\text{C concentration (pMC)} \times 0.935$$

[Hand cutting openability]

A notch was formed in a pouch bag having no notch, and the pouch bag was opened from the notch portion; and it was checked whether catching at the time when opening was started and stretching of the sealant film were present or absent. Five persons each took charged of two pouches, and evaluated and determined 10 pouches in total.

Determination criteria

Excellent: Initial opening is smooth, and there is neither catching nor stretching of the sealant.
Good: There is slight catching as compared with Excellent, or slight stretching of the sealant.
Fair: There is catching, or stretching of the sealant.
Poor: The initial opening is heavy, and there is severe catching or stretching of the sealant.

<<C: Production and evaluation of oxygen-absorbing multilayer body for lid part>>

[Example C1]

A printed layer was formed on the vapor deposited surface of the transparent vapor deposited PET film 1 serving as the base material layer and the oxygen barrier layer, according to a gravure printing method, with the use of the gravure ink 1.

Next, the DL adhesive agent 1 was applied to the surface of the printed layer and dried so that the dry coating amount became 3 g/m$^2$, and then the nylon film 1 was bonded and stacked thereon, according to a dry lamination method.

Next, the oxygen-absorbing adhesive composition A1 was applied to the surface of the stacked nylon film 1 and dried so that the dry coating amount became 3 g/m$^2$, and then the easy-peel film 1 serving as the sealant layer was bonded and stacked thereon according to a dry lamination method.

Then, the resultant multilayer body was aged at 40°C for 3 days, and thereby an oxygen-absorbing multilayer body for a lid part was obtained, and was subjected to various evaluations.

Layered configuration: transparent vapor deposited PET film 1 [PET film (12 μm)/transparent vapor deposited layer (40 nm)]/gravure ink 1/DL adhesive agent 1 (3 g/m$^2$)/nylon film 1 (15 μm)/oxygen-absorbing adhesive composition A1 (3 g/m$^2$)/easy-peel film 1 (50 μm)

(Production and evaluation of oxygen-absorbing packaging container)

A tray-shaped bottom part having a layered configuration of PP/EVOH/PP was prepared, and the sealant layer surface of the oxygen-absorbing multilayer body for a lid part obtained in the above was overlapped on a flange portion of an opening peripheral edge of the bottom part so as to face each other, and the overlapped portion was heat-sealed; and an oxygen-absorbing packaging container was produced, and was subjected to various evaluations.

[Examples C2 to C10, and Comparative Examples C1 to C4]

Oxygen-absorbing multilayer bodies for a lid part and oxygen-absorbing packaging containers were obtained by the same operation as in Example C1, except that the oxygen-absorbing adhesive composition A1 of Example C1 was changed to any of the oxygen-absorbing adhesive compositions A2 to A8, B1 to B4 and the DL adhesive agent 1 according to the descriptions of Tables 25 to 27, and were evaluated in the same way.

[Example C9]

(Production and evaluation of oxygen-absorbing multilayer body for lid part)

A printed layer was formed on one surface of the OPP film 1 serving as the base material layer, according to a gravure printing method, with the use of the gravure ink 1.

Next, the DL adhesive agent 1 was applied to the surface of the printed layer and dried so that the dry coating amount became 3 g/m$^2$, and then the transparent vapor deposited PET film 1 was placed thereon so that the vapor deposited surface faced thereto, and bonded and stacked thereon, according to a dry lamination method.

Next, the oxygen-absorbing adhesive composition A1 was applied to the non-vapor deposited surface of the stacked transparent vapor deposited PET film 1 and dried so that the dry coating amount became 3 g/m$^2$, and then the LLDPE film 1 serving as the sealant layer was bonded and stacked thereon according to a dry lamination method.

Then, the resultant multilayer body was aged in the same way as in Example C1, and thereby an oxygen-absorbing multilayer body for a lid part was obtained, and was subjected to evaluation in the same way.

Layered configuration: OPP film 1/gravure ink 1/DL adhesive agent 1 (3 g/m$^2$)/transparent vapor deposited PET film 1 [transparent vapor deposited layer (40 nm)/PET film (12 μm)]/oxygen-absorbing adhesive composition A1 (3 g/m$^2$)/LLDPE film 1 (50 μm)

(Production and evaluation of oxygen-absorbing packaging container)

A bottom part similar to Example C1 was formed by deep drawing, which had a concave portion for accommodating contents therein, and was formed of an unstretched coextruded multilayer film (trade name: Diamiron, manufactured by Mitsubishi Plastics, Inc.) having a layered configuration of unstretched polyamide resin layer/resin layer of saponified product of ethylene-vinyl acetate copolymer/low-density polyethylene resin layer, in this order from the surface. Then, the flange portion of the bottom part and the oxygen-absorbing multilayer body for a lid part obtained in the above were overlapped, and the overlapped portion was heat-sealed; and an oxygen-absorbing packaging container was

produced.

[Table 25]

<table>
<tr><td rowspan="2"></td><td rowspan="2" colspan="3"></td><td rowspan="2">Unit</td><td colspan="5">Example C</td></tr>
<tr><td>1</td><td>2</td><td>3</td><td>4</td><td>5</td></tr>
<tr><td rowspan="20">Layer structure of oxygen-absorbing multilayer body for lid part</td><td>Base material layer/oxygen barrier layer</td><td colspan="2">Transparent vapor deposited PET film 1 (bottom surface vapor deposited layer)</td><td>μm</td><td>12</td><td>12</td><td>12</td><td>12</td><td>12</td></tr>
<tr><td>Base material layer</td><td colspan="2">OPP film 1</td><td>μm</td><td></td><td></td><td></td><td></td><td></td></tr>
<tr><td>Printed layer</td><td colspan="2">Gravure ink 1</td><td>μm</td><td>Present</td><td>Present</td><td>Present</td><td>Present</td><td>Present</td></tr>
<tr><td>General-purpose adhesive layer</td><td colspan="2">DL adhesive agent 1</td><td>g/m<sup>2</sup></td><td>3</td><td>3</td><td>3</td><td>3</td><td>3</td></tr>
<tr><td>Reinforcing layer</td><td colspan="2">Nylon film 1</td><td>μm</td><td>15</td><td>15</td><td>15</td><td>15</td><td>15</td></tr>
<tr><td>Oxygen barrier layer /Reinforcing layer</td><td colspan="2">Transparent vapor deposited PET film 1 (upper surface vapor deposited surface)</td><td>μm</td><td></td><td></td><td></td><td></td><td></td></tr>
<tr><td rowspan="12">Oxygen-absorbing adhesive layer</td><td rowspan="11">Oxygen-absorbing adhesive composition</td><td>A1</td><td>g/m<sup>2</sup></td><td>3</td><td></td><td></td><td></td><td></td></tr>
<tr><td>A2</td><td>g/m<sup>2</sup></td><td></td><td>3</td><td></td><td></td><td></td></tr>
<tr><td>A3</td><td>g/m<sup>2</sup></td><td></td><td></td><td>3</td><td></td><td></td></tr>
<tr><td>A4</td><td>g/m<sup>2</sup></td><td></td><td></td><td></td><td>3</td><td></td></tr>
<tr><td>A5</td><td>g/m<sup>2</sup></td><td></td><td></td><td></td><td></td><td>3</td></tr>
<tr><td>A6</td><td>g/m<sup>2</sup></td><td></td><td></td><td></td><td></td><td></td></tr>
<tr><td>A7</td><td>g/m<sup>2</sup></td><td></td><td></td><td></td><td></td><td></td></tr>
<tr><td>A8</td><td>g/m<sup>2</sup></td><td></td><td></td><td></td><td></td><td></td></tr>
<tr><td>A9</td><td>g/m<sup>2</sup></td><td></td><td></td><td></td><td></td><td></td></tr>
<tr><td>B1</td><td>g/m<sup>2</sup></td><td></td><td></td><td></td><td></td><td></td></tr>
<tr><td>B2</td><td>g/m<sup>2</sup></td><td></td><td></td><td></td><td></td><td></td></tr>
<tr><td colspan="2">DL adhesive agent 1</td><td>g/m<sup>2</sup></td><td></td><td></td><td></td><td></td><td></td></tr>
<tr><td rowspan="2">Sealant layer</td><td colspan="2">Easy-peel film 1</td><td>μm</td><td>50</td><td>50</td><td>50</td><td>50</td><td>50</td></tr>
<tr><td colspan="2">LLDPE film 1</td><td>μm</td><td></td><td></td><td></td><td></td><td></td></tr>
<tr><td rowspan="3">Evaluation results</td><td colspan="3">Laminate strength</td><td>N/ 15 mm width</td><td>3.8</td><td>4.1</td><td>4.2</td><td>4.2</td><td>4.2</td></tr>
<tr><td colspan="3">Oxygen absorbed amount (1)</td><td>cc/m<sup>2</sup></td><td>256</td><td>226</td><td>112</td><td>112</td><td>112</td></tr>
<tr><td colspan="3">Odor sensory evaluation</td><td>-</td><td>1</td><td>1</td><td>1</td><td>1</td><td>1</td></tr>
</table>

[Table 26]

| | | | | Unit | Example C | | | | |
|---|---|---|---|---|---|---|---|---|---|
| | | | | | 6 | 7 | 8 | 9 | 10 |
| Layer structure of oxygen-absorbing multilayer body for lid part | Base material layer/oxygen barrier layer | Transparent vapor deposited PET film 1 (bottom surface vapor deposited layer) | | μm | 12 | 12 | 12 | 12 | |
| | Base material layer | OPP film 1 | | μm | | | | | 20 |
| | Printed layer | Gravure ink 1 | | μm | Present | Present | Present | Present | Present |
| | General-purpose adhesive layer | DL adhesive agent 1 | | $g/m^2$ | 3 | 3 | 3 | 3 | 3 |
| | Reinforcing layer | Nylon film 1 | | μm | 15 | 15 | 15 | 15 | |
| | Oxygen barrier layer /Reinforcing layer | Transparent vapor deposited PET film 1 (upper surface vapor deposited surface) | | μm | | | | | 12 |
| | Oxygen-absorbing adhesive layer | Oxygen-absorbing adhesive composition | A1 | $g/m^2$ | | | | | 3 |
| | | | A2 | $g/m^2$ | | | | | |
| | | | A3 | $g/m^2$ | | | | | |
| | | | A4 | $g/m^2$ | | | | | |
| | | | A5 | $g/m^2$ | | | | | |
| | | | A6 | $g/m^2$ | 3 | | | | |
| | | | A7 | $g/m^2$ | | 3 | | | |
| | | | A8 | $g/m^2$ | | | 3 | | |
| | | | A9 | $g/m^2$ | | | | 3 | |
| | | | B1 | $g/m^2$ | | | | | |
| | | | B2 | $g/m^2$ | | | | | |
| | | DL adhesive agent 1 | | $g/m^2$ | | | | | |
| | Sealant layer | Easy-peel film 1 | | μm | 50 | 50 | 50 | 50 | |
| | | LLDPE film 1 | | μm | | | | | 50 |
| Evaluation results | Laminate strength | | | N/ 15 mm width | 3.7 | 3.7 | 4.0 | 3.7 | 3.8 |
| | Oxygen absorbed amount (1) | | | $cc/m^2$ | 262 | 262 | 226 | 183 | 256 |
| | Odor sensory evaluation | | | - | 1 | 1 | 1 | 1 | 1 |

[Table 27]

| | | | | Unit | Comparative Example C | | | |
|---|---|---|---|---|---|---|---|---|
| | | | | | 1 | 2 | 3 | 4 |
| Layer structure of oxygen-absorbing multilayer body for lid part | Base material layer/oxygen barrier layer | Transparent vapor deposited PET film 1 (bottom surface vapor deposited layer) | | μm | 12 | 12 | 12 | |
| | Base material layer | OPP film 1 | | μm | | | | 20 |
| | Printed layer | Gravure ink 1 | | μm | Present | Present | Present | Present |
| | General-purpose adhesive layer | DL adhesive agent 1 | | g/m$^2$ | 3 | 3 | 3 | 3 |
| | Reinforcing layer | Nylon film 1 | | μm | 15 | 15 | 15 | |
| | Oxygen barrier layer /Reinforcing layer | Transparent vapor deposited PET film 1 (upper surface vapor deposited surface) | | μm | | | | 12 |
| | Oxygen-absorbing adhesive layer | Oxygen-absorbing adhesive composition | A1 | g/m$^2$ | | | | |
| | | | A2 | g/m$^2$ | | | | |
| | | | A3 | g/m$^2$ | | | | |
| | | | A4 | g/m$^2$ | | | | |
| | | | A5 | g/m$^2$ | | | | |
| | | | A6 | g/m$^2$ | | | | |
| | | | A7 | g/m$^2$ | | | | |
| | | | A8 | g/m$^2$ | | | | |
| | | | A9 | g/m$^2$ | | | | |
| | | | B1 | g/m$^2$ | 3 | | | |
| | | | B2 | g/m$^2$ | | 3 | | |
| | | DL adhesive agent 1 | | g/m$^2$ | | | 3 | 3 |
| | Sealant layer | Easy-peel film 1 | | μm | 50 | 50 | 50 | |
| | | LLDPE film 1 | | μm | | | | 50 |
| Evaluation results | Laminate strength | | | N/ 15 mm width | 3.7 | 3.8 | 6.5 | 6.4 |
| | Oxygen absorbed amount (1) | | | cc/m$^2$ | 260 | 0 | 0 | 0 |
| | Odor sensory evaluation | | | - | 4 | 1 | 0 | 0 |

<Summary of results>

The oxygen-absorbing multilayer bodies or packaging containers of all Examples have shown an excellent balance among the laminate strength, the oxygen absorbed amount and the low odor generation.

On the other hand, the multilayer bodies or packaging containers of Comparative Examples have shown results inferior in any of the laminate strength, the oxygen absorbed amount and the low odor generation.

<Evaluation method>

[Oxygen absorbed amount (1)]

An oxygen-sensor chip (non-destructive oxygen-sensor chip manufactured by PreSens Precision Sensing limited company) was enclosed in a tray-shaped bottom part having a concave portion, followed by nitrogen replacement, and the obtained lid part and the flange portion of the bottom part were sealed by heat sealing under nitrogen replacement.

Air of 1400 cc/$m^2$ was injected to the inside of the container with respect to the inner surface area of a bag with a syringe; the injection portion was repaired with an adhesive tape; an oxygen concentration in the pouch after having been stored in a thermostatic chamber at 25°C for 14 days was measured with the use of a non-destructive oxygen concentration meter; and the oxygen absorbed amount was calculated. The oxygen concentration was measured with the use of a non-destructive oxygen concentration meter (FIBOX4 OXYGEN METER) manufactured by PreSens Precision Sensing limited company.

[Laminate strength]

A test piece having a reed shape of 15 mm wide was produced from the obtained oxygen-absorbing multilayer body, and a laminate strength between the layers via the oxygen-absorbing adhesive layer was measured with the use of a tensile tester, at a tensile speed of 50 mm/min.

[Odor sensory evaluation]

After the oxygen absorbed amount has been measured, an odor in the packaging container was smelled, and the odor was determined according to the following criteria. The odor was determined except an odor derived from the sealant layer.

Evaluation criteria:

0: no odor
1: faint odor
2: weak odor
3: medium odor
4: strong odor

<<D: production and evaluation of oxygen-absorbing coated multilayer body >>

The following Examples were implemented with the use of the oxygen-absorbing coating agent compositions which were produced in the above, and oxygen-absorbing coated multilayer bodies were produced and evaluated.

[Example D1]

The oxygen-absorbing coating agent composition A10 was applied to the inorganic vapor deposited layer surface of the transparent vapor deposited PET film 1 and dried so that the dry coating amount became 5.0 g/$m^2$, and an oxygen-absorbing coat layer was formed.

Next, the heat sealing agent 1 was applied to the surface of the oxygen-absorbing coat layer by part coating (sealed portion) and dried, and thereby a sealant layer was formed; and an oxygen-absorbing coated multilayer body was obtained, and was subjected to various evaluations.

Layered configuration: transparent vapor deposited PET film 1 (base material layer: PET film (12 μm)/inorganic vapor deposited layer: transparent alumina)/oxygen-absorbing coat layer (5.0 g/$m^2$)/sealant layer (part coat, 6 μm)

[Examples D2 to D9, and Comparative Examples D1 and D2]

Oxygen-absorbing coated multilayer bodies were obtained by the same operation as in Example D1, except that the oxygen-absorbing coating agent composition A10 in Example D1 was changed to any of the oxygen-absorbing coating agent compositions A11 to A18, the oxygen-absorbing coating agent composition B3, and the general-purpose coating agent 1 according to the descriptions in Table 28, and were evaluated in the same way.

[Example D10]

An oxygen-absorbing coated multilayer body was obtained according to the same operations as in Example D1, except that the transparent vapor deposited PET film 1 for the base material layer and the oxygen barrier layer was changed to the barrier paper 1 and the oxygen-absorbing coating agent was stacked on the oxygen-barrier surface side, and was evaluated in the same way.
Layered configuration: barrier paper 1 (66 g/$m^2$, base paper/water-vapor barrier resin layer/oxygen barrier resin layer/protective resin layer)/oxygen-absorbing coat layer (5.0 g/$m^2$)/sealant layer (part coat, 6 μm)

[Example D11]

An oxygen-absorbing coated multilayer body was obtained according to the same operation as in Example D1, except that the sealant layer was not formed, and was evaluated in the same way.
Layered configuration: transparent vapor deposited PET film 1 (base material layer: PET film (12 μm)/inorganic vapor deposited layer: transparent alumina)/oxygen-absorbing coat layer (5.0 g/$m^2$).

[Comparative Example D3]

An oxygen-absorbing coated multilayer body was obtained according to the same operation as in Example D10, except that the oxygen-absorbing coating agent composition A10 was changed to the general-purpose coating agent 1, and was evaluated in the same way.

[Table 28]

| | | | | Unit | Example D | | | | | | | | | | | Comparative Example D | | |
|---|---|---|---|---|---|---|---|---|---|---|---|---|---|---|---|---|---|---|
| | | | | | 1 | 2 | 3 | 4 | 5 | 6 | 7 | 8 | 9 | 10 | 11 | 1 | 2 | 3 |
| Oxygen-absorbing coated multilayer body | Base material layer/oxygen barrier layer | Transparent vapor deposited PET film 1 (bottom surface vapor deposited layer) | | µm | 12 | 12 | 12 | 12 | 12 | 12 | 12 | 12 | 12 | | 12 | 12 | 12 | |
| | | Barrier paper 1 (bottom surface oxygen barrier layer side) | | g/m² | | | | | | | | | | 66 | | | | 66 |
| | Oxygen-absorbing coat layer | Oxygen-absorbing coating agent composition | A10 | g/m² | 5 | | | | | | | | | 5 | 5 | | | |
| | | | A11 | g/m² | | 5 | | | | | | | | | | | | |
| | | | A12 | g/m² | | | 5 | | | | | | | | | | | |
| | | | A13 | g/m² | | | | 5 | | | | | | | | | | |
| | | | A14 | g/m² | | | | | 5 | | | | | | | | | |
| | | | A15 | g/m² | | | | | | 5 | | | | | | | | |
| | | | A16 | g/m² | | | | | | | 5 | | | | | | | |
| | | | A17 | g/m² | | | | | | | | 5 | | | | | | |
| | | | A18 | g/m² | | | | | | | | | 5 | | | | | |
| | | | B3 | g/m² | | | | | | | | | | | | 5 | | |
| | | General-purpose coating agent 1 | | g/m² | | | | | | | | | | | | | 5 | 5 |
| | Sealant layer (part coat) | Heat sealing agent 1 | | µm | 6 | 6 | 6 | 6 | 6 | 6 | 6 | 6 | 6 | 6 | | 6 | 6 | 6 |
| Evaluation results | | Oxygen absorbed amount (1) | | cc/m² | 250 | 250 | 130 | 130 | 130 | 250 | 75 | 92 | 65 | 249 | 250 | 248 | 0 | 0 |
| | | Odor sensory evaluation | | - | 1 | 1 | 1 | 1 | 1 | 1 | 1 | 1 | 1 | 1 | 1 | 4 | 1 | 1 |
| | | Blocking resistance | | - | ○ | ○ | ○ | ○ | ○ | ○ | ○ | ○ | ○ | ○ | ○ | × | ○ | ○ |

<Summary of results>

The oxygen-absorbing coated multilayer bodies of all Examples have shown an excellent balance among the blocking resistance, the oxygen absorbed amount and the low odor generation.
On the other hand, the multilayer bodies of Comparative Examples have shown results inferior in any of the blocking resistance, the oxygen absorbed amount and the low odor generation.

<Evaluation method>

[Oxygen absorbed amount (1)]

An oxygen sensor chip (non-destructive oxygen sensor chip manufactured by PreSens Precision Sensing limited company), and the oxygen-absorbing coated multilayer body which was produced in the above were enclosed in the inside of a glass bottle having a 106 cc of inner volume.
Then, the oxygen concentration was measured immediately after the enclosing and after 14 days of storage in a thermostatic chamber at 25°C, and the oxygen absorbed amount of a test film was calculated. The oxygen concentration was measured with the use of a non-destructive oxygen concentration meter (FIBOX4 OXYGEN METER) manufactured by PreSens Precision Sensing limited company.

<Odor sensory evaluation>

After the oxygen absorbed amount has been measured, an odor of air inside the glass bottle was smelled and the odor was determined according to the following criteria. The odor was determined except an odor derived from the sealant layer.

Evaluation criteria:

0: no odor
1: faint odor
2: weak odor
3: medium odor
4: strong odor

[Blocking resistance]

Two sheets of the same oxygen-absorbing coated multilayer body were prepared, were overlapped so that different surfaces thereof face each other, and were left to stand at 40°C for 24 hours in such a state that a load of 115 N was applied thereto with the use of a permanent strain tester (constant load type) manufactured by Tester Sangyo Co., Ltd.; and it was checked whether the blocking was present or not between the two sheets of the oxygen-absorbing coated multilayer body.

Evaluation criteria:

Good: no blocking
Poor: blocking is present.

Reference Signs List

1 oxygen-absorbing multilayer body
2 oxygen barrier layer
3 oxygen-absorbing adhesive layer
4 sealant layer

4a sealant layer a (containing or not containing fossil fuel-derived polyolefin-based resin)
4b sealant layer b (containing or not containing plant-derived polyolefin-based resin)
4c sealant layer c (containing or not containing fossil fuel-derived polyolefin-based resin)
5 base material layer
6 printed layer
10 refilling pouch
11, 11' wall surface film
12 bottom film folded portion
13a, 13b cut out portion of bottom film
14 gusset portion
15 bottom sealed portion
16a, 16b side sealed portion
17 spout portion sealed portion
18 upper sealed portion
19a, 19b cut out portion
20 spout portion
21 half-cut line
22 notch
30 general-purpose pouch, and pouch for retort
31a, 31b wall surface film
32 sealed portion
33a, 33b notch
40 pouch for microwave oven
41a, 41b wall surface film
42 heat-sealed portion
43 gusset portion at the bottom
44 opening
45 notch for opening
46 steam mechanism
46a portion which is not heat-sealed yet
46b isolating heat-sealed portion
50 pouch for liquid packet
51a, 51b wall surface film
52 heat-sealed portion
60 pouch for bag-in-box
61 tape
62 inner bag
63 pouring member
64 outer box
65 lid part
66 bottom
67 body portion
70 pouch for infusion solution bag
71a, 71b wall surface film
72 heat-sealed portion
73 hanging hole
74 infusion solution outlet
75 reinforcing portion
80 pouch for stick packaging
81a, 81b wall surface film
82a upper heat-sealed portion
82b lower heat-sealed portion
82c central heat-sealed portion
90 pouch with spout
91a, 91b wall surface film

92 spout
93 cylindrical portion
94 flange portion
95 attachment portion
96 heat-sealed portion
97 cap
100 exterior pouch for electronic parts
101a, 101b wall surface film
102 heat-sealed portion
103 inlet/outlet of contents
104 enclosing heat-sealed portion
C1 oxygen-absorbing multilayer body for lid part, and oxygen-absorbing packaging material for lid part
C2 base material layer
C3 oxygen barrier layer
C4 oxygen-absorbing adhesive layer
C5 sealant layer
C6 printed layer
C7 general-purpose adhesive layer
C8 reinforcing layer
C10 oxygen-absorbing packaging container
Cll bottom part
C12 contents-accommodating concave portion
C13 flange portion
C14 oxygen-absorbing lid part
D1: oxygen-absorbing coated multilayer body, and oxygen-absorbing coated packaging material
D2: base material layer
D2a: barrier paper
D2b: paper substrate layer
D3: oxygen barrier layer
D3a: water-vapor barrier resin layer
D3b: oxygen barrier resin layer
D4: oxygen-absorbing coat layer
D5: sealant layer

## Claims

1. An oxygen-absorbing multilayer body comprising a layered configuration in which at least an oxygen barrier layer, an oxygen-absorbing adhesive layer, and a sealant layer are stacked in this order, wherein

   the oxygen-absorbing adhesive layer is a layer formed from an oxygen-absorbing adhesive composition,
   the oxygen-absorbing adhesive composition contains at least an oxygen-absorbing compound and an oxidation promoting catalyst,
   the oxygen-absorbing compound has one or two or more unsaturated five-membered rings,
   any bond between the five carbon atoms constituting the unsaturated five-membered ring is a carbon-carbon double bond,
   a monovalent and/or divalent or higher electron donating organic group 1 is bonded to the unsaturated five-membered ring,
   when there is one unsaturated five-membered ring, the five-membered ring or the organic group 1 has a functional group having active hydrogen or a group in which active hydrogen of the functional group having active hydrogen is replaced with a monovalent organic group 2, and
   when there are two or more unsaturated five-membered rings, the unsaturated five-membered rings are bonded to each other via a divalent or higher organic group 2 that replaces active hydrogen of an active hydrogen group on each of the five-membered rings or the organic group 1.

2. The oxygen-absorbing multilayer body according to claim 1, wherein a structure of the unsaturated five-membered ring or a structure composed of the unsaturated five-membered ring and the organic group 1 is derived from one or two or more selected from the group consisting of cyclopentadiene, dicyclopentadiene, norbornene, and derivatives

thereof.

3. The oxygen-absorbing multilayer body according to claim 1 or 2, wherein the organic group 2 includes a structural part derived from an isocyanate-based compound or an isocyanate-based compound and a hydroxyl group-containing compound.

4. The oxygen-absorbing multilayer body according to claim 3, wherein the isocyanate-based compound is one or two or more selected from the group consisting of Xylylene diisocyanate, hexamethylene diisocyanate, isophorone diisocyanate, Toluylene diisocyanate, diphenylmethane diisocyanate, and derivatives thereof.

5. The oxygen-absorbing multilayer body according to claim 3 or 4, wherein the hydroxyl group-containing compound is one or two or more selected from the group consisting of polyhydric alcohols, polyolefin polyols, polyether polyols, polyester polyols, polycarbonate polyols, poly(meth)acrylic acid ester polyols, phenoxy resins, and urethane chain-extended polyols thereof.

6. The oxygen-absorbing multilayer body according to any one of claims 1 to 5, wherein the organic group 2 has no crosslinkable functional group.

7. The oxygen-absorbing multilayer body according to any one of claims 1 to 5, wherein

the organic group 2 has one or two or more crosslinkable functional groups, and
the crosslinkable functional group is a hydroxyl group and/or an isocyanate group.

8. The oxygen-absorbing multilayer body according to any one of claims 1 to 5, wherein the oxygen-absorbing compound contains one or two or more selected from the group consisting of compounds represented by the following formulas (1) to (4);

[Chemical Formula 1]

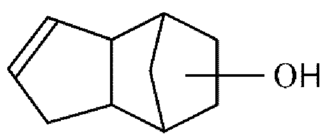

(1)

[Chemical Formula 2]

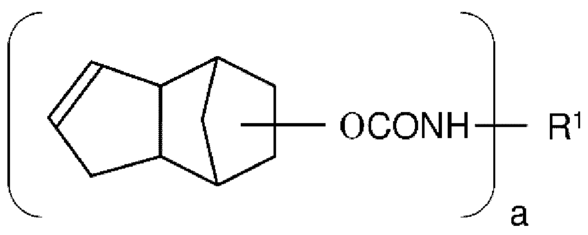

(2)

[Chemical Formula 3]

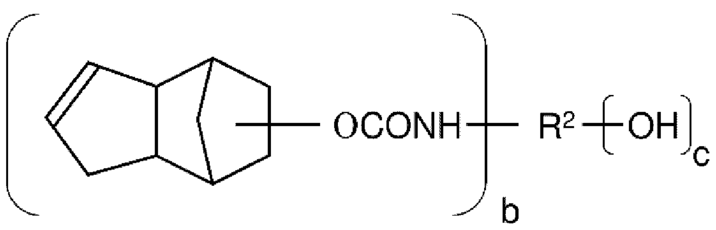

(3)

[Chemical Formula 4]

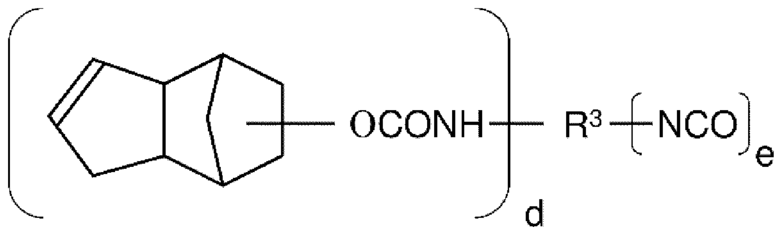

(4)

wherein a to e each represent a number of 1 or more, and each of $R^1$, $R^2$, and $R^3$ represents an organic group having 1 or more carbon atoms, includes at least an alkylene and/or phenylene structure, and optionally further includes a structure derived from one or two or more selected from the group consisting of polyhydric alcohols, polyolefin polyols, polyether polyols, polyester polyols, polycarbonate polyols, poly(meth)acrylic acid ester polyols, phenoxy resins, and urethane chain-extended polyols thereof.

**9.** The oxygen-absorbing multilayer body according to any one of claims 1 to 5, wherein the oxygen-absorbing compound contains a compound represented by the following formula (5) :

[Chemical Formula 5]

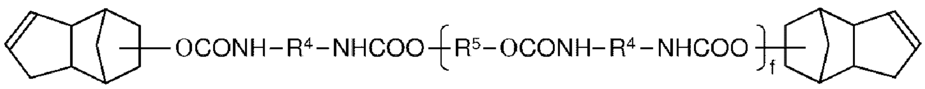

(5)

wherein f represents a number of 0 or more, and each of $R^4$ and $R^5$ represents an organic group having 1 or more carbon atoms, represents an organic group including at least an alkylene and/or phenylene structure, and optionally further includes a structure derived from one or two or more selected from the group consisting of polyhydric alcohols, polyolefin polyols, polyether polyols, polyester polyols, polycarbonate polyols, poly(meth)acrylic acid ester polyols, phenoxy resins, and urethane chain-extended polyols thereof.

**10.** The oxygen-absorbing multilayer body according to any one of claims 1 to 9, wherein the oxidation promoting catalyst is a peroxide or a compound including a cation composed of a transition metal.

**11.** The oxygen-absorbing multilayer body according to any one of claims 1 to 10, wherein the compound including a cation composed of a transition metal is a metal soap composed of: a transition metal compound capable of releasing a cation or complex composed of a transition metal; and an anion or ligand composed of a fatty acid.

**12.** The oxygen-absorbing multilayer body according to any one of claims 1 to 11, wherein

the oxygen-absorbing adhesive composition further contains a modifier, and
the modifier contains an isocyanate-based compound and/or a hydroxyl group-containing compound.

**13.** The oxygen-absorbing multilayer body according to claim 12, wherein the isocyanate-based compound is one or two or more selected from the group consisting of Xylylene diisocyanate, hexamethylene diisocyanate, isophorone diisocyanate, Toluylene diisocyanate, diphenylmethane diisocyanate, and derivatives thereof.

**14.** The oxygen-absorbing multilayer body according to claim 12 or 13, wherein the hydroxyl group-containing compound includes one or two or more selected from the group consisting of polyester polyols, poly(meth)acrylic acid ester polyols, polyalkylene ether diols, and urethane chain-extended polyols thereof.

**15.** The oxygen-absorbing multilayer body according to any one of claims 1 to 14, further comprising a base material layer, and comprising a layered configuration in which the base material layer, the oxygen barrier layer, the oxygen-absorbing adhesive layer, and the sealant layer are stacked in this order.

**16.** The oxygen-absorbing multilayer body according to any one of claims 1 to 15, wherein the sealant layer contains a plant-derived polyolefin-based resin.

**17.** The oxygen-absorbing multilayer body according to claim 15 or 16, wherein the base material layer contains a plant-derived polyester-based resin.

**18.** The oxygen-absorbing multilayer body according to claim 16 or 17, comprising a biomass ratio of 10% or more and 50% or less.

**19.** An oxygen-absorbing packaging material produced with the oxygen-absorbing multilayer body according to any one of claims 1 to 18.

**20.** An oxygen-absorbing pouch produced with the oxygen-absorbing packaging material according to claim 19.

**21.** An oxygen-absorbing multilayer body for a lid part, comprising the oxygen-absorbing multilayer body according to claim 15, the oxygen-absorbing multilayer body being used as a lid part for a packaging container.

**22.** An oxygen-absorbing packaging material for a lid part of a packaging container, which is produced with the oxygen-absorbing multilayer body for a lid part according to claim 21.

**23.** An oxygen-absorbing lid part of a packaging container, which is produced with the oxygen-absorbing packaging material for a lid part of a packaging container according to claim 22.

**24.** An oxygen-absorbing packaging container produced with the oxygen-absorbing lid part of a packaging container according to claim 23,
wherein the oxygen barrier layer is a layer positioned outside the oxygen-absorbing adhesive layer.

**25.** An oxygen-absorbing coated multilayer body comprising at least a base material layer, an oxygen barrier layer, and an oxygen-absorbing coat layer, wherein

the oxygen barrier layer includes one or two or more selected from the group consisting of a metal foil, a resin film with an inorganic vapor deposited layer, a resin coating film or resin film composed of an oxygen barrier resin, and a barrier paper,
the barrier paper has a layered configuration including at least a base paper and an oxygen barrier resin layer, and is stacked such that the oxygen barrier resin layer is positioned on a side of the oxygen-absorbing coat layer,
the oxygen-absorbing coat layer is a layer formed from an oxygen-absorbing coating agent composition,
the oxygen-absorbing coating agent composition contains at least an oxygen-absorbing compound and an oxidation promoting catalyst,
the oxygen-absorbing compound is the oxygen-absorbing compound according to any one of claims 1 to 9, and the oxidation promoting catalyst is the oxidation promoting catalyst according to claim 10 or 11.

**26.** The oxygen-absorbing coated multilayer body according to claim 25, wherein

the oxygen-absorbing coating agent composition further contains a modifier, and
the modifier contains an isocyanate-based compound and/or a hydroxyl group-containing compound.

**27.** The oxygen-absorbing coated multilayer body according to claim 26, wherein the isocyanate-based compound is one or two or more selected from the group consisting of Xylylene diisocyanate, hexamethylene diisocyanate, isophorone diisocyanate, Toluylene diisocyanate, diphenylmethane diisocyanate, and derivatives thereof.

**28.** The oxygen-absorbing coated multilayer body according to claim 26 or 27, wherein the hydroxyl group-containing compound includes one or two or more selected from the group consisting of polyester polyols, poly(meth)acrylic acid ester polyols, polyalkylene ether diols, and urethane chain-extended polyols thereof, vinyl chloride-vinyl acetate copolymers, cellulose acetate-based resins, styrene-maleic acid ester-based copolymers, polyamide-based resins, and polyimide-based resins.

**29.** An oxygen-absorbing coated packaging material produced with the oxygen-absorbing coated multilayer body according to any one of claims 25 to 28.

**30.** An oxygen-absorbing coated package produced with the oxygen-absorbing coated packaging material according to claim 29,
wherein the oxygen barrier layer is a layer positioned outside the oxygen-absorbing coat layer.

[Fig. 1]

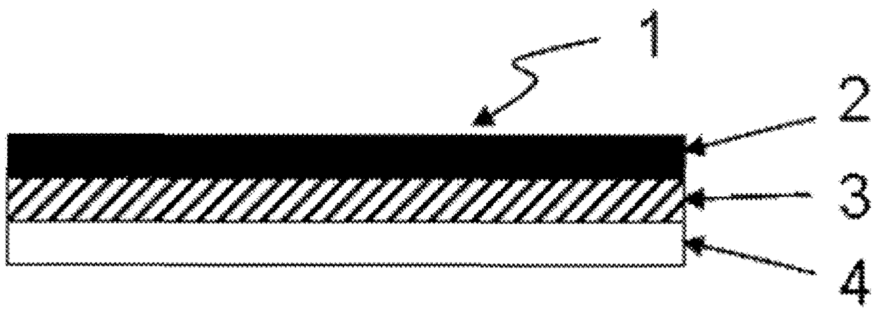


[Fig. 2]

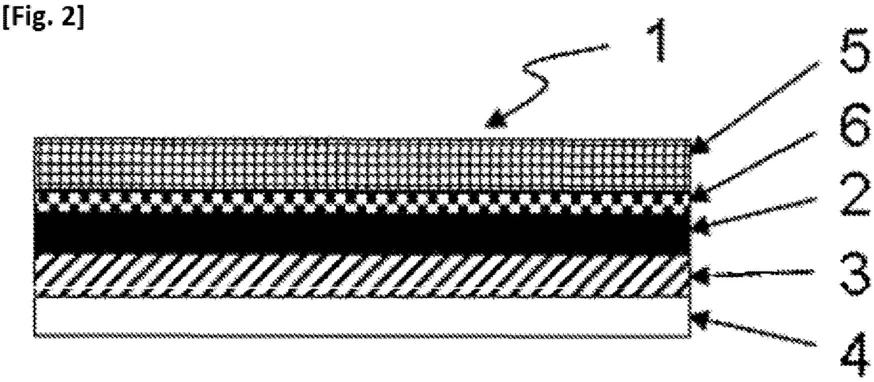


[Fig. 3]

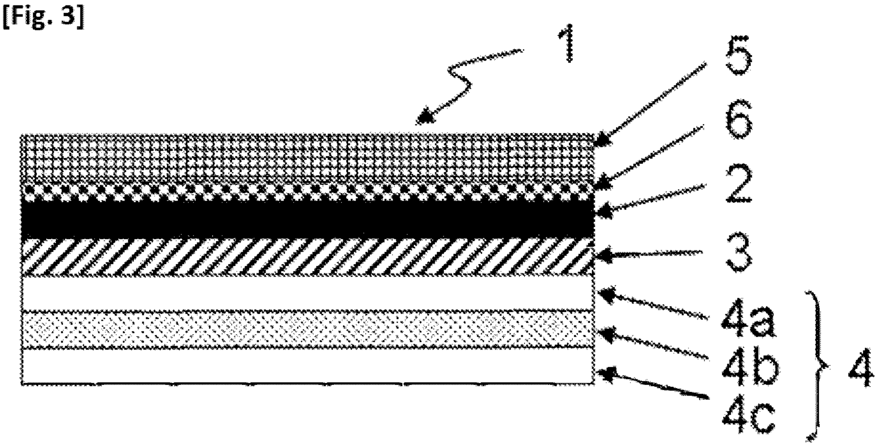

Fig. 4

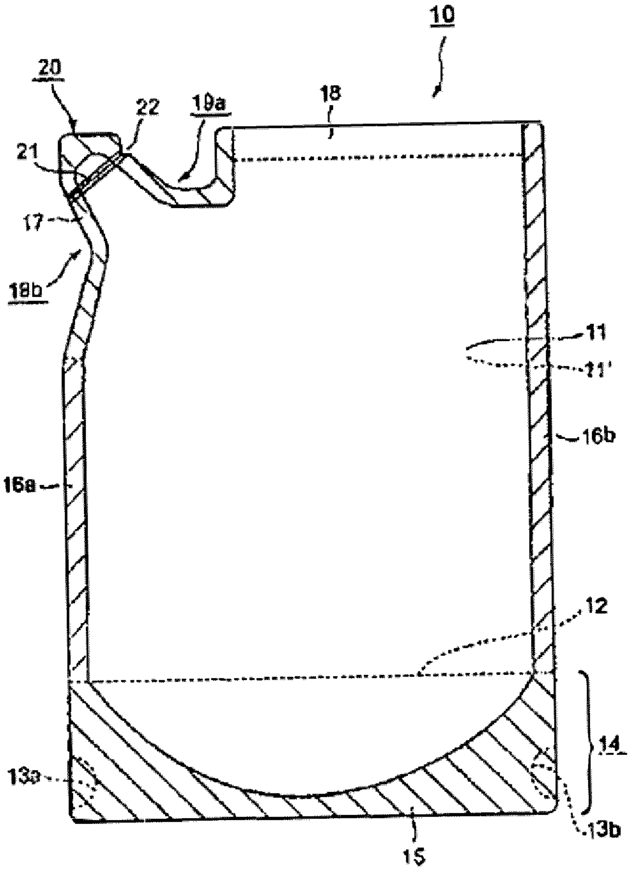
10
20
22
19a
18
21
17
19b
11
11'
16b
16a
12
14
13a
13b
15

[Fig. 5]

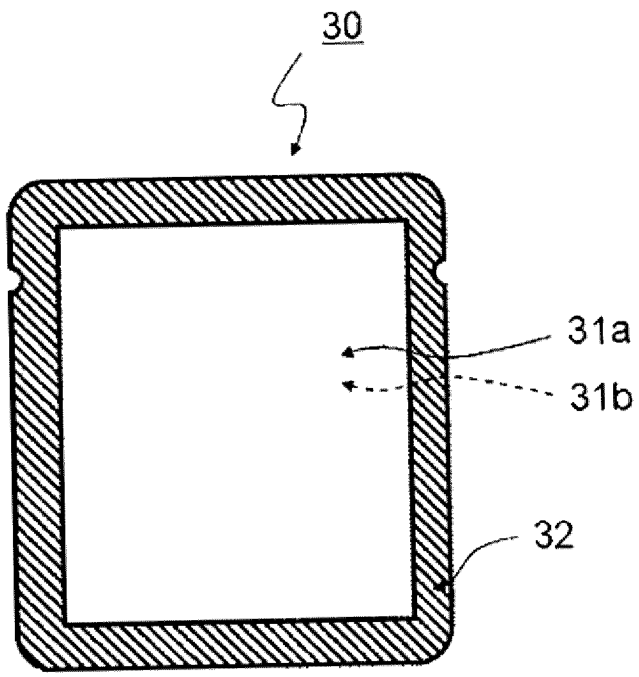
30
31a
31b
32

[Fig. 6]

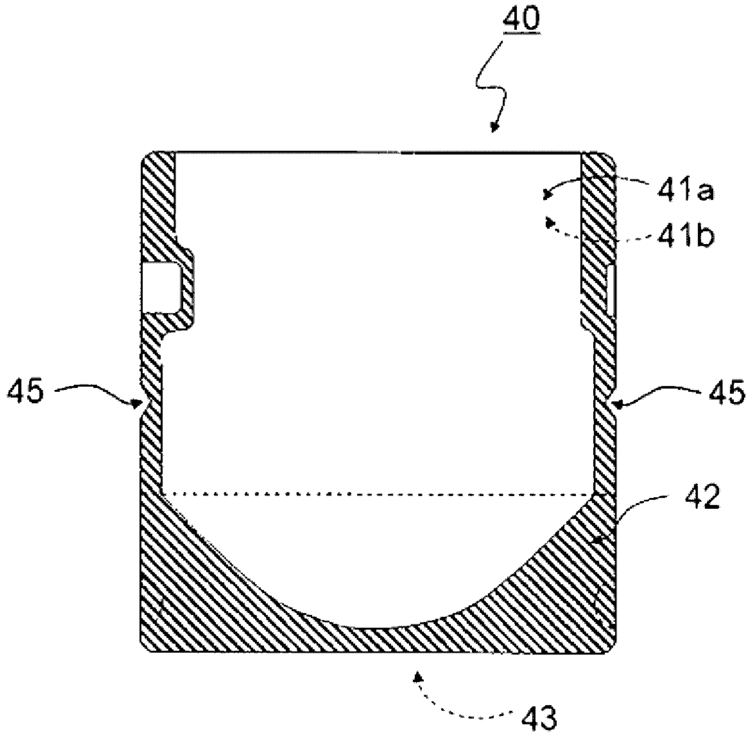


[Fig. 7]

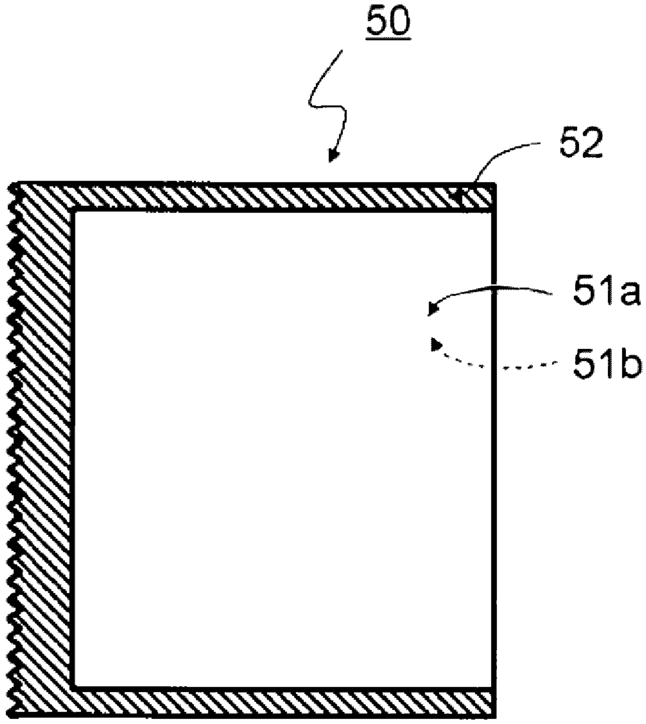

[Fig. 8]

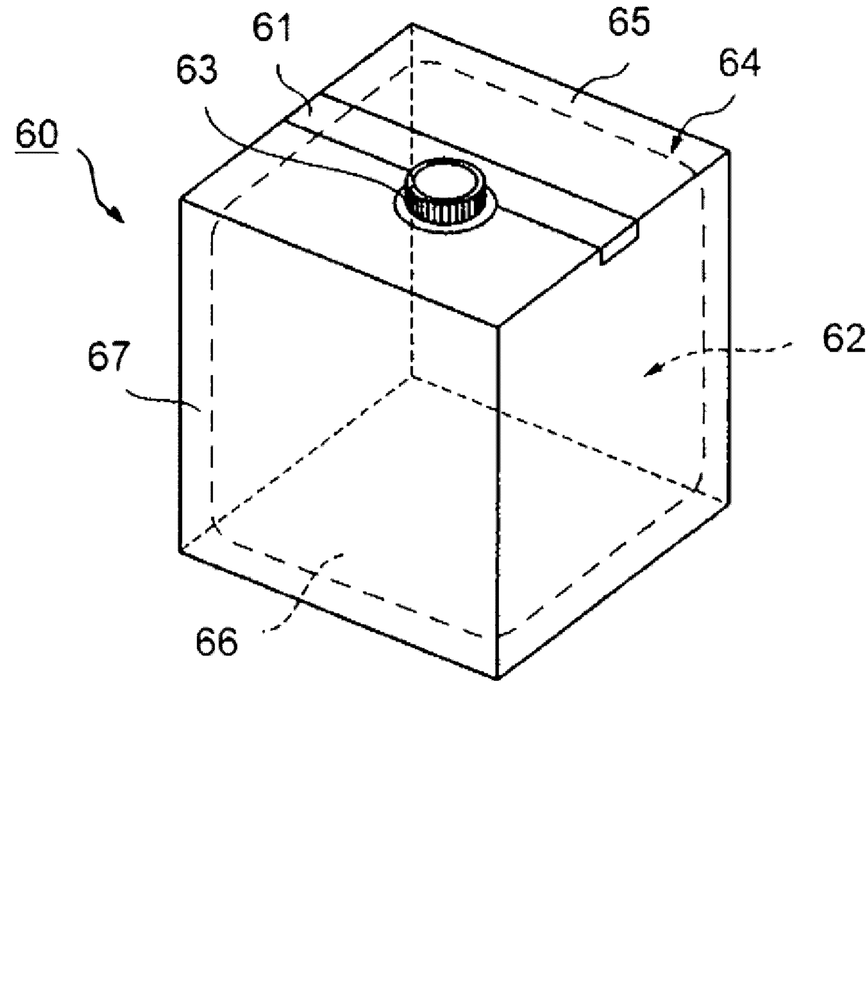

[Fig. 9]

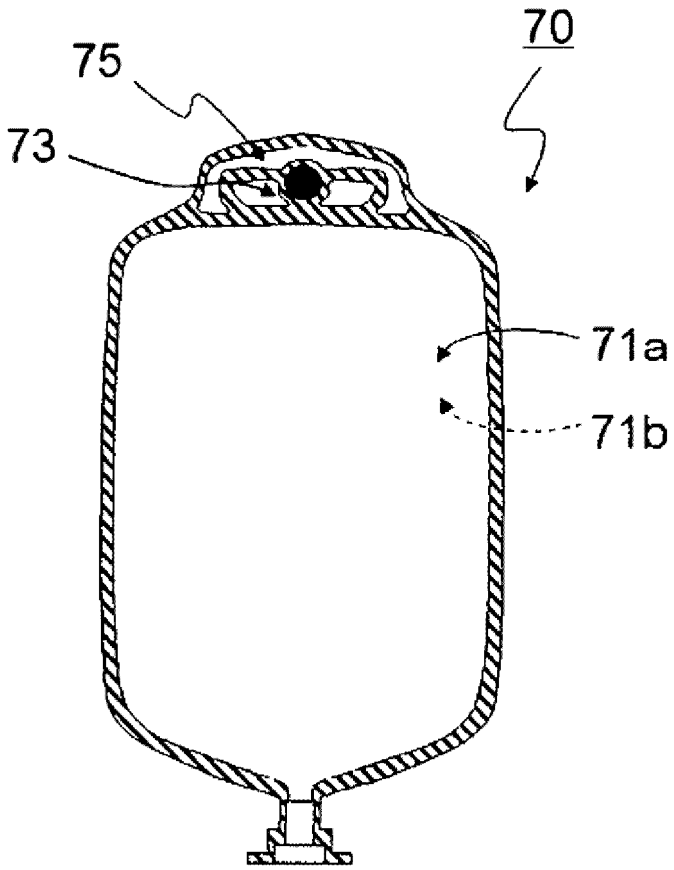

[Fig. 10]

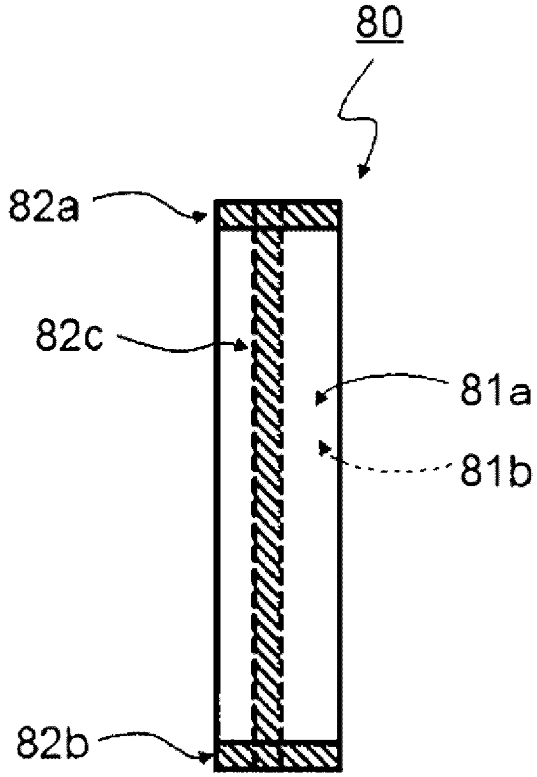

[Fig. 11]

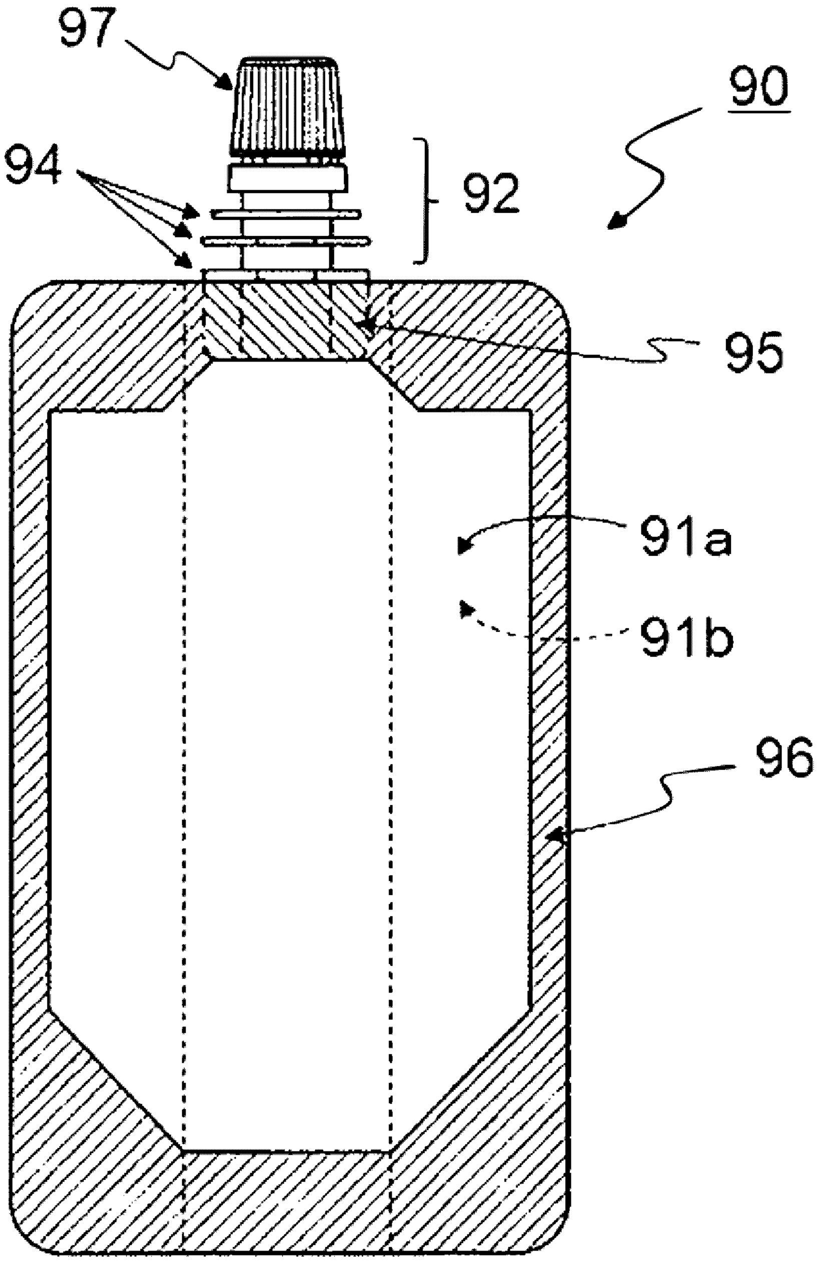

[Fig. 12]

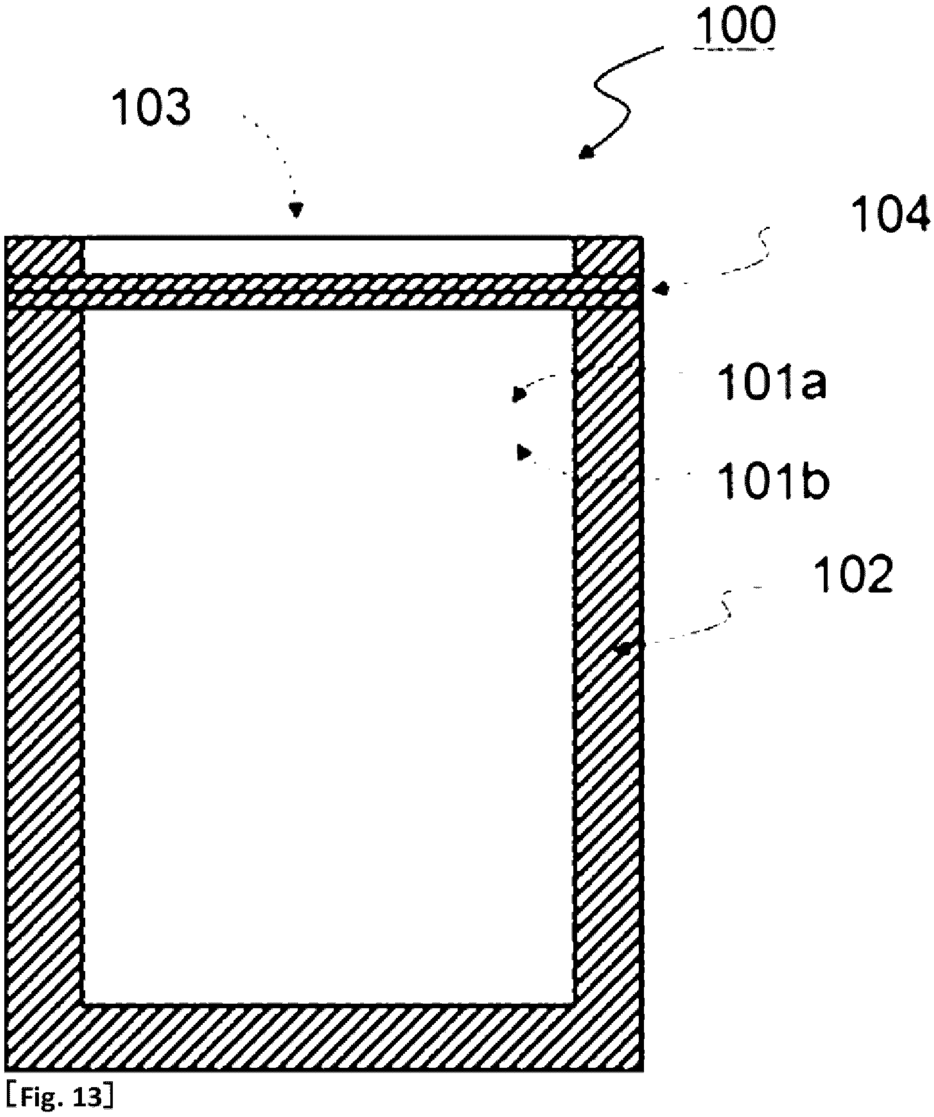


[Fig. 13]

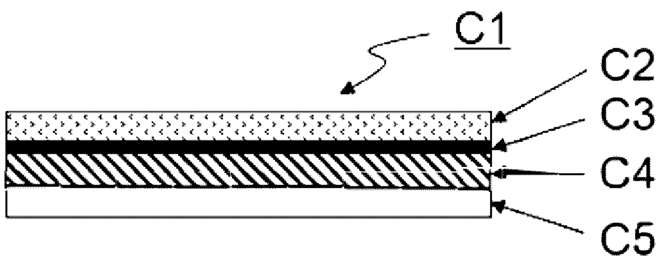

[Fig. 14]

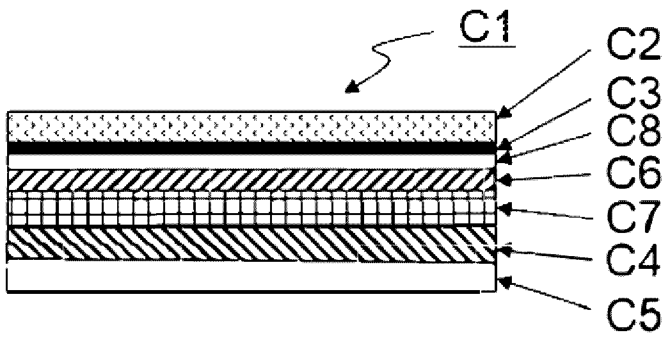


[Fig. 15]

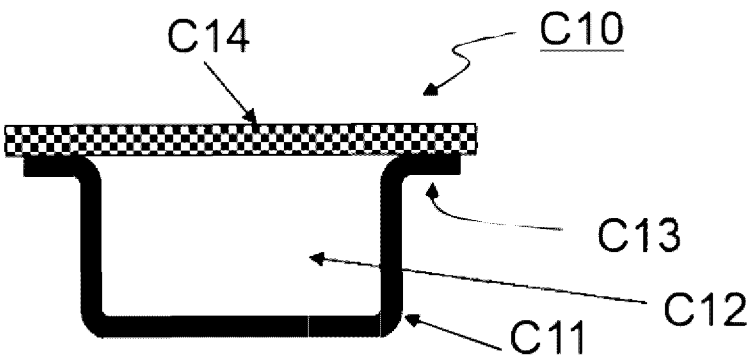


[Fig. 16]

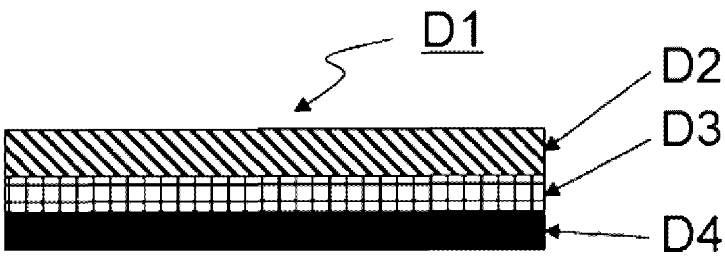


[Fig. 17]

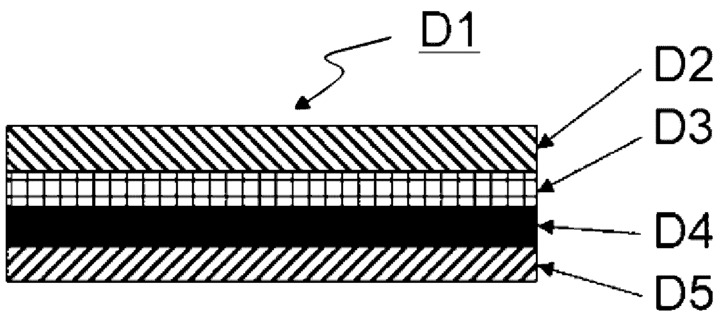

[Fig. 18]

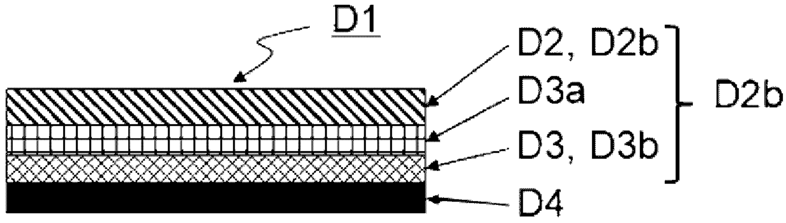


[Fig. 19]

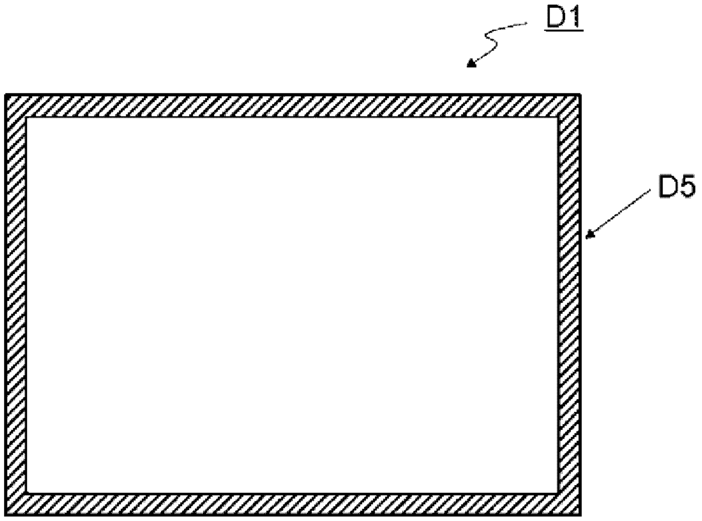

## INTERNATIONAL SEARCH REPORT

International application No. **PCT/JP2022/000156**

**A. CLASSIFICATION OF SUBJECT MATTER**

***B32B 27/00***(2006.01)i; ***B32B 27/18***(2006.01)i; ***B65D 65/40***(2006.01)i
FI: B32B27/18 G; B32B27/00 H; B65D65/40 D

According to International Patent Classification (IPC) or to both national classification and IPC

**B. FIELDS SEARCHED**

Minimum documentation searched (classification system followed by classification symbols)

B32B1/00-43/00; B65D65/40

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2015-009196 A (TOYO SEIKAN GROUP HOLDINGS, LTD.) 19 January 2015 (2015-01-19) claims, paragraphs [0031], [0042], [0047], [0049], [0052]-[0053] | 1-7, 10-15, 19-30 |
| Y | | 16-18 |
| A | | 8-9 |
| Y | JP 2020-040321 A (DAINIPPON PRINTING CO., LTD.) 19 March 2020 (2020-03-19) claims 1, 3-4, paragraph [0039] | 16-18 |
| A | JP 2020-040319 A (DAINIPPON PRINTING CO., LTD.) 19 March 2020 (2020-03-19) entire text, all drawings | 1-30 |
| A | JP 2021-151893 A (TOYO SEIKAN GROUP HOLDINGS, LTD.) 30 September 2021 (2021-09-30) entire text, all drawings | 1-30 |
| E, X | JP 2022-022769 A (DAINIPPON PRINTING CO., LTD.) 07 February 2022 (2022-02-07) claims 1-15, 17 | 1-15, 19 |
| E, A | | 16-18, 20-30 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **09 March 2022** | **22 March 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/000156**

| Patent document cited in search report | Publication date (day/month/year) | Patent family member(s) | Publication date (day/month/year) |
|---|---|---|---|
| JP 2015-009196 A | 19 January 2015 | (Family: none) | |
| JP 2020-040321 A | 19 March 2020 | (Family: none) | |
| JP 2020-040319 A | 19 March 2020 | (Family: none) | |
| JP 2021-151893 A | 30 September 2021 | (Family: none) | |
| JP 2022-022769 A | 07 February 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 5873770 B
- JP 5671816 B
- JP 6505699 B
- JP 2009184138 A
- JP 2003094574 A
- JP 5331265 B
- JP 2005162213 A